# EUROPEAN PATENT APPLICATION

(11) **EP 4 787 315 A1**
(43) Date of publication of application: **05.08.2026**
(21) Application number: 24872133.4
(22) Date of filing: 24.09.2024
(51) Int. Cl.: G06T 9/00

(54) **ENCODING DEVICE, DECODING DEVICE, ENCODING METHOD, AND DECODING METHOD**

(30) Priority: 26.09.2023 US 202363540446 P
(71) Applicant: Panasonic Intellectual Property Corporation of America, Torrance, CA 90504 (US)
(72) Inventor: IGUCHI, Noritaka, Kadoma-shi, Osaka 571-0057 (JP); SUGIO, Toshiyasu, Kadoma-shi, Osaka 571-0057 (JP); NISHI, Takahiro, Kadoma-shi, Osaka 571-0057 (JP); LIM, Chong Soon, Singapore 469332 (SG); WU, Zheng, Singapore 469332 (SG); TEO, Han Boon, Singapore 469332 (SG); LOI, Keng Liang, Singapore 469332 (SG); DUMANOV, Farman, Singapore 469332 (SG); YADAV, Praveen Kumar, Singapore 469332 (SG)
(74) Representative: Grünecker Patent- und Rechtsanwälte PartG mbB
(86) International application number: PCT/JP2024/033821
(87) International publication number: WO 2025/070342

(57) **Abstract**

An encoding device according to one aspect of the present disclosure includes: a circuit; and memory connected to the circuit. In operation, the circuit: determines whether a total number of vertices on a boundary edge, which is an edge shared between a first submesh in a three-dimensional mesh and a second submesh in the three-dimensional mesh, is equal between a first mesh formed by iterating subdivision of the first submesh a first number of times and a second mesh formed by iterating subdivision of the second submesh a second number of times (S601); and encodes, into a bitstream, combination information regarding a process of combining the first mesh and the second mesh, based on a determination result of the determining (S602).

## Description

### [Technical Field]

The present disclosure relates to, for example, an encoding device.

### [Background Art]

Patent Literature (PTL) 1 proposes a method and a device for encoding and decoding three-dimensional mesh data.

### [Citation List]

### [Patent Literature]

[PTL 1] Japanese Unexamined Patent Application Publication No. 2006-187015

### [Summary of Invention]

### [Technical Problem]

There are demands for further improvement in processing of encoding or decoding three-dimensional data. An object of the present disclosure is to improve processing of encoding or decoding three-dimensional data.

### [Solution to Problem]

An encoding device according to one aspect of the present disclosure includes a circuit and memory connected to the circuit. In operation, the circuit: determines whether a total number of vertices on a boundary edge, which is an edge shared between a first submesh in a three-dimensional mesh and a second submesh in the three-dimensional mesh, is equal between a first mesh formed by iterating subdivision of the first submesh a first number of times and a second mesh formed by iterating subdivision of the second submesh a second number of times; and encodes, into a bitstream, combination information regarding a process of combining the first mesh and the second mesh, based on a determination result of the determining.

Noted that these general or specific aspects may be implemented using a system, a device, a method, an integrated circuit, a computer program, or a non-transitory computer-readable recording medium such as a CD-ROM, or any combination of systems, devices, methods, integrated circuits, computer programs, and recording media.

### [Advantageous Effects of Invention]

The present disclosure can contribute toward improving processing of encoding three-dimensional data and the like.

### [Brief Description of Drawings]

[FIG. 1]

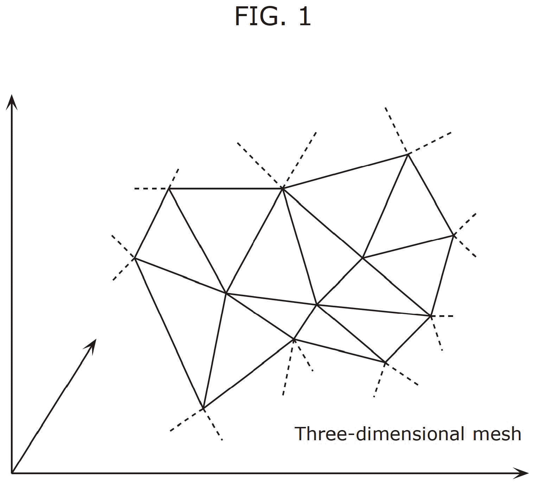

   FIG. 1 is a conceptual diagram illustrating a three-dimensional mesh according to an embodiment.
[FIG. 2]

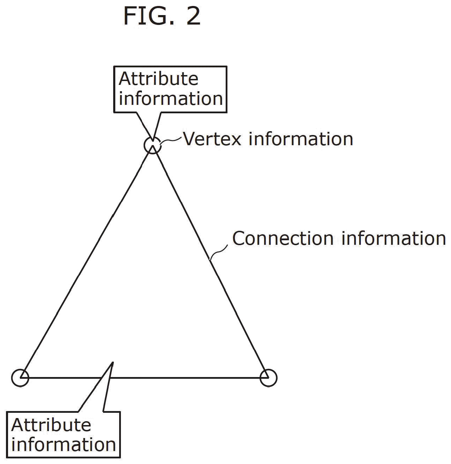

   FIG. 2 is a conceptual diagram illustrating basic elements of the three-dimensional mesh according to the embodiment.
[FIG. 3]

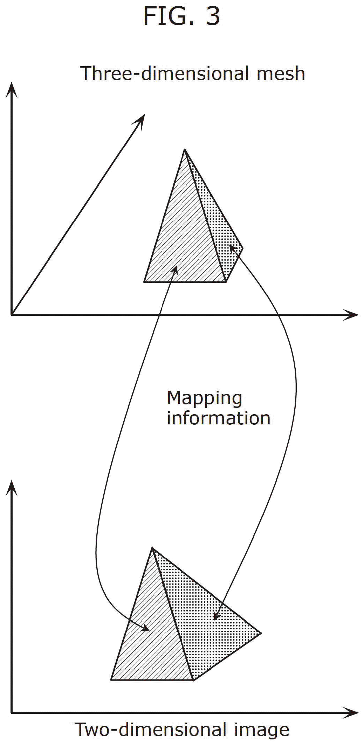

   FIG. 3 is a conceptual diagram illustrating mapping according to the embodiment.
[FIG. 4]

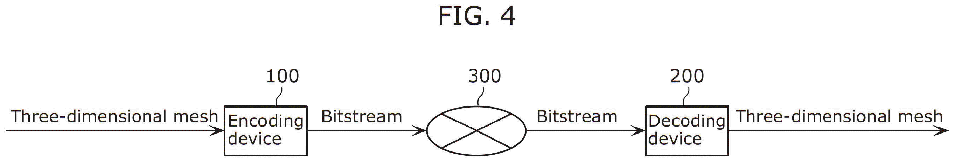

   FIG. 4 is a block diagram illustrating a configuration example of an encoding/decoding system according to the embodiment.
[FIG. 5]

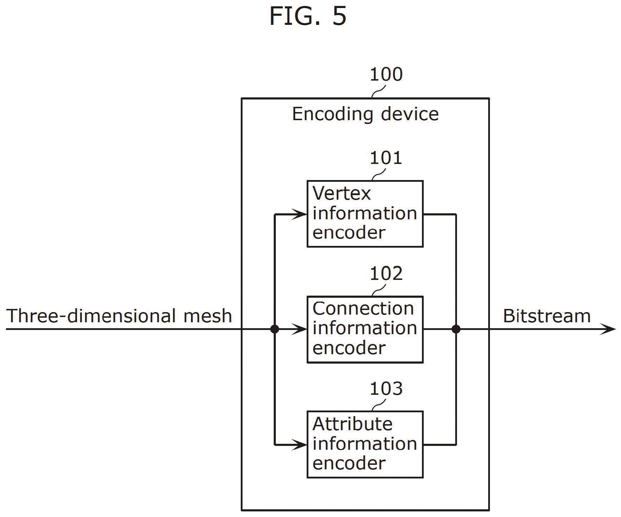

   FIG. 5 is a block diagram illustrating a configuration example of an encoding device according to the embodiment.
[FIG. 6]

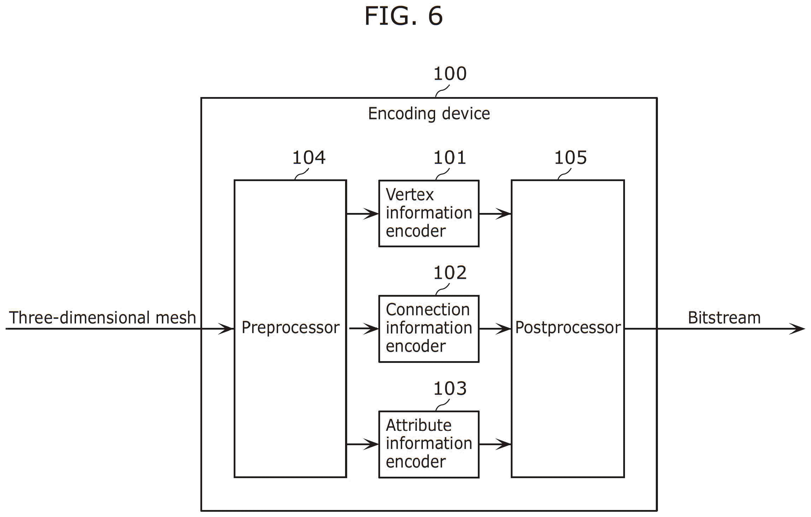

   FIG. 6 is a block diagram illustrating another configuration example of the encoding device according to the embodiment.
[FIG. 7]

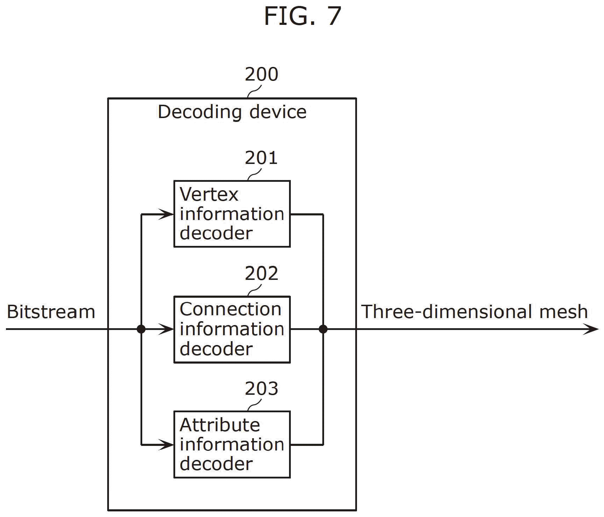

   FIG. 7 is a block diagram illustrating a configuration example of a decoding device according to the embodiment.
[FIG. 8]

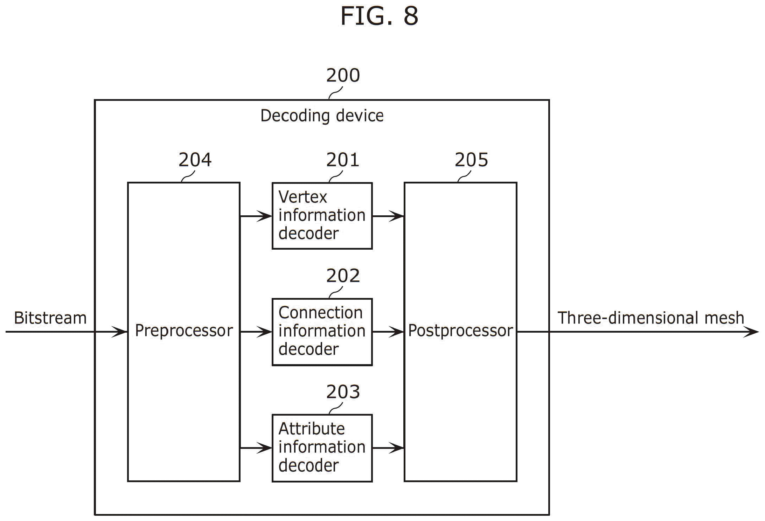

   FIG. 8 is a block diagram illustrating another configuration example of the decoding device according to the embodiment.
[FIG. 9]

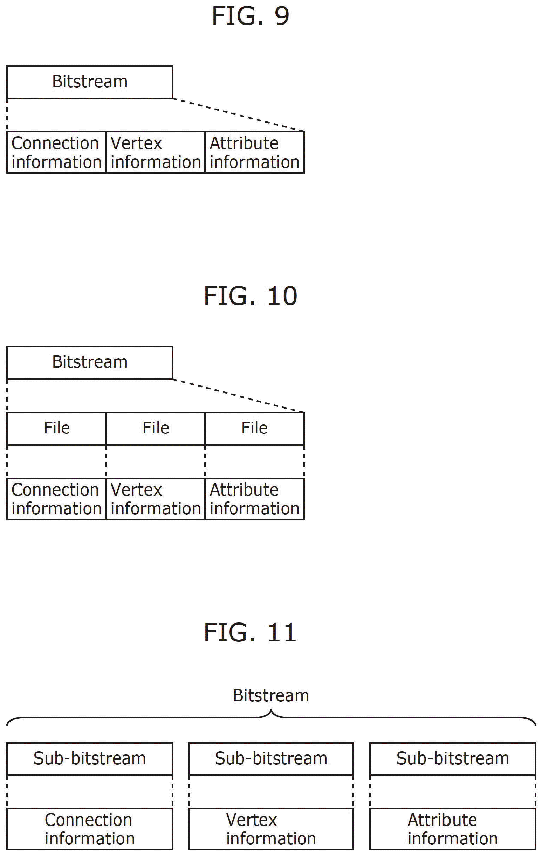

   FIG. 9 is a conceptual diagram illustrating a configuration example of a bitstream according to the embodiment.
[FIG. 10]
   FIG. 10 is a conceptual diagram illustrating another configuration example of the bitstream according to the embodiment.
[FIG. 11]
   FIG. 11 is a conceptual diagram illustrating yet another configuration example of the bitstream according to the embodiment.
[FIG. 12]

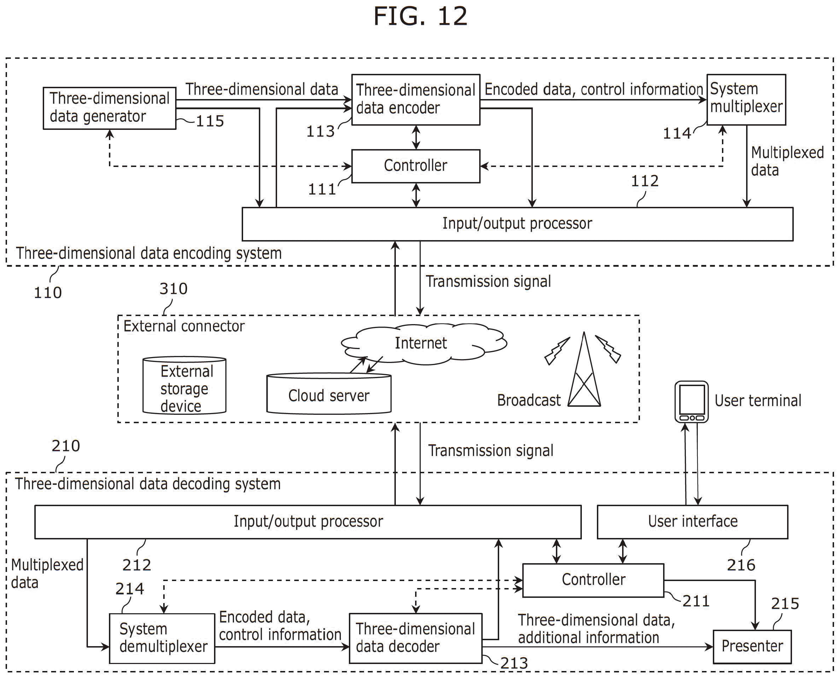

   FIG. 12 is a block diagram illustrating a specific example of the encoding/decoding system according to the embodiment.
[FIG. 13]

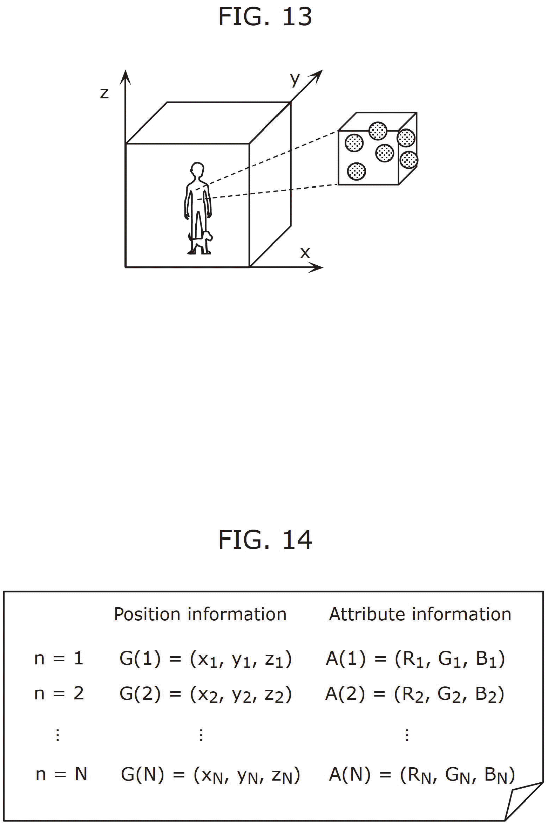

   FIG. 13 is a conceptual diagram illustrating a configuration example of point cloud data according to the embodiment.
[FIG. 14]
   FIG. 14 is a conceptual diagram illustrating a data file example of the point cloud data according to the embodiment.
[FIG. 15]

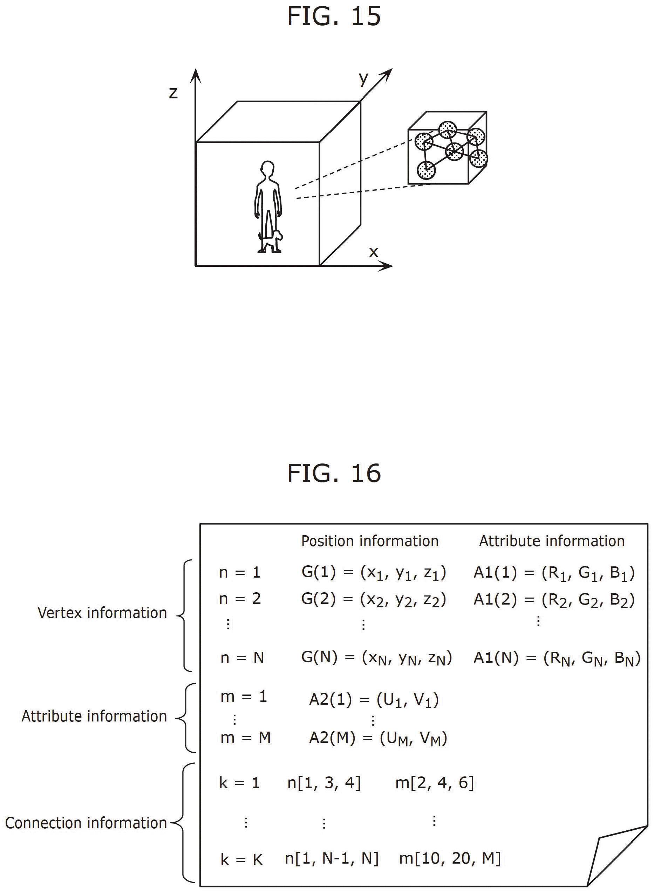

   FIG. 15 is a conceptual diagram illustrating a configuration example of mesh data according to the embodiment.
[FIG. 16]
   FIG. 16 is a conceptual diagram illustrating a data file example of the mesh data according to the embodiment.
[FIG. 17]

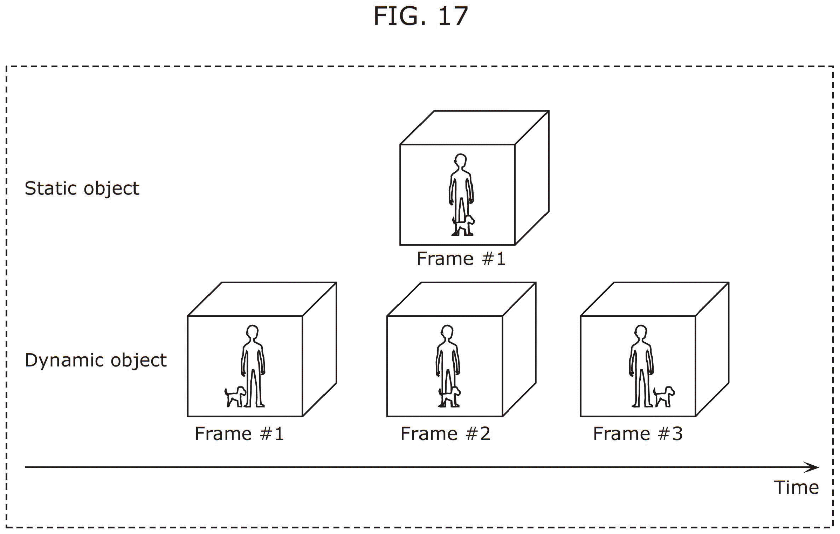

   FIG. 17 is a conceptual diagram illustrating a type of three-dimensional data according to the embodiment.
[FIG. 18]

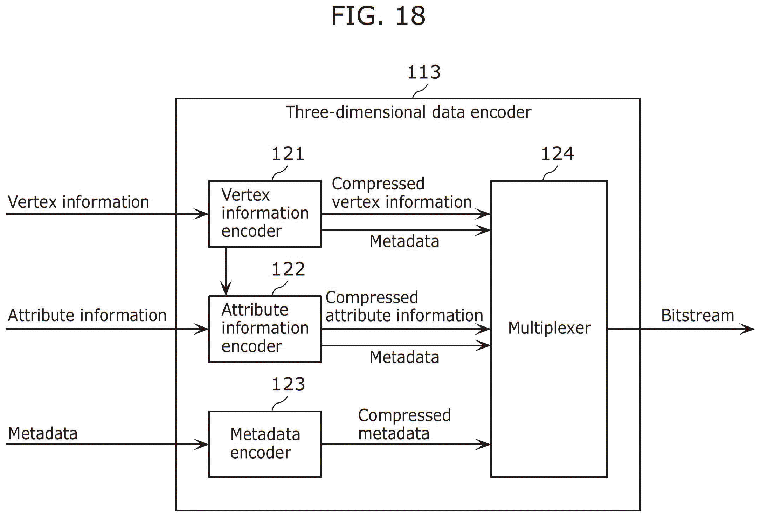

   FIG. 18 is a block diagram illustrating a configuration example of a three-dimensional data encoder according to the embodiment.
[FIG. 19]

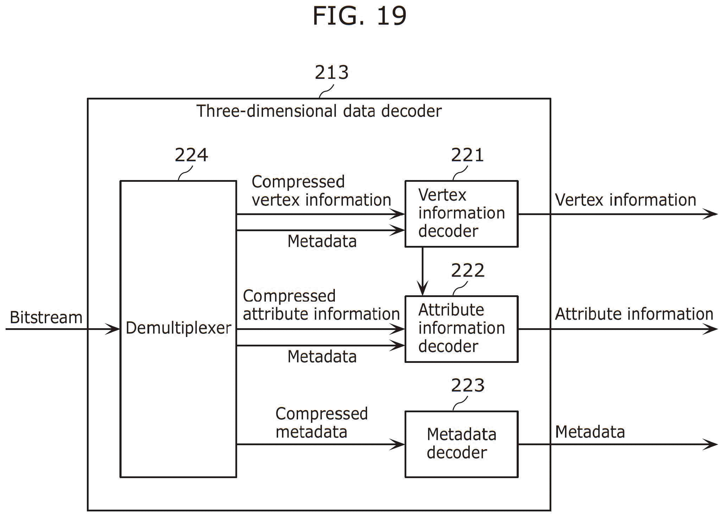

   FIG. 19 is a block diagram illustrating a configuration example of a three-dimensional data decoder according to the embodiment.
[FIG. 20]

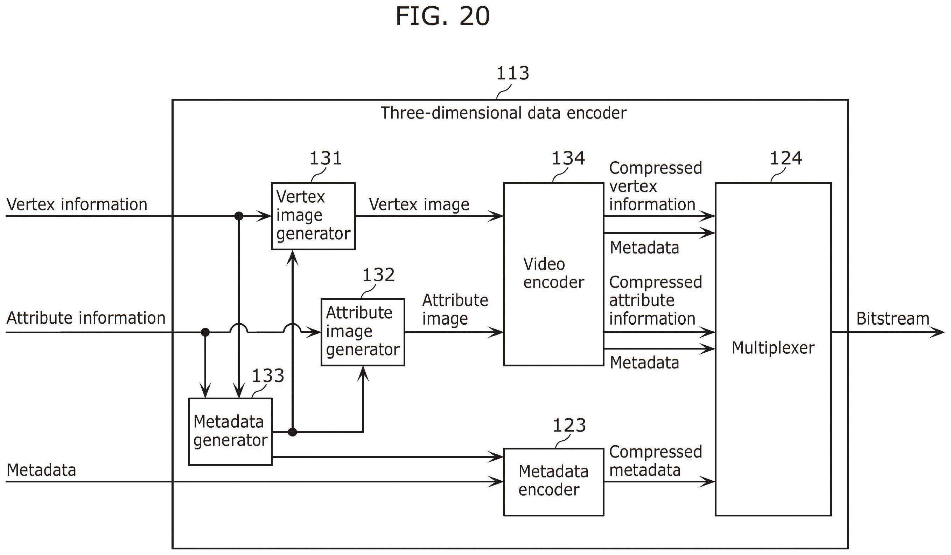

   FIG. 20 is a block diagram illustrating another configuration example of the three-dimensional data encoder according to the embodiment.
[FIG. 21]

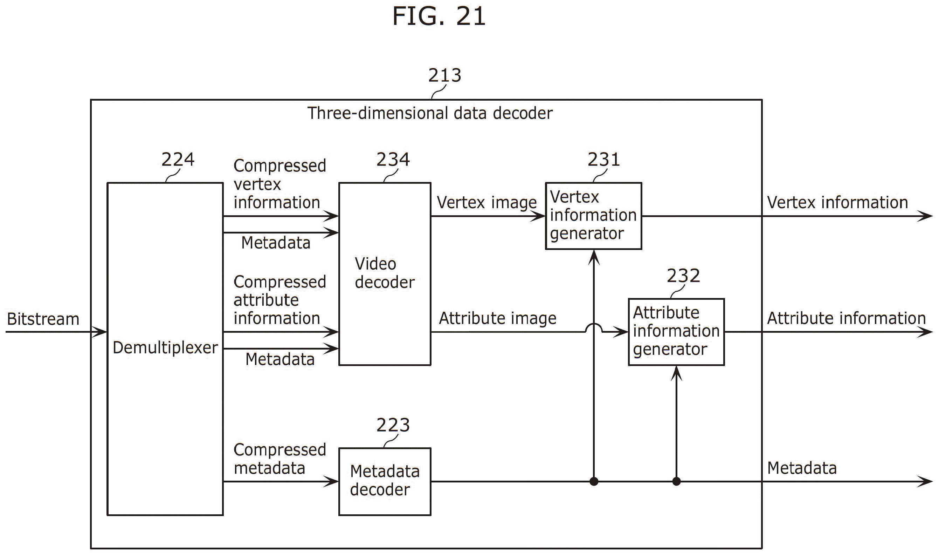

   FIG. 21 is a block diagram illustrating another configuration example of the three-dimensional data decoder according to the embodiment.
[FIG. 22]

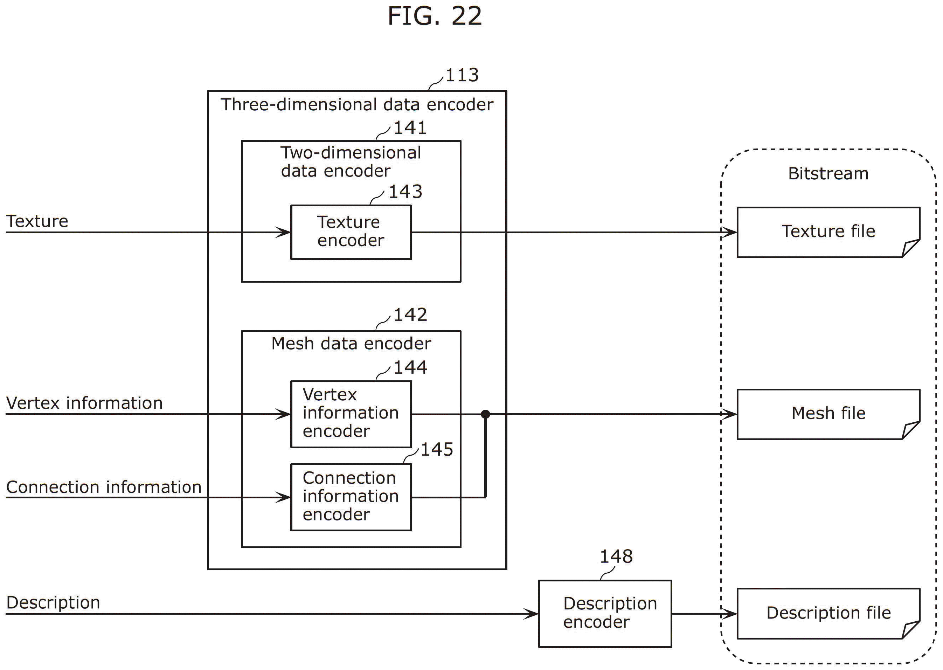

   FIG. 22 is a conceptual diagram illustrating a specific example of encoding processing according to the embodiment.
[FIG. 23]

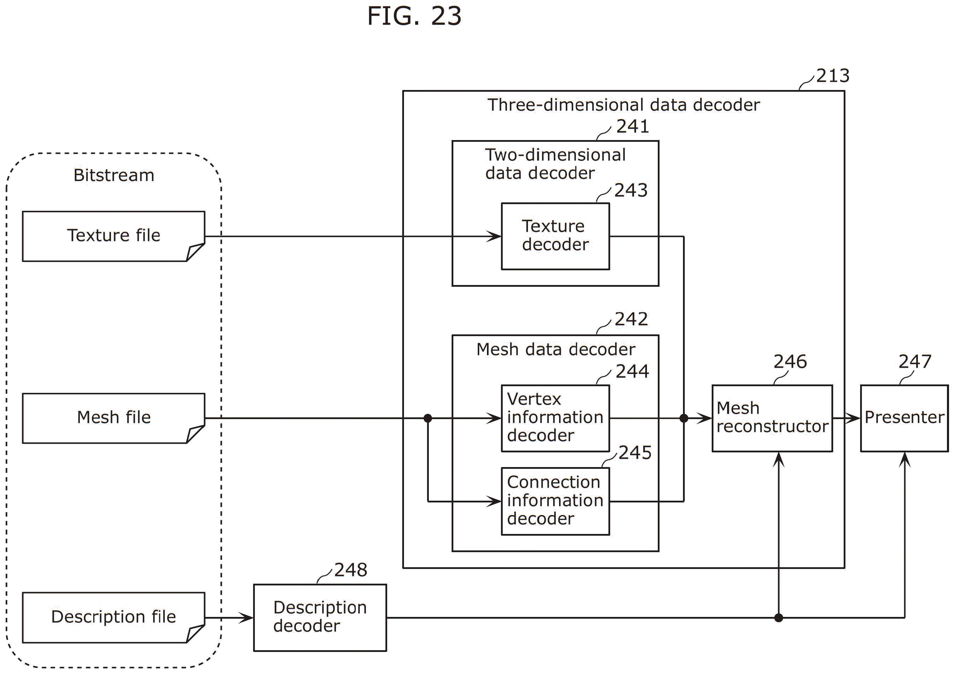

   FIG. 23 is a conceptual diagram illustrating a specific example of decoding processing according to the embodiment.
[FIG. 24]

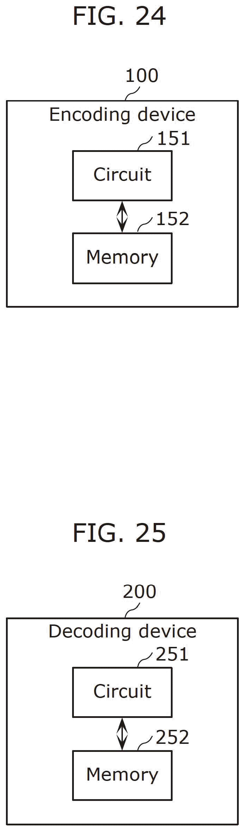

   FIG. 24 is a block diagram illustrating an implementation example of the encoding device according to the embodiment.
[FIG. 25]
   FIG. 25 is a block diagram illustrating an implementation example of the decoding device according to the embodiment.
[FIG. 26]

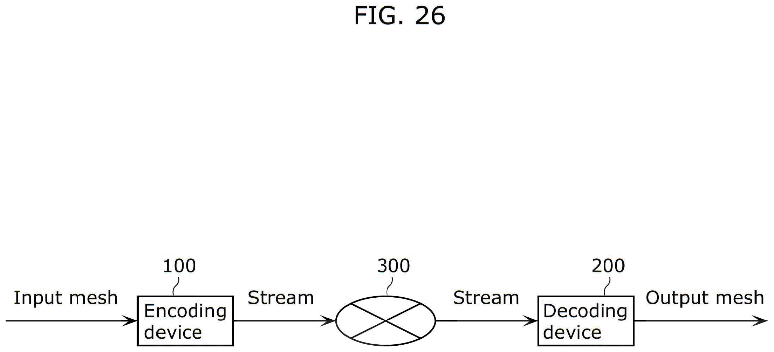

   FIG. 26 is a block diagram illustrating another configuration example of the encoding/decoding system according to the embodiment.
[FIG. 27]

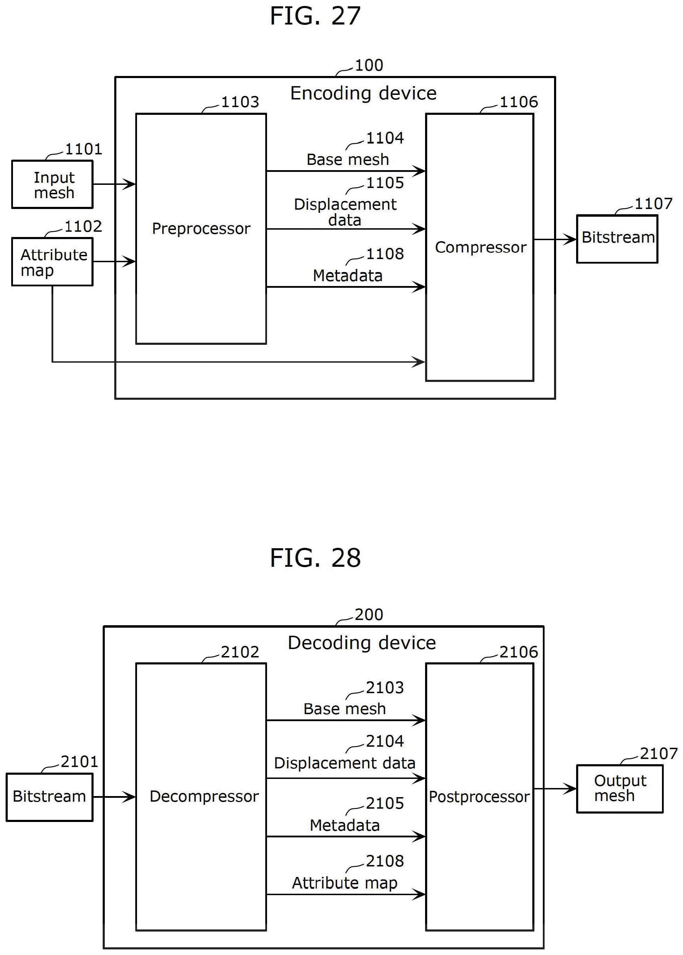

   FIG. 27 is a block diagram illustrating another configuration example of the encoding device according to the embodiment.
[FIG. 28]
   FIG. 28 is a block diagram illustrating another configuration example of the decoding device according to the embodiment.
[FIG. 29]

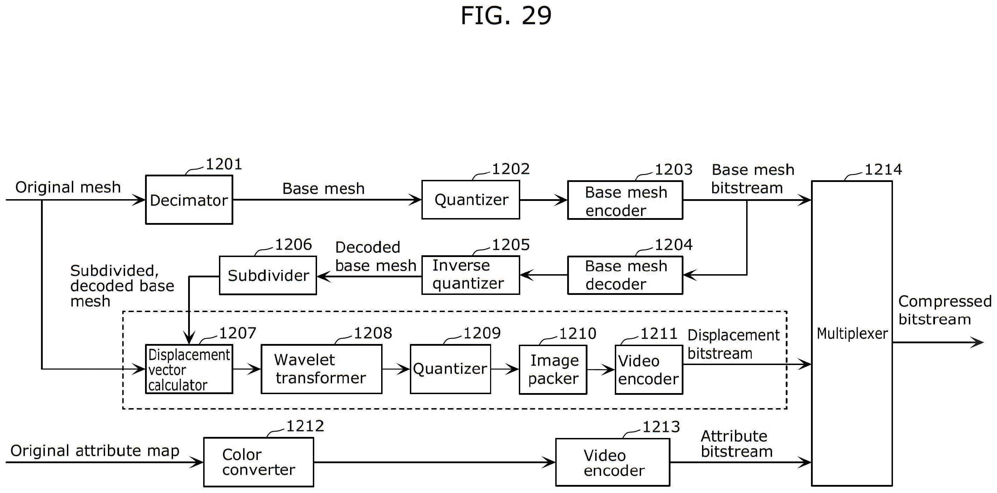

   FIG. 29 is a block diagram illustrating a detailed configuration example of the encoding device according to the embodiment.
[FIG. 30]

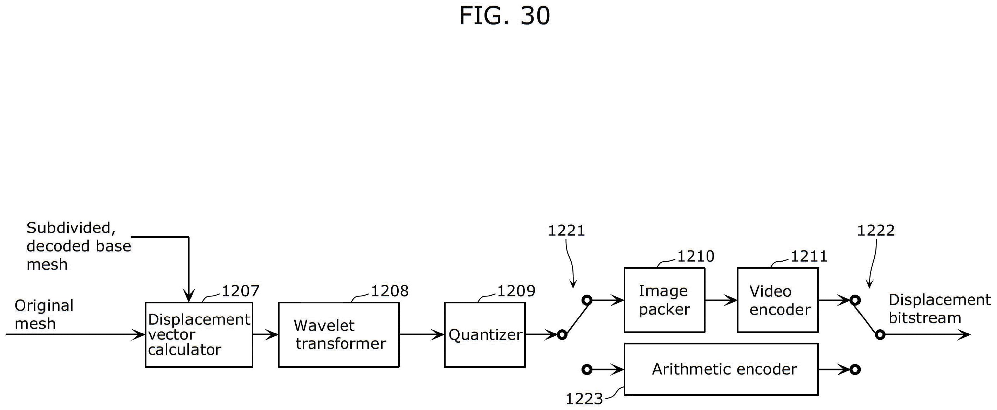

   FIG. 30 is a block diagram illustrating a detailed configuration variation of the encoding device according to the embodiment.
[FIG. 31]

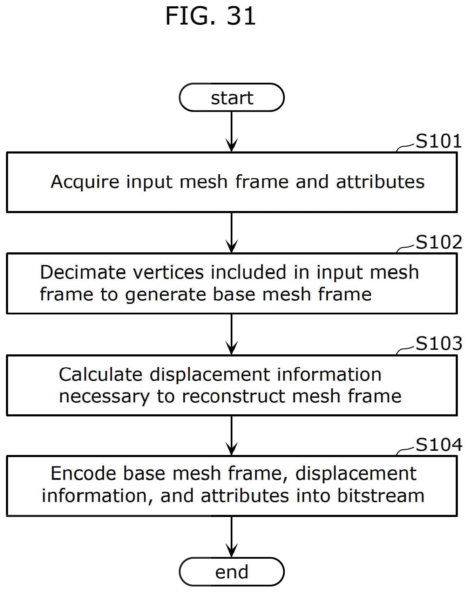

   FIG. 31 is a flowchart illustrating a process by the encoding device according to the embodiment.
[FIG. 32]

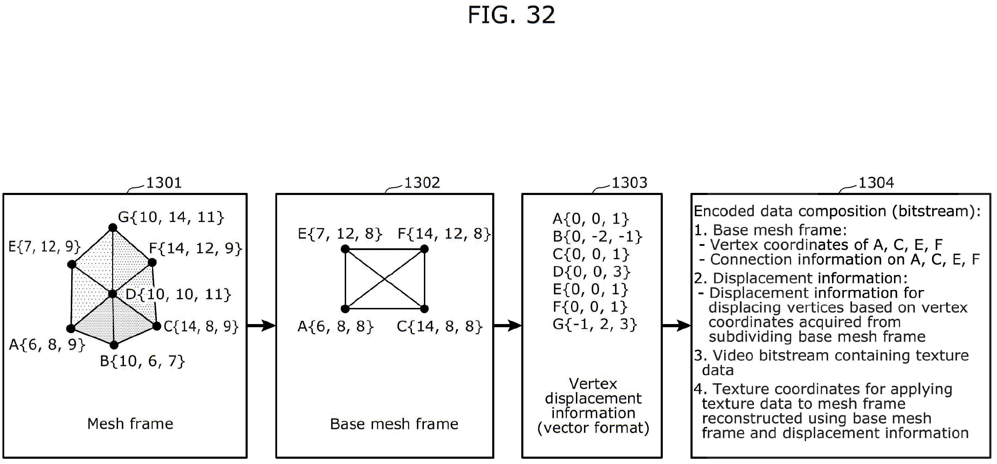

   FIG. 32 is an explanatory diagram schematically illustrating the encoding of a mesh frame according to the embodiment.
[FIG. 33]

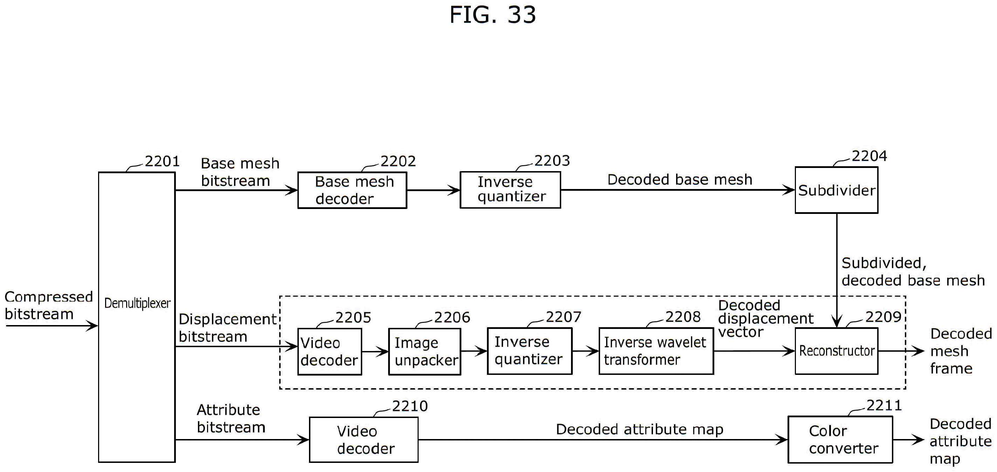

   FIG. 33 is a block diagram illustrating a detailed configuration example of the decoding device according to the embodiment.
[FIG. 34]

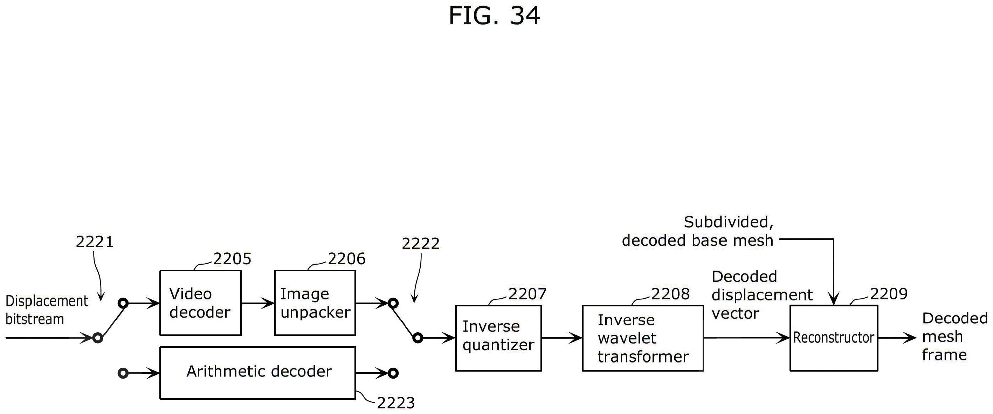

   FIG. 34 is a block diagram illustrating a detailed configuration variation of the decoding device according to the embodiment.
[FIG. 35]
   FIG. 35 is a flowchart illustrating a process by the decoding device according to the embodiment.
[FIG. 36] FIG. 36 is an explanatory diagram schematically illustrating the decoding of a mesh frame according to the embodiment.
[FIG. 37]

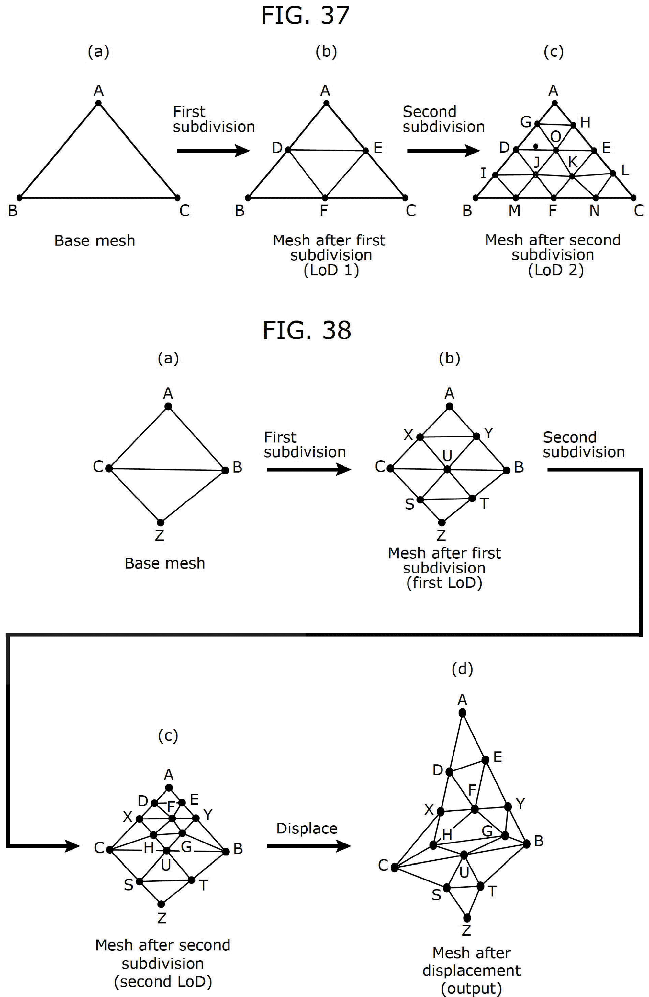

   FIG. 37 is an explanatory diagram illustrating an example of a subdivision according to the embodiment.
[FIG. 38]
   FIG. 38 is an explanatory diagram illustrating an example of the displacement of vertices in which the vertices are subdivided and then displaced, according to the embodiment.
[FIG. 39]

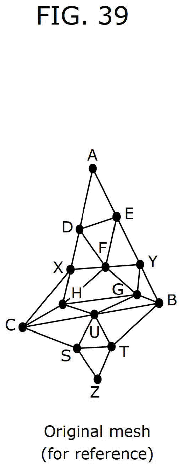

   FIG. 39 is an explanatory diagram illustrating an example of the vertices of an original mesh according to the embodiment.
[FIG. 40]

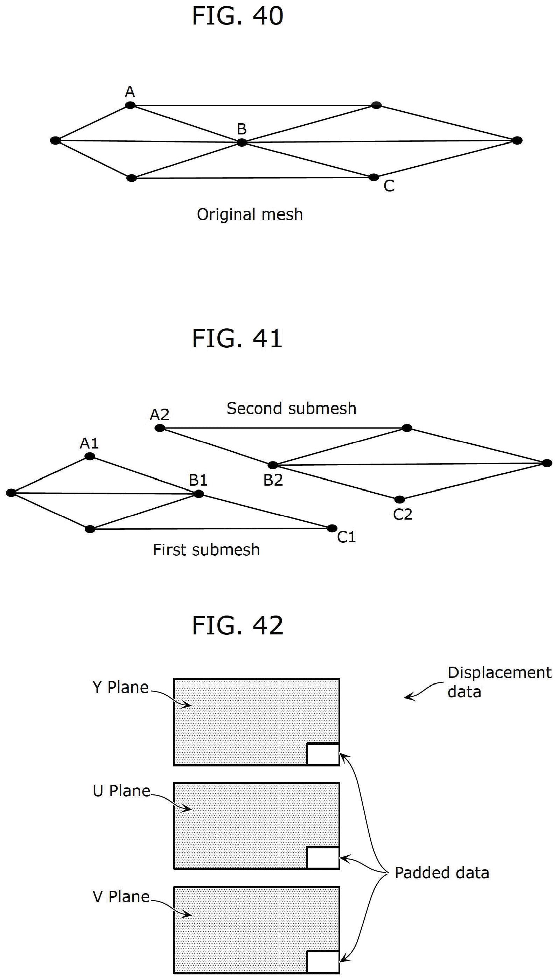

   FIG. 40 is an explanatory diagram illustrating an example of a mesh according to the embodiment.
[FIG. 41]
   FIG. 41 is an explanatory diagram illustrating an example of the division of a mesh into submeshes according to the embodiment.
[FIG. 42]
   FIG. 42 is a first explanatory diagram illustrating an example of the packing of displacement information into an image frame according to the embodiment.
[FIG. 43]

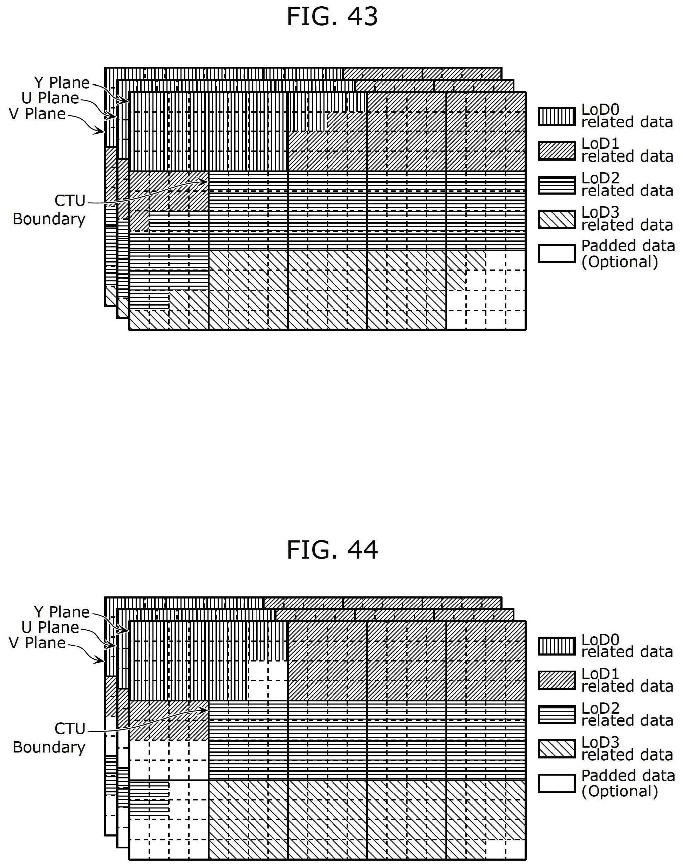

   FIG. 43 is a second explanatory diagram illustrating an example of the packing of displacement information into an image frame according to the embodiment.
[FIG. 44]
   FIG. 44 is a third explanatory diagram illustrating an example of the packing of displacement information into an image frame according to the embodiment.
[FIG. 45]

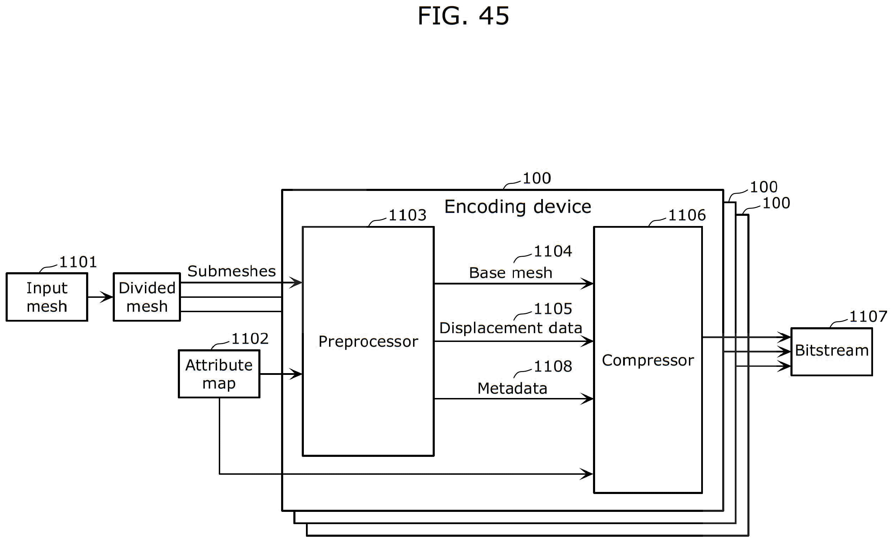

   FIG. 45 is a block diagram illustrating another configuration example of the encoding device according to the embodiment.
[FIG. 46]

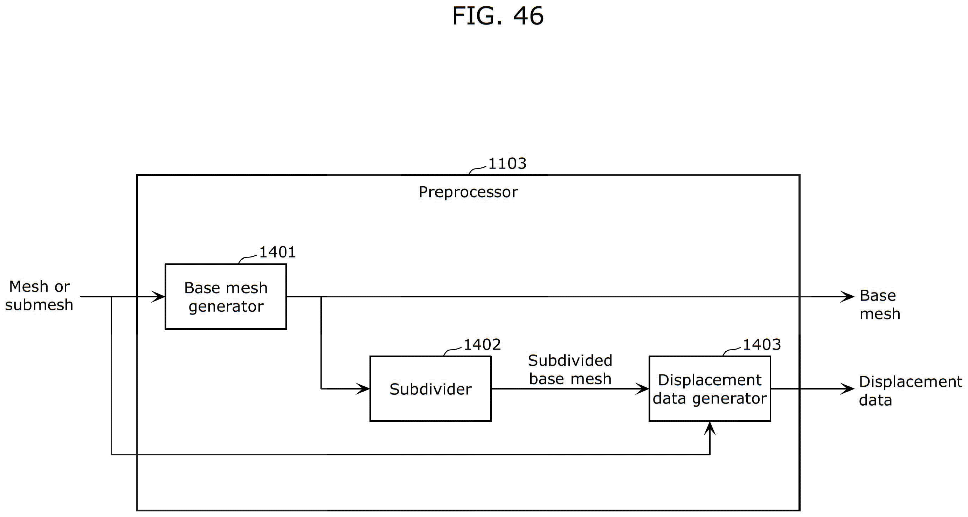

   FIG. 46 is a block diagram illustrating a configuration example of a preprocessor according to the embodiment.
[FIG. 47]

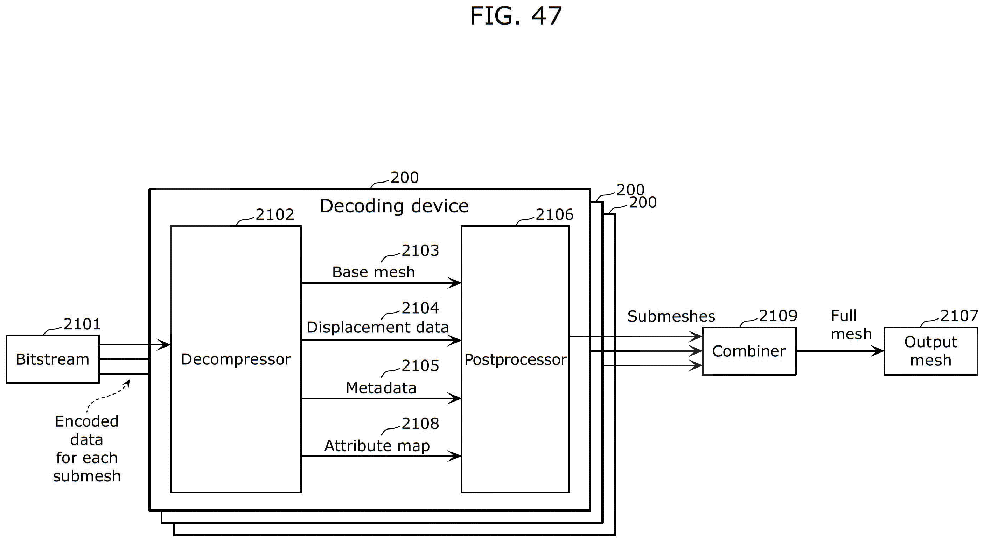

   FIG. 47 is a block diagram illustrating another configuration example of the decoding device according to the embodiment.
[FIG. 48]

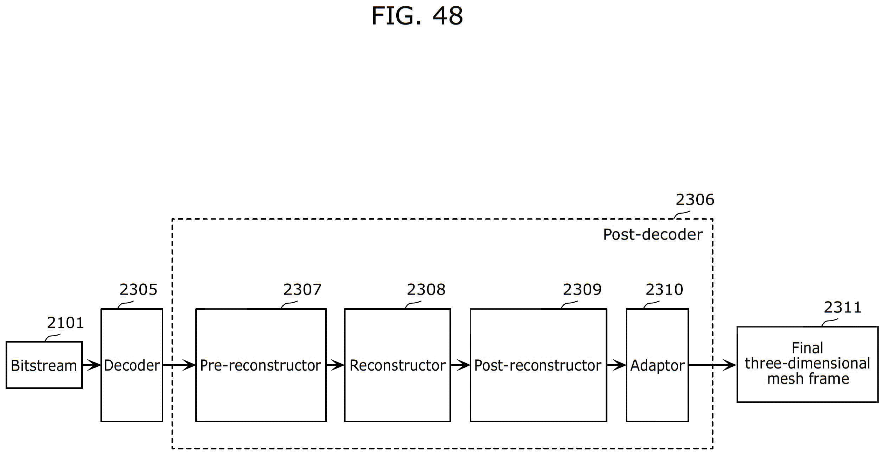

   FIG. 48 is a block diagram illustrating a specific configuration example of the decoding device according to the embodiment.
[FIG. 49]

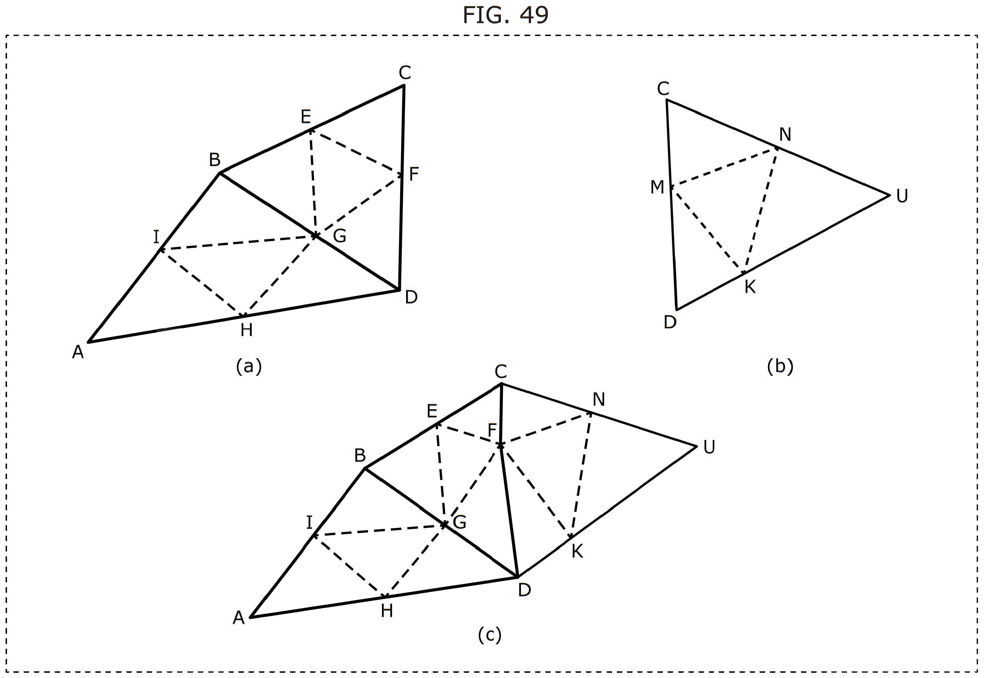

   FIG. 49 is a diagram illustrating an example of two submeshes having a boundary edge obtained by subdivision according to the embodiment.
[FIG. 50]

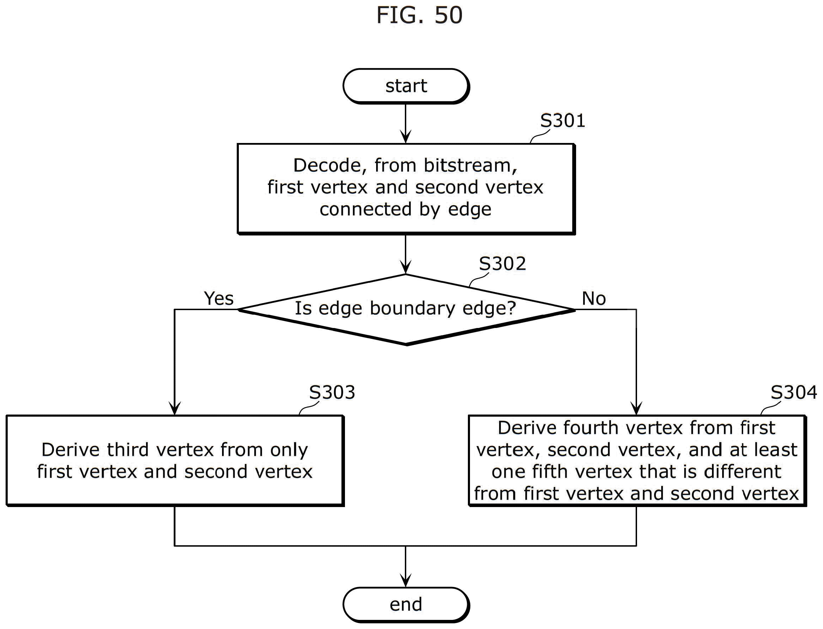

   FIG. 50 is a flowchart illustrating a process by the decoding device according to the embodiment.
[FIG. 51]

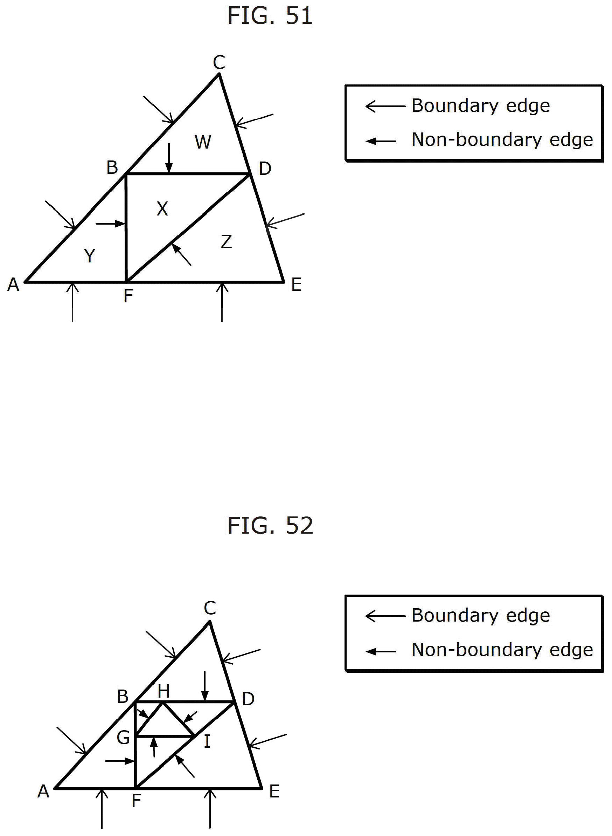

   FIG. 51 is a diagram for describing an example of boundary edges and non-boundary edges according to the embodiment.
[FIG. 52]
   FIG. 52 is a diagram for describing another example of boundary edges and non-boundary edges according to the embodiment.
[FIG. 53]

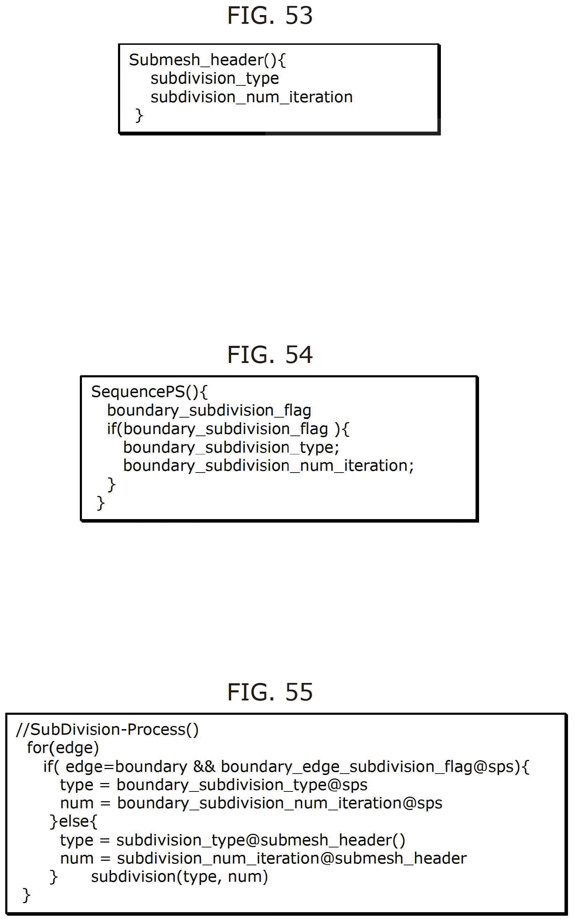

   FIG. 53 is a diagram illustrating an example of a syntax for signaling different subdivision types and different numbers of iterations of subdivision in headers according to the embodiment.
[FIG. 54]
   FIG. 54 is a diagram for describing an example of a syntax for signaling a subdivision type and a number of iterations of subdivision using a sequence parameter set according to the embodiment.
[FIG. 55]
   FIG. 55 is a diagram illustrating an example of a syntax for determining the subdivision type and the number of iterations of subdivision using a sequence parameter set and checking whether an edge is located on a boundary according to the embodiment.
[FIG. 56]

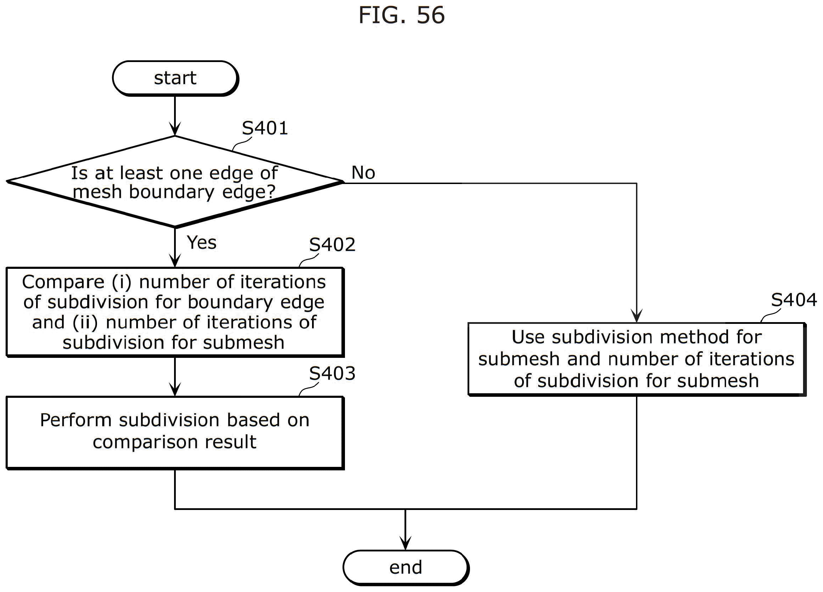

   FIG. 56 is a flowchart illustrating an example of a process of dividing a plurality of edges forming a submesh according to the embodiment.
[FIG. 57]

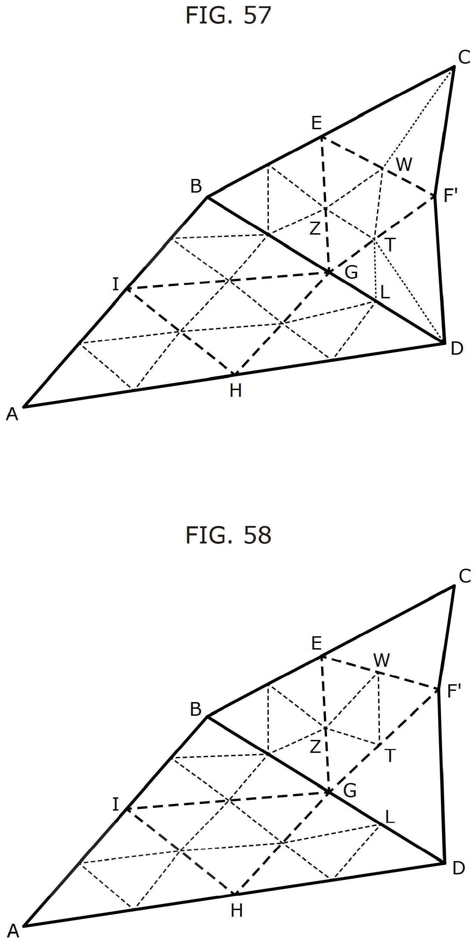

   FIG. 57 is a diagram for describing a first example of the process of dividing a plurality of edges forming a submesh according to the embodiment.
[FIG. 58]
   FIG. 58 is a diagram for describing a second example of the process of dividing a plurality of edges forming a submesh according to the embodiment.
[FIG. 59]

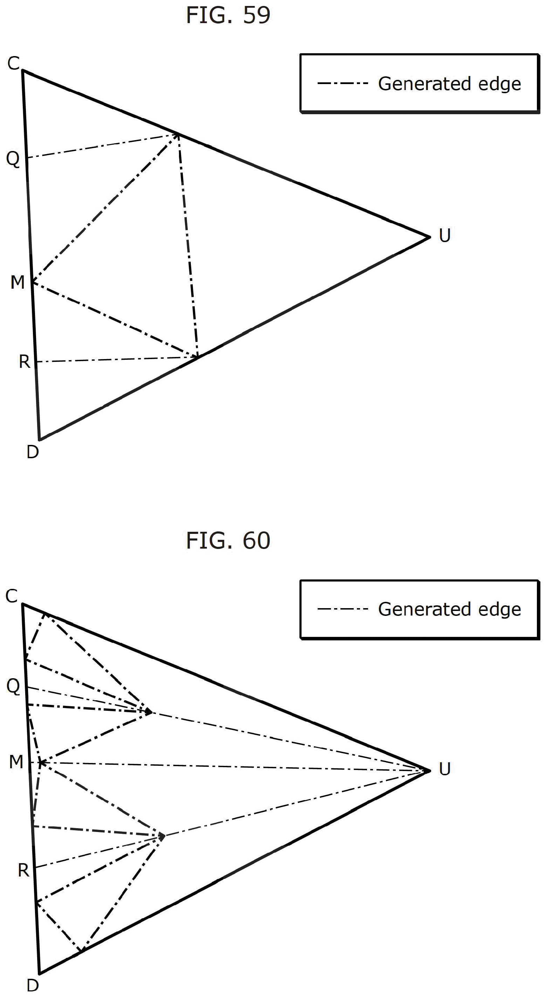

   FIG. 59 is a diagram for describing a third example of the process of dividing a plurality of edges forming a submesh according to the embodiment.
[FIG. 60]
   FIG. 60 is a diagram for describing a fourth example of the process of dividing a plurality of edges forming a submesh according to the embodiment.
[FIG. 61]

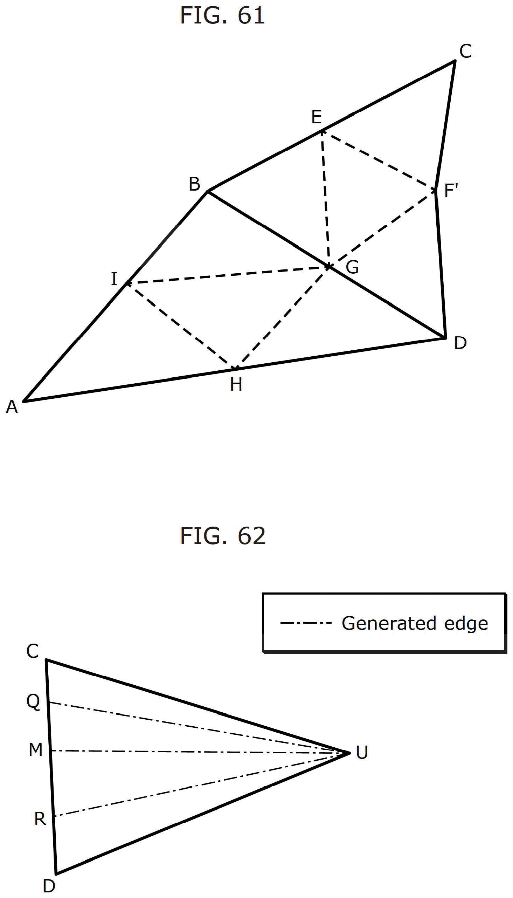

   FIG. 61 is a diagram for describing a fifth example of the process of dividing a plurality of edges forming a submesh according to the embodiment.
[FIG. 62]
   FIG. 62 is a diagram for describing a sixth example of the process of dividing a plurality of edges forming a submesh according to the embodiment.
[FIG. 63]

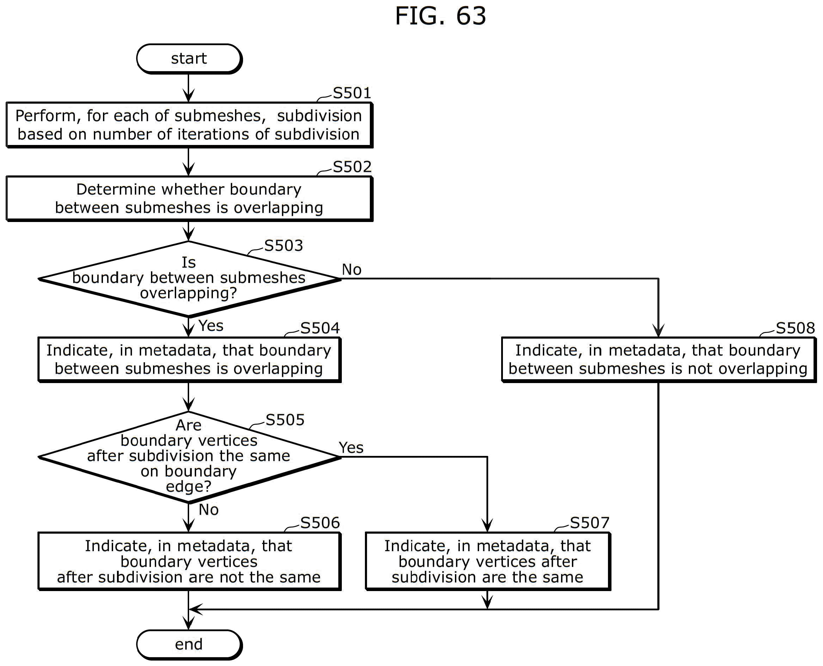

   FIG. 63 is a flowchart illustrating a determination process for boundary vertices performed by the encoding device according to the embodiment.
[FIG. 64]

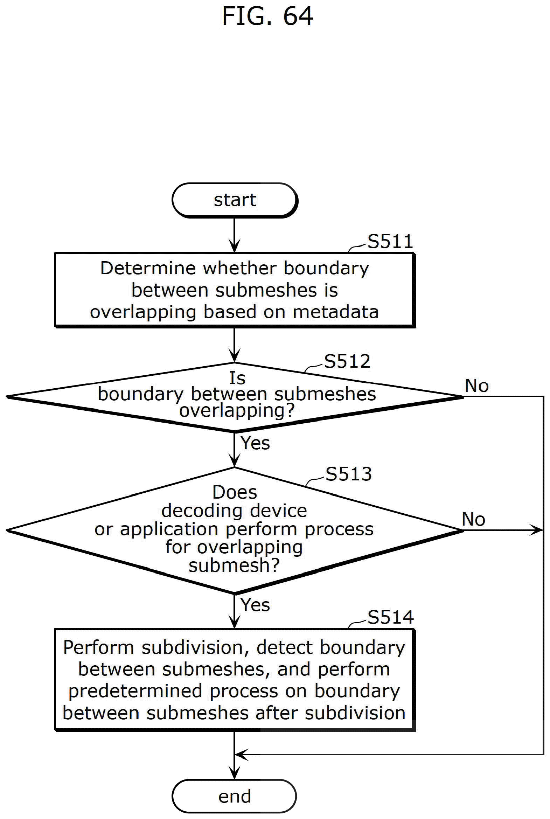

   FIG. 64 is a flowchart illustrating a determination process for overlap of submeshes performed by the decoding device according to the embodiment.
[FIG. 65]

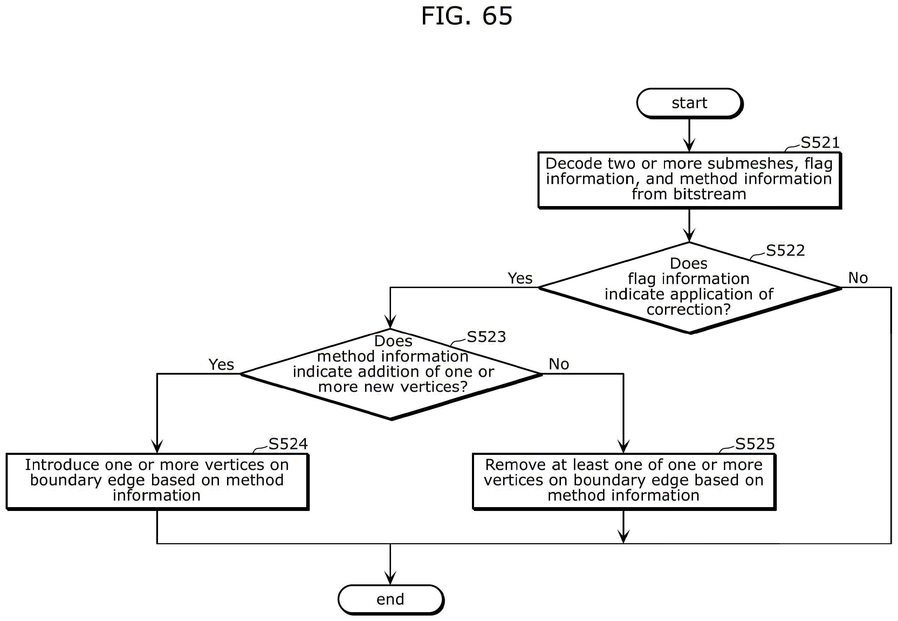

   FIG. 65 is a flowchart illustrating a vertex correction process performed by the decoding device according to the embodiment.
[FIG. 66]

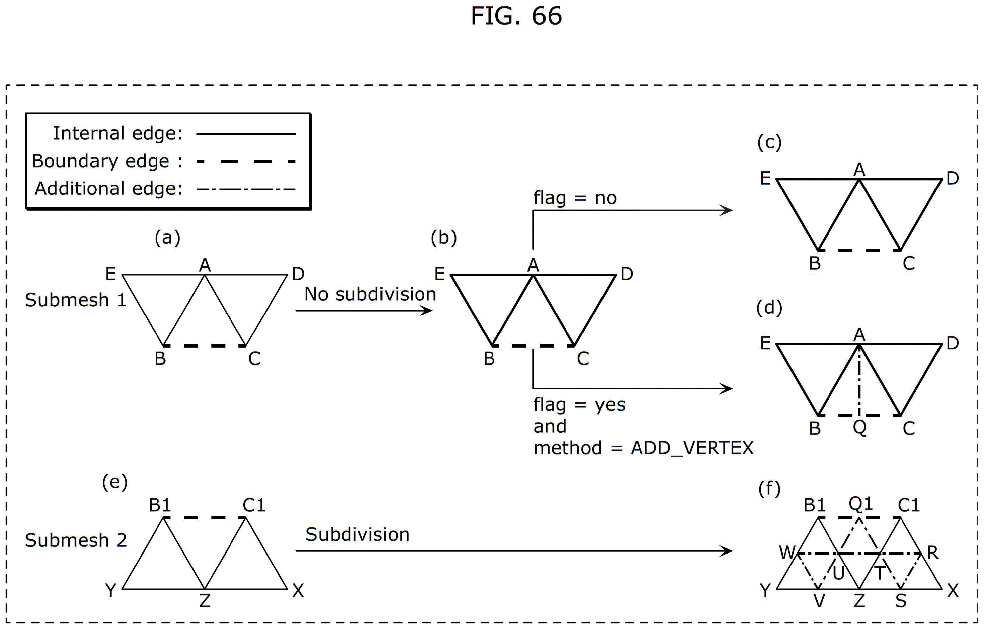

   FIG. 66 is a diagram illustrating a specific example of the vertex correction process according to the embodiment.
[FIG. 67]

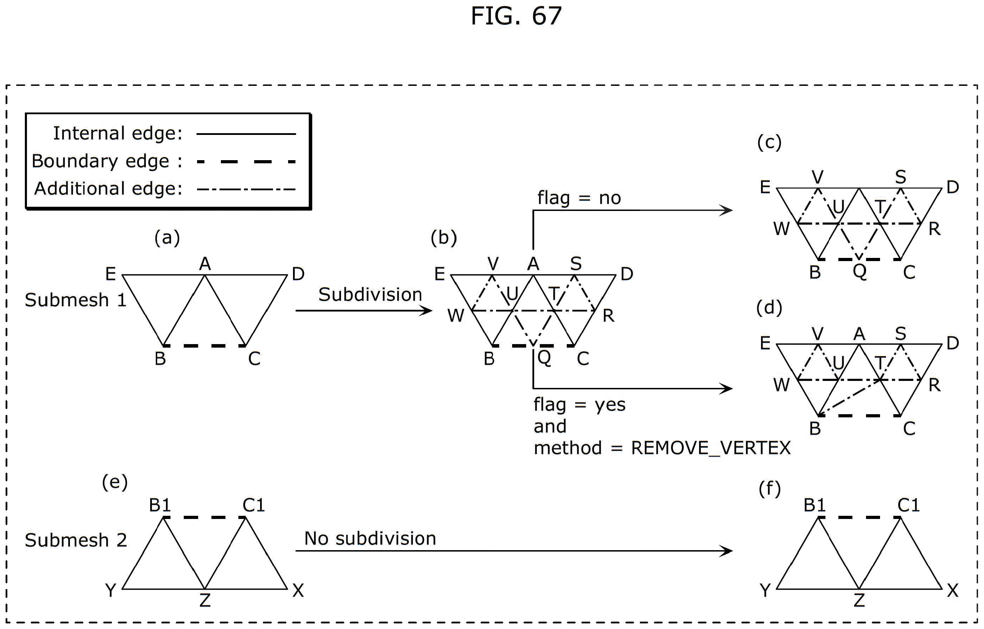

   FIG. 67 is a diagram illustrating another specific example of the vertex correction process according to the embodiment.
[FIG. 68]

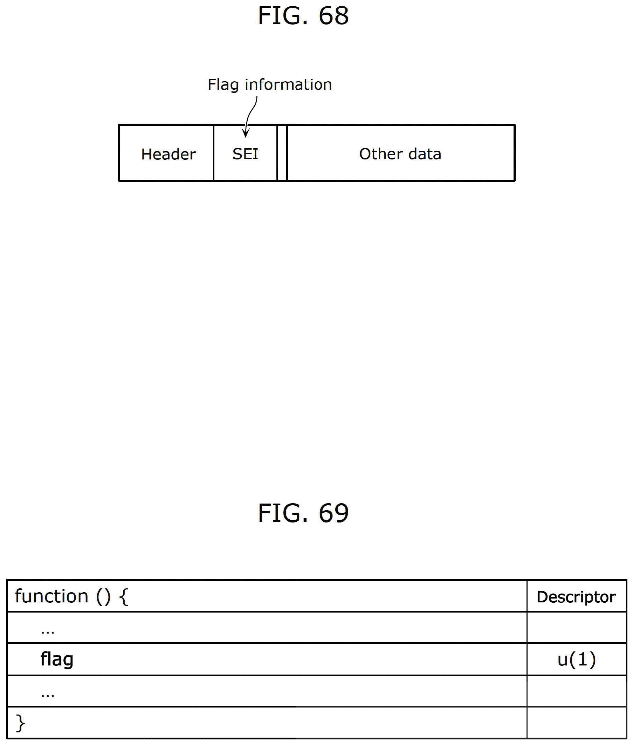

   FIG. 68 is a diagram illustrating a specific example of a position where flag information is stored, according to the embodiment.
[FIG. 69]
   FIG. 69 is a diagram for explaining an example of a syntax for signaling the flag information according to the embodiment.
[FIG. 70]

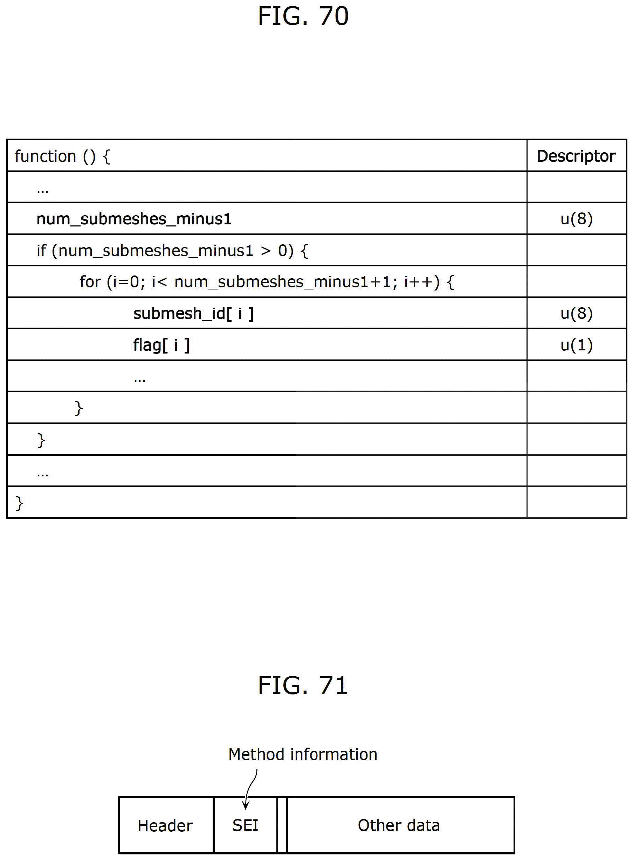

   FIG. 70 is a diagram for explaining another example of the syntax for signaling the flag information according to the embodiment.
[FIG. 71]
   FIG. 71 is a diagram illustrating a specific example of a position where method information is stored, according to the embodiment.
[FIG. 72]

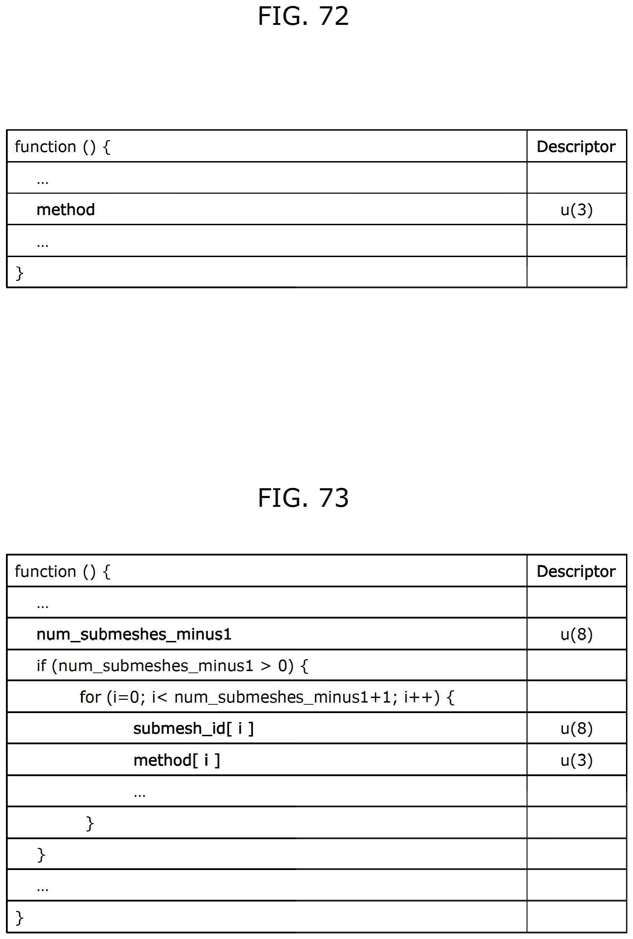

   FIG. 72 is a diagram for explaining an example of a syntax for signaling the method information according to the embodiment.
[FIG. 73]
   FIG. 73 is a diagram for explaining another example of the syntax for signaling the method information according to the embodiment.
[FIG. 74]

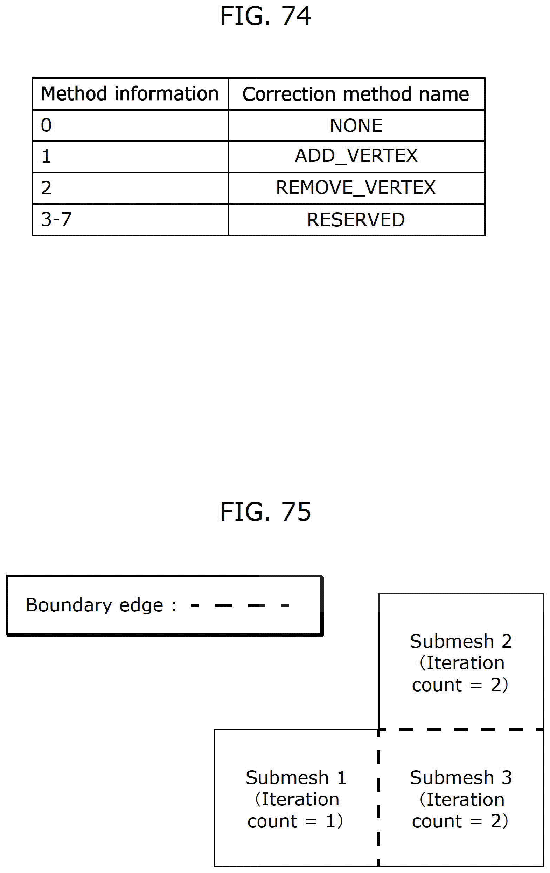

   FIG. 74 is a diagram illustrating yet another specific example of the vertex correction process according to the embodiment.
[FIG. 75]
   FIG. 75 is a diagram for explaining an example of a relationship between the flag information and the number of iterations of subdivision for a plurality of submeshes according to the embodiment.
[FIG. 76]

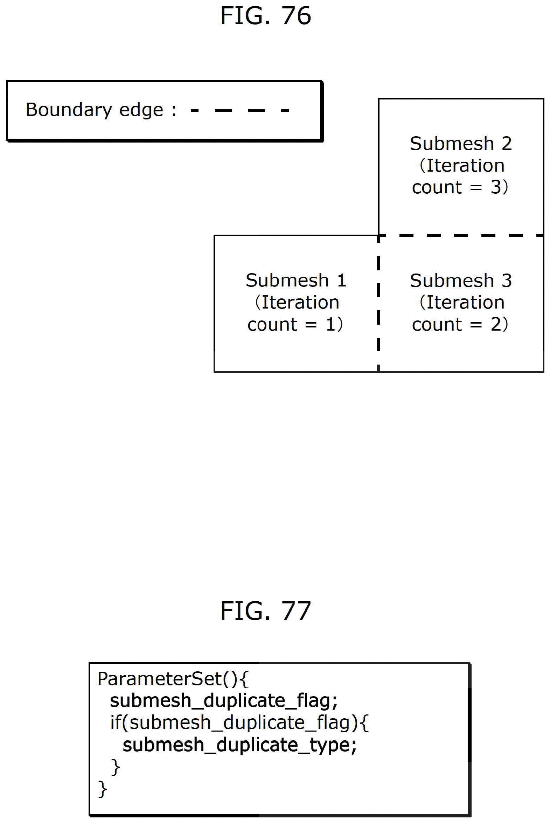

   FIG. 76 is a diagram for explaining another example of the relationship between the flag information and the number of iterations of subdivision for the plurality of submeshes according to the embodiment.
[FIG. 77]
   FIG. 77 is a diagram for explaining an example of a syntax for signaling information indicating a type of overlap of a plurality of submeshes according to the embodiment.
[FIG. 78]

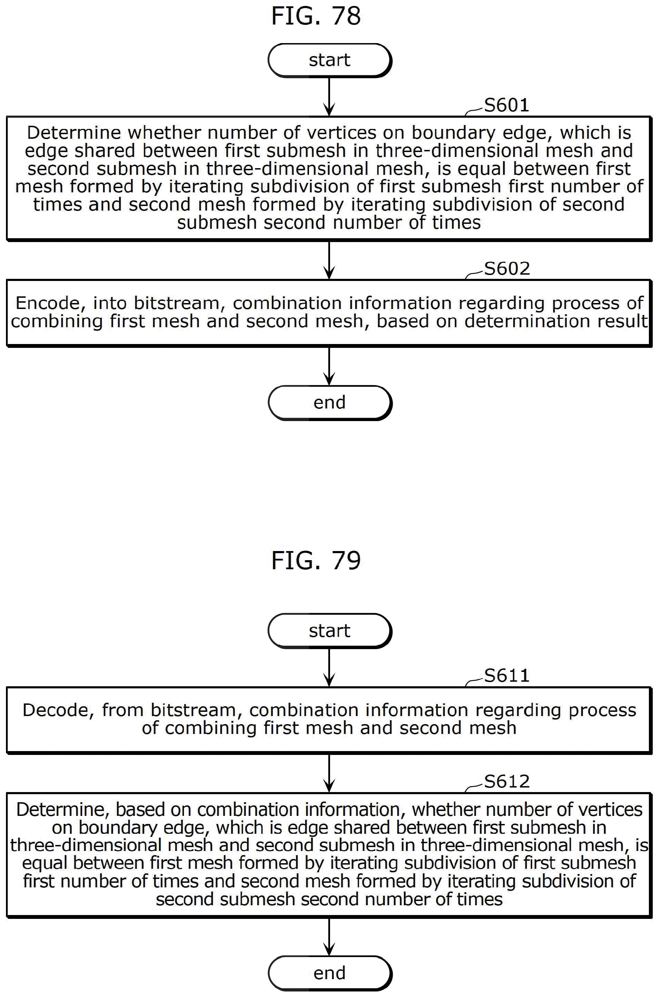

   FIG. 78 is a flowchart illustrating an example of a basic encoding process according to the embodiment.
[FIG. 79]
   FIG. 79 is a flowchart illustrating an example of a basic decoding process according to the embodiment.

### [Description of Embodiments]

### <Introduction>

Three-dimensional (3D) meshes are used in, for example, a computer graphics video. For example, the computer graphics video may include a plurality of frames different in time from one another, and each of the frames may be represented in the form of three-dimensional meshes.

The three-dimensional meshes each include vertex information indicating the positions of a plurality of vertices in a three-dimensional space, connection information indicating the connections between the plurality of vertices, and attribute information indicating attributes of the vertices or faces. The faces are each built in accordance with the connectivity relation among the plurality of vertices. Such three-dimensional meshes can represent various computer graphics videos.

For the transmission and storage of three-dimensional meshes, an efficient encoding and decoding of three-dimensional meshes is expected. For the efficient encoding and decoding of three-dimensional meshes, arithmetic encoding and arithmetic decoding may be used.

There is a demand for further improvement in an encoding or decoding process related to three-dimensional data. An object of the present disclosure is to improve the encoding or decoding process related to three-dimensional data.

Hereinafter, aspects of the invention derived from the content of the disclosure of the present description will be described by way of example, and the effects and the like derived from the aspect of the invention will be described.

An encoding device according to Example 1 includes a circuit and memory connected to the circuit. In operation, the circuit: determines whether a total number of vertices on a boundary edge, which is an edge shared between a first submesh in a three-dimensional mesh and a second submesh in the three-dimensional mesh, is equal between a first mesh formed by iterating subdivision of the first submesh a first number of times and a second mesh formed by iterating subdivision of the second submesh a second number of times; and encodes, into a bitstream, combination information regarding a process of combining the first mesh and the second mesh, based on a determination result of the determining.

With this, the decoding device that has obtained the combination information from the bitstream can combine the first mesh and the second mesh without performing a process for combining the first mesh and the second mesh in the encoding device. Accordingly, it is possible to reduce the processing amount.

An encoding device according to Example 2 is the encoding device according to Example 1, in which the combination information may include flag information indicating whether correction is necessary for the total number of vertices on the boundary edge of at least one of the first mesh or the second mesh.

With this, the decoding device that has obtained the flag information from the bitstream can determine, from the flag information, whether correction is necessary for the number of vertices on the boundary edge. Accordingly, it is possible to reduce the processing amount.

An encoding device according to Example 3 is the encoding device according to Example 1 or 2, in which the combination information may include method information indicating how to correct the total number of vertices on the boundary edge of at least one of the first mesh or the second mesh.

With this, the decoding device that has obtained the method information from the bitstream can appropriately correct the number of vertices on the boundary edge based on the method information.

An encoding device according to Example 4 is the encoding device according to Example 3, in which the method information may include information indicating addition of a vertex to the boundary edge of at least one of the first mesh or the second mesh.

With this, the decoding device that has obtained the method information from the bitstream can correct the number of vertices on the boundary edge based on the method information so that the number of vertices on the boundary edge becomes equal between the first mesh and the second mesh when the number of vertices on the boundary edge is different.

An encoding device according to Example 5 is the encoding device according to Example 3 or 4, in which the method information may include information indicating removal of at least one of one or more vertices on the boundary edge of at least one of the first mesh or the second mesh.

With this, the decoding device that has obtained the method information from the bitstream can correct the number of vertices on the boundary edge based on the method information so that the number of vertices on the boundary edge becomes equal between the first mesh and the second mesh when the number of vertices on the boundary edge is different.

An encoding device according to Example 6 is the encoding device according to any of Example 3 to Example 5, in which in the encoding into the bitstream, when the total number of vertices on the boundary edge is determined not to be equal between the first mesh and the second mesh in the determining, the combination information including the method information may be encoded into the bitstream.

With this, when the number of vertices on the boundary edge is not equal between the first mesh and the second mesh, i.e., when correction is necessary for the number of vertices on the boundary edge, the decoding device can obtain the method information from the bitstream to appropriately correct the number of vertices on the boundary edge.

An encoding device according to Example 7 is the encoding device according to any of Example 1 to Example 6, in which in the determining, when the first number of times and the second number of times are equal, the total number of vertices on the boundary edge may be determined to be equal between the first mesh and the second mesh, and when the first number of times and the second number of times are not equal, the total number of vertices on the boundary edge may be determined not to be equal between the first mesh and the second mesh.

Each mesh on which subdivision is iterated a different number of times has a different number of vertices. For this reason, by determining, based on the number of iterations of subdivision, whether the number of vertices on the boundary edge is equal between the first mesh and the second mesh, it is possible to correctly determine whether the number of vertices on the boundary edge is equal between the first mesh and the second mesh.

A decoding device according to Example 8 includes a circuit and memory connected to the circuit. In operation, the circuit: decodes, from a bitstream, combination information regarding a process of combining a first mesh and a second mesh; and determines, based on the combination information, whether a total number of vertices on a boundary edge, which is an edge shared between a first submesh in a three-dimensional mesh and a second submesh in the three-dimensional mesh, is equal between the first mesh formed by iterating subdivision of the first submesh a first number of times and the second mesh formed by iterating subdivision of the second submesh a second number of times.

With this, the decoding device can combine the first mesh and the second mesh based on the combination information.

A decoding device according to Example 9 is the decoding device according to Example 8, in which the combination information may include flag information indicating whether correction is necessary for the total number of vertices on the boundary edge of at least one of the first mesh or the second mesh.

With this, the decoding device can determine, from the flag information, whether correction is necessary for the number of vertices on the boundary edge.

A decoding device according to Example 10 is the decoding device according to Example 8 or 9, in which the combination information may include method information indicating how to correct the total number of vertices on the boundary edge of at least one of the first mesh or the second mesh.

With this, the decoding device can appropriately correct the number of vertices on the boundary edge based on the method information.

A decoding device according to Example 11 is the decoding device according to Example 10, in which the method information may include information indicating addition of a vertex to the boundary edge of at least one of the first mesh or the second mesh.

With this, the decoding device that has obtained the method information from the bitstream can correct the number of vertices on the boundary edge based on the method information so that the number of vertices on the boundary edge becomes equal between the first mesh and the second mesh when the number of vertices on the boundary edge is different.

A decoding device according to Example 12 is the decoding device according to Example 10 or 11, in which the method information may include information indicating removal of at least one of one or more vertices on the boundary edge of at least one of the first mesh or the second mesh.

With this, the decoding device that has obtained the method information from the bitstream can correct the vertices on the boundary edge based on the method information so that the number of vertices on the boundary edge becomes equal between the first mesh and the second mesh when the number of vertices on the boundary edge is different.

A decoding device according to Example 13 is the decoding device according to any of Example 10 to Example 12, in which when the total number of vertices on the boundary edge is determined not to be equal between the first mesh and the second mesh in the determining, the total number of vertices on the boundary edge of the at least one of the first mesh or the second mesh may be corrected based on the method information, a triangle included in the at least one of the first mesh or the second mesh may be corrected according to the total number of vertices corrected, and the first mesh and the second mesh at least one of which includes the triangle corrected may be combined.

When the number of vertices is corrected, triangles formed by connecting the vertices in the mesh are changed. Accordingly, when the number of vertices is corrected, the meshes are combined after the correction of the triangles included in the mesh. With this, it is possible to combine the meshes including triangles appropriately formed according to the vertices.

An encoding method according to Example 14 includes: determining whether a total number of vertices on a boundary edge, which is an edge shared between a first submesh in a three-dimensional mesh and a second submesh in the three-dimensional mesh, is equal between a first mesh formed by iterating subdivision of the first submesh a first number of times and a second mesh formed by iterating subdivision of the second submesh a second number of times; and encoding, into a bitstream, combination information regarding a process of combining the first mesh and the second mesh, based on a determination result of the determining.

With this, the same advantageous effects as those of the encoding device according to Example 1 can be produced.

A decoding method according to Example 15 includes: decoding, from a bitstream, combination information regarding a process of combining a first mesh and a second mesh; and determining, based on the combination information, whether a total number of vertices on a boundary edge, which is an edge shared between a first submesh in a three-dimensional mesh and a second submesh in the three-dimensional mesh, is equal between the first mesh formed by iterating subdivision of the first submesh a first number of times and the second mesh formed by iterating subdivision of the second submesh a second number of times.

With this, the same advantageous effects as those of the decoding device according to Example 8 can be produced.

Moreover, these general or specific aspects may be implemented using a system, a device, a method, an integrated circuit, a computer program, or a non-transitory computer-readable recording medium such as a CD-ROM, or any combination of systems, devices, methods, integrated circuits, computer programs, and recording media.

### <Expressions and terms>

The following expressions and terms will be used herein.

### (1) Three-dimensional mesh

A three-dimensional mesh is a set of a plurality of faces and indicates, for example, a three-dimensional object. In addition, a three-dimensional mesh is mainly constituted of vertex information, connection information, and attribute information. A three-dimensional mesh may be expressed as a polygon mesh or a mesh. In addition, a three-dimensional mesh may have a temporal change. A three-dimensional mesh may include metadata related to vertex information, connection information, and attribute information or other additional information.

### (2) Vertex information

Vertex information is information indicating a vertex. For example, vertex information indicates a position of a vertex in a three-dimensional space. In addition, a vertex corresponds to a vertex of a face that constitutes a three-dimensional mesh. Vertex information may be expressed as "geometry". In addition, vertex information may also be expressed as position information.

### (3) Connection information

Connection information is information indicating a connection between vertexes. For example, connection information indicates a connection for constructing a face or an edge of a three-dimensional mesh. Connection information may be expressed as "connectivity". In addition, connection information may also be expressed as face information.

### (4) Attribute information

Attribute information is information indicating an attribute of a vertex or a face. For example, attribute information indicates an attribute such as a color, an image, a normal vector, and the like associated with a vertex or a face. Attribute information may be expressed as "texture".

### (5) Face

A face is an element that constitutes a three-dimensional mesh. Specifically, a face is a polygon on a plane in a three-dimensional space. For example, a face can be determined as a triangle in the three-dimensional space.

### (6) Plane

A plane is a two-dimensional plane in a three-dimensional space. For example, a polygon is formed on a plane and a plurality of polygons are formed on a plurality of planes.

### (7) Bitstream

A bitstream corresponds to encoded information. A bitstream can also be expressed as a stream, an encoded bitstream, a compressed bitstream, or an encoded signal.

### (8) Encoding and decoding

The expression "encode" may be replaced with expressions such as store, include, write, describe, signalize, send out, notify, save, or compress and such expressions may be interchangeably used. For example, encoding information may mean including information in a bitstream. In addition, encoding information in a bitstream may mean encoding the information and generating a bitstream that includes the encoded information.

In addition, the expression "decode" may be replaced with expressions such as read, interpret, scan, load, derive, acquire, receive, extract, restore, reconstruct, decompress, or expand and such expressions may be interchangeably used. For example, decoding information may mean acquiring information from a bitstream. In addition, decoding information from a bitstream may mean decoding the bitstream and acquiring information included in the bitstream.

### (9) Ordinal numbers

In the description, an ordinal number such as first, second, or the like may be affixed to a constituent element or the like. Such ordinal numbers may be replaced as necessary. In addition, an ordinal number may be newly affixed to or removed from a constituent element or the like. Furthermore, the ordinal numbers may be affixed to elements in order to identify the elements and may not correspond to any meaningful order.

### <Three-dimensional mesh>

FIG. 1 is a conceptual diagram illustrating a three-dimensional mesh according to the present embodiment. The three-dimensional mesh is constituted of a plurality of faces. For example, each face is a triangle. Vertexes of the triangles are determined in a three-dimensional space. In addition, a three-dimensional mesh indicates a three-dimensional object. Each face may have a color or an image.

FIG. 2 is a conceptual diagram illustrating basic elements of a three-dimensional mesh according to the present embodiment. The three-dimensional mesh is constituted of vertex information, connection information, and attribute information. Vertex information indicates a position of a vertex of a face in a three-dimensional space. Connection information indicates a connection between vertexes. A face can be identified based on vertex information and connection information. In other words, an uncolored three-dimensional object is formed in a three-dimensional space based on vertex information and connection information.

Attribute information may be associated with a vertex or associated with a face. Attribute information associated with a vertex may be expressed as "attribute per point". Attribute information associated with a vertex may indicate an attribute of the vertex itself or indicate an attribute of a face connected to the vertex.

For example, a color may be associated with a vertex as attribute information. The color associated with the vertex may be the color of the vertex or the color of a face connected to the vertex. The color of the face may be an average of a plurality of colors associated with a plurality of vertexes of the face. In addition, a normal vector may be associated with a vertex or a face as attribute information. Such a normal vector can express a front and a rear of a face.

In addition, a two-dimensional image may be associated with a face as attribute information. The two-dimensional image associated with a face is also expressed as a texture image or an "attribute map". In addition, information indicating mapping between a face and a two-dimensional image may be associated with the face as attribute information. Such information indicating mapping may be expressed as mapping information, vertex information of a texture image, texture coordinates, or an "attribute UV coordinate".

Furthermore, information on a color, an image, a moving image, and the like to be used as attribute information may be expressed as "parametric space".

A texture is reflected in a three-dimensional object based on such attribute information. In other words, a colored three-dimensional object is formed in a three-dimensional space based on vertex information, connection information, and attribute information.

Note that while attribute information is associated with a vertex or a face in the description given above, alternatively, attribute information may be associated with an edge.

FIG. 3 is a conceptual diagram illustrating mapping according to the present embodiment. For example, a region of a two-dimensional image on a two-dimensional plane can be mapped to a face of a three-dimensional mesh in a three-dimensional space. Specifically, coordinate information of a region in the two-dimensional image is associated with a face of the three-dimensional mesh. Accordingly, an image of the mapped region in the two-dimensional image is reflected in the face of the three-dimensional mesh.

The use of mapping enables a two-dimensional image to be used as attribute information to be separated from the three-dimensional mesh. For example, in encoding of the three-dimensional mesh, the two-dimensional image may be encoded based on an image encoding system or a video encoding system.

### <System configuration>

FIG. 4 is a block diagram illustrating a configuration example of an encoding/decoding system according to the present embodiment. In FIG. 4, the encoding/decoding system includes encoding device 100 and decoding device 200.

For example, encoding device 100 acquires a three-dimensional mesh and encodes the three-dimensional mesh into a bitstream. In addition, encoding device 100 outputs the bitstream to network 300. For example, the bitstream includes an encoded three-dimensional mesh and control information for decoding the encoded three-dimensional mesh. Encoding of the three-dimensional mesh causes information of the three-dimensional mesh to be compressed.

Network 300 transmits the bitstream from encoding device 100 to decoding device 200. Network 300 may be the Internet, a wide area network (WAN), a local area network (LAN), or a combination thereof. Network 300 is not necessarily limited to two-way communication and may be a unidirectional communication network for terrestrial digital broadcasting, satellite broadcasting, or the like.

In addition, network 300 may be replaced with a recording medium such as a DVD (digital versatile disc), a BD (Blu-Ray Disc (registered trademark)), or the like.

Decoding device 200 acquires a bitstream and decodes a three-dimensional mesh from the bitstream. Decoding of the three-dimensional mesh causes information of the three-dimensional mesh to be expanded. For example, decoding device 200 decodes a three-dimensional mesh according to a decoding method corresponding to an encoding method used by encoding device 100 to encode the three-dimensional mesh. In other words, encoding device 100 and decoding device 200 perform encoding and decoding according to an encoding method and a decoding method which correspond to each other.

Note that the three-dimensional mesh before encoding can also be expressed as an original three-dimensional mesh. In addition, the three-dimensional mesh after decoding is also expressed as a reconstructed three-dimensional mesh.

### <Encoding device>

FIG. 5 is a block diagram illustrating a configuration example of encoding device 100 according to the present embodiment. For example, encoding device 100 includes vertex information encoder 101, connection information encoder 102, and attribute information encoder 103.

Vertex information encoder 101 is an electric circuit which encodes vertex information. For example, vertex information encoder 101 encodes vertex information into a bitstream according to a format defined with respect to the vertex information.

Connection information encoder 102 is an electric circuit which encodes connection information. For example, connection information encoder 102 encodes connection information into a bitstream according to a format defined with respect to the connection information.

Attribute information encoder 103 is an electric circuit which encodes attribute information. For example, attribute information encoder 103 encodes attribute information into a bitstream according to a format defined with respect to the attribute information.

Variable-length coding or fixed length coding may be used for encoding vertex information, connection information, and attribute information. The variable-length coding may accommodate Huffman coding, context-adaptive binary arithmetic coding (CABAC), or the like.

Vertex information encoder 101, connection information encoder 102, and attribute information encoder 103 may be integrated. Alternatively, each of vertex information encoder 101, connection information encoder 102, and attribute information encoder 103 may be more finely segmentalized into a plurality of constituent elements.

FIG. 6 is a block diagram illustrating another configuration example of encoding device 100 according to the present embodiment. For example, in addition to the components illustrated in FIG. 5, encoding device 100 includes preprocessor 104 and postprocessor 105.

Preprocessor 104 is an electric circuit which performs processing before encoding of vertex information, connection information, and attribute information. For example, preprocessor 104 may perform transformation processing, demultiplexing, multiplexing, or the like with respect to a three-dimensional mesh before encoding. More specifically, for example, preprocessor 104 may demultiplex vertex information, connection information, and attribute information from the three-dimensional mesh before encoding.

Postprocessor 105 is an electric circuit which performs processing after the encoding of vertex information, connection information, and attribute information. For example, postprocessor 105 may perform transformation processing, demultiplexing, multiplexing, or the like with respect to vertex information, connection information, and attribute information after encoding. More specifically, for example, postprocessor 105 may multiplex vertex information, connection information, and attribute information after encoding into a bitstream. In addition, for example, postprocessor 105 may further perform variable-length coding with respect to vertex information, connection information, and attribute information after the encoding.

### <Decoding device>

FIG. 7 is a block diagram illustrating a configuration example of decoding device 200 according to the present embodiment. For example, decoding device 200 includes vertex information decoder 201, connection information decoder 202, and attribute information decoder 203.

Vertex information decoder 201 is an electric circuit which decodes vertex information. For example, vertex information decoder 201 decodes vertex information from a bitstream according to a format defined with respect to the vertex information.

Connection information decoder 202 is an electric circuit which decodes connection information. For example, connection information decoder 202 decodes connection information from a bitstream according to a format defined with respect to the connection information.

Attribute information decoder 203 is an electric circuit which decodes attribute information. For example, attribute information decoder 203 decodes attribute information from a bitstream according to a format defined with respect to the attribute information.

Variable-length decoding or fixed length decoding may be used for decoding vertex information, connection information, and attribute information. The variable-length decoding may accommodate Huffman coding, context-adaptive binary arithmetic coding (CABAC), or the like.

Vertex information decoder 201, connection information decoder 202, and attribute information decoder 203 may be integrated. Alternatively, each of vertex information decoder 201, connection information decoder 202, and attribute information decoder 203 may be more finely segmentalized into a plurality of constituent elements.

FIG. 8 is a block diagram illustrating another configuration example of decoding device 200 according to the present embodiment. For example, in addition to the components illustrated in FIG. 7, decoding device 200 includes preprocessor 204 and postprocessor 205.

Preprocessor 204 is an electric circuit which performs processing before decoding of vertex information, connection information, and attribute information. For example, preprocessor 204 may perform transformation processing, demultiplexing, multiplexing, or the like with respect to a bitstream before decoding of vertex information, connection information, and attribute information.

More specifically, for example, preprocessor 204 may demultiplex, from a bitstream, a sub-bitstream corresponding to vertex information, a sub-bitstream corresponding to connection information, and a sub-bitstream corresponding to attribute information. In addition, for example, preprocessor 204 may perform variable-length decoding with respect to the bitstream in advance before decoding of vertex information, connection information, and attribute information.

Postprocessor 205 is an electric circuit which performs processing after the decoding of vertex information, connection information, and attribute information. For example, postprocessor 205 may perform transformation processing, demultiplexing, multiplexing, or the like with respect to vertex information, connection information, and attribute information after decoding. More specifically, for example, postprocessor 205 may multiplex vertex information, connection information, and attribute information after decoding into a three-dimensional mesh.

### <Bitstream>

Vertex information, connection information, and attribute information are encoded and stored in a bitstream. A relationship between these pieces of information and the bitstream will be described below.

FIG. 9 is a conceptual diagram illustrating a configuration example of a bitstream according to the present embodiment. In this example, connection information, vertex information, and attribute information are integrated in the bitstream. For example, connection information, vertex information, and attribute information may be included in one file.

In addition, a plurality of portions of the pieces of information may be sequentially stored such as a first portion of connection information, a first portion of vertex information, a first portion of attribute information, a second portion of connection information, a second portion of vertex information, a second portion of attribute information, ... The plurality of portions may correspond to a plurality of temporally different portions, correspond to a plurality of spatially different portions, or correspond to a plurality of different faces.

Furthermore, an order of storage of connection information, vertex information, and attribute information is not limited to the example described above and an order of storage that differs from the above may be used.

FIG. 10 is a conceptual diagram illustrating another configuration example of a bitstream according to the present embodiment. In the example, a plurality of files are included in a bitstream and connection information, vertex information, and attribute information are respectively stored in different files. While a file including connection information, a file including vertex information, and a file including attribute information are illustrated here, storage formats are not limited to this example. For example, two types of information among connection information, vertex information, and attribute information may be included in one file and the one remaining type of information may be included in another file.

Alternatively, the pieces of information can be stored by being divided into a larger number of files. For example, a plurality of portions of connection information may be stored in a plurality of files, a plurality of portions of vertex information may be stored in a plurality of files, and a plurality of portions of attribute information may be stored in a plurality of files. The plurality of portions may correspond to a plurality of temporally different portions, correspond to a plurality of spatially different portions, or correspond to a plurality of different faces.

Furthermore, an order of storage of connection information, vertex information, and attribute information is not limited to the example described above and an order of storage that differs from the above may be used.

FIG. 11 is a conceptual diagram illustrating another configuration example of a bitstream according to the present embodiment. In the example, a bitstream is constituted of a plurality of separable sub-bitstreams and connection information, vertex information, and attribute information are respectively stored in different sub-bitstreams.

While a sub-bitstream including connection information, a sub-bitstream including vertex information, and a sub-bitstream including attribute information are illustrated here, storage formats are not limited to this example.

For example, two types of information among connection information, vertex information, and attribute information may be included in one sub-bitstream and the one remaining type of information may be included in another sub-bitstream. Specifically, attribute information such as a two-dimensional image may be stored in a sub-bitstream conforming to an image coding system separately from a sub-bitstream of connection information and vertex information.

In addition, each sub-bitstream may include a plurality of files. Furthermore, a plurality of portions of connection information may be stored in a plurality of files, a plurality of portions of vertex information may be stored in a plurality of files, and a plurality of portions of attribute information may be stored in a plurality of files.

Furthermore, an order of storage of connection information, vertex information, and attribute information is not limited to the example illustrated in FIG. 9, FIG. 10, and FIG. 11, and an order of storage that differs from this example may be used. For example, vertex information, connection information, and attribute information may be stored in a bitstream in this order. Alternatively, in an order other than this order, e.g., in any of orders: connection information, attribute information, and vertex information; vertex information, attribute information, and connection information; attribute information, connection information, and vertex information; and attribute information, vertex information, and connection information, these pieces of information may be stored in a bitstream.

Furthermore, each of connection information, vertex information, and attribute information may be divided into a plurality of data items, and the plurality of data items may be stored in a bitstream in a periodic order or in a random order.

### <Specific example>

FIG. 12 is a block diagram illustrating a specific example of the encoding/decoding system according to the present embodiment. In FIG. 12, the encoding/decoding system includes three-dimensional data encoding system 110, three-dimensional data decoding system 210, and external connector 310.

Three-dimensional data encoding system 110 includes controller 111, input/output processor 112, three-dimensional data encoder 113, three-dimensional data generator 115, and system multiplexer 114. Three-dimensional data decoding system 210 includes controller 211, input/output processor 212, three-dimensional data decoder 213, system demultiplexer 214, presenter 215, and user interface 216.

In three-dimensional data encoding system 110, sensor data is input from a sensor terminal to three-dimensional data generator 115. Three-dimensional data generator 115 generates three-dimensional data that is point cloud data, mesh data, or the like from the sensor data and inputs the three-dimensional data to three-dimensional data encoder 113.

For example, three-dimensional data generator 115 generates vertex information and generates connection information and attribute information which correspond to the vertex information. Three-dimensional data generator 115 may process vertex information when generating connection information and attribute information. For example, three-dimensional data generator 115 may reduce a data amount by deleting overlapping vertexes or transform vertex information (position shift, rotation, normalization, or the like). In addition, three-dimensional data generator 115 may render attribute information.

While three-dimensional data generator 115 is a constituent element of three-dimensional data encoding system 110 in FIG. 12, three-dimensional data generator 115 may be disposed on the outside independent of three-dimensional data encoding system 110.

For example, a sensor terminal that provides sensor data for generating three-dimensional data may be a mobile object such as an automobile, a flying object such as an airplane, a mobile terminal, a camera, or the like. Alternatively, a range sensor such as LIDAR, a millimeter-wave radar, an infrared sensor, or a range finder, a stereo camera, a combination of a plurality of monocular cameras, or the like may be used as the sensor terminal.

The sensor data may be a distance (position) of an object, a monocular camera image, a stereo camera image, a color, a reflectance, an attitude or an orientation of a sensor, a gyro, a sensing position (GPS information or elevation), a velocity, an acceleration, a time of day of sensing, air temperature, air pressure, humidity, magnetism, or the like.

Three-dimensional data encoder 113 corresponds to encoding device 100 illustrated in FIG. 5 and the like. For example, three-dimensional data encoder 113 encodes three-dimensional data and generates encoded data. In addition, three-dimensional data encoder 113 generates control information when encoding the three-dimensional data. Furthermore, three-dimensional data encoder 113 inputs the encoded data to system multiplexer 114 together with the control information.

The encoding system of three-dimensional data may be an encoding system using geometry or an encoding system using a video codec. In this case, an encoding system using geometry may also be expressed as a geometry-based encoding system. An encoding system using a video codec may also be expressed as a video-based encoding system.

System multiplexer 114 multiplexes encoded data and control information input from three-dimensional data encoder 113 and generates multiplexed data using a prescribed multiplexing system. System multiplexer 114 may multiplex other media such as video, audio, subtitles, application data, or document files, reference time information, or the like together with the encoded data and control information of three-dimensional data. Furthermore, system multiplexer 114 may multiplex attribute information related to sensor data or three-dimensional data.

For example, multiplexed data has a file format for accumulation, a packet format for transmission, or the like. ISOBMFF or an ISOBMFF-based system may be used as an accumulation system or a transmission system. Alternatively, MPEG-DASH, MMT, MPEG-2 TS Systems, RTP, or the like may be used.

In addition, multiplexed data is output as a transmission signal by input/output processor 112 to external connector 310. The multiplexed data may be transmitted as a transmission signal in a wired manner or in a wireless manner. Alternatively, the multiplexed data is accumulated in an internal memory or a storage device. The multiplexed data may be transmitted via the Internet to a cloud server or stored in an external storage device.

For example, the transmission or accumulation of the multiplexed data is performed by a method in accordance with a medium for transmission or accumulation such as broadcasting or communication. As a communication protocol, http, ftp, TCP, UDP, IP, or a combination thereof may be used. In addition, a pull-type communication scheme may be used or a push-type communication scheme may be used.

Ethernet (registered trademark), USB, RS-232C, HDMI (registered trademark), a coaxial cable, or the like may be used for wired transmission. In addition, 3GPP (registered trademark), 3G/4G/5G as specified by IEEE, a wireless LAN, Bluetooth, or a millimeter-wave may be used for wireless transmission. Furthermore, for example, DVB-T2, DVB-S2, DVB-C2, ATSC 3.0, ISDB-S3, or the like may be used as a broadcasting system.

Note that sensor data may be input to three-dimensional data generator 115 or system multiplexer 114. In addition, three-dimensional data or encoded data may be output as-is as a transmission signal to external connector 310 via input/output processor 112. The transmission signal output from three-dimensional data encoding system 110 is input to three-dimensional data decoding system 210 via external connector 310.

In addition, each operation of three-dimensional data encoding system 110 may be controlled by controller 111 which executes application programs.

In three-dimensional data decoding system 210, a transmission signal is input to input/output processor 212. Input/output processor 212 decodes multiplexed data having a file format or a packet format from the transmission signal and inputs the multiplexed data to system demultiplexer 214. System demultiplexer 214 acquires encoded data and control information from the multiplexed data and inputs the encoded data and the control information to three-dimensional data decoder 213. System demultiplexer 214 may extract other media, reference time information, or the like from the multiplexed data.

Three-dimensional data decoder 213 corresponds to decoding device 200 illustrated in FIG. 7 and the like. For example, three-dimensional data decoder 213 decodes three-dimensional data from the encoded data based on an encoding system specified in advance. Subsequently, the three-dimensional data is presented to a user by presenter 215.

In addition, additional information such as sensor data may be input to presenter 215. Presenter 215 may present three-dimensional data based on the additional information. In addition, an instruction by the user may be input to user interface 216 from a user terminal. Furthermore, presenter 215 may present three-dimensional data based on the input instruction.

Note that input/output processor 212 may acquire three-dimensional data and encoded data from external connector 310.

In addition, each operation of three-dimensional data decoding system 210 may be controlled by controller 211 which executes application programs.

FIG. 13 is a conceptual diagram illustrating a configuration example of point cloud data according to the present embodiment. Point cloud data refers to data of a point cloud that indicates a three-dimensional object.

Specifically, a point cloud is constituted of a plurality of points and has position information which indicates a three-dimensional coordinate position of each point and attribute information which indicates an attribute of each point. The position information is also expressed as geometry.

For example, a type of attribute information may be a color, a reflectance, or the like. Attribute information related to one type may be associated with one point, attribute information related to a plurality of different types may be associated with one point, or attribute information having a plurality of values with respect to a same type may be associated with one point.

FIG. 14 is a conceptual diagram illustrating a data file example of the point cloud data according to the present embodiment. The example is an example of a case where items of position information and items of attribute information have a one-to-one correspondence and the example indicates position information and attribute information of N-number of points which constitute the point cloud data. In this example, position information is information indicating a three-dimensional coordinate position by three axes of x, y, and z and attribute information is information indicating a color by RGB. As a representative data file of point cloud data, a PLY file or the like can be used.

FIG. 15 is a conceptual diagram illustrating a configuration example of mesh data according to the present embodiment. Mesh data is data used in CG (computer graphics) or the like and is data of a three-dimensional mesh which represents a three-dimensional shape of an object by a plurality of faces. Each face is also expressed as a polygon and has a polygonal shape such as a triangle or a quadrilateral.

Specifically, in addition to the plurality of points which constitute a point cloud, a three-dimensional mesh is constituted of a plurality of edges and a plurality of faces. Each point is also expressed as a vertex or a position. Each edge corresponds to a line segment which connects two vertexes. Each face corresponds to an area enclosed by three or more edges.

In addition, a three-dimensional mesh has position information indicating three-dimensional coordinate positions of vertexes. The position information is also expressed as vertex information or geometry. Furthermore, a three-dimensional mesh has connection information indicating a relationship among a plurality of vertexes constituting an edge or a face. The connection information is also expressed as connectivity. In addition, a three-dimensional mesh has attribute information indicating an attribute with respect to a vertex, an edge, or a face. The attribute information in a three-dimensional mesh is also expressed as a texture.

For example, attribute information may indicate a color, a reflectance, or a normal vector with respect to a vertex, an edge, or a face. An orientation of a normal vector can express a front and a rear of a face.

An object file or the like may be used as a data file format of mesh data.

FIG. 16 is a conceptual diagram illustrating a data file example of the mesh data according to the present embodiment. In the example, a data file includes pieces of position information G(1) to G(N) and pieces of attribute information A1(1) to A1(N) of N-number of vertexes which constitute a three-dimensional mesh. In addition, in the example, M-number of pieces of attribute information A2(1) to A2(M) are included. An item of attribute information need not correspond one-to-one to a vertex and need not correspond one-to-one to a face. In addition, attribute information need not exist.

Connection information is indicated by a combination of indexes of vertexes. n [1, 3, 4] indicates a face of a triangle constituted of three vertexes n = 1, n = 3, and n = 4. In addition, m [2, 4, 6] indicates that pieces of attribute information m = 2, m = 4, and m = 6 respectively correspond to the three vertexes.

In addition, a substantive content of the attribute information may be described in a separate file. Furthermore, a pointer with respect to the content may be associated with a vertex, a face, or the like. For example, attribute information indicating an image with respect to a face may be stored in a two-dimensional attribute map file. In addition, a file name of the attribute map and a two-dimensional coordinate value in the attribute map may be described in pieces of attribute information A2(1) to A2(M). Methods of designating attribute information with respect to a face are not limited to these methods and any kind of method may be used.

FIG. 17 is a conceptual diagram illustrating a type of three-dimensional data according to the present embodiment. Point cloud data and mesh data may either indicate a static object or a dynamic object. A static object is an object that does not temporally change and a dynamic object is an object that temporally changes. A static object may correspond to three-dimensional data with respect to an arbitrary time point.

For example, point cloud data with respect to an arbitrary time point may be expressed as a PCC frame. In addition, mesh data with respect to an arbitrary time point may be expressed as a mesh frame. Furthermore, a PCC frame and a mesh frame may be simply expressed as a frame.

In addition, an area of an object may be limited to a certain range in a similar manner to ordinary video data or need not be limited in a similar manner to map data. Furthermore, a density of points or faces may be set in various ways. Sparse point cloud data or sparse mesh data may be used or dense point cloud data or dense mesh data may be used.

Next, encoding and decoding of a point cloud or a three-dimensional mesh will be described. A device, processing, or a syntax for encoding and decoding vertex information of a three-dimensional mesh according to the present disclosure may be applied to the encoding and decoding of a point cloud. A device, processing, or a syntax for encoding and decoding a point cloud according to the present disclosure may be applied to the encoding and decoding of vertex information of a three-dimensional mesh.

In addition, a device, processing, or a syntax for encoding and decoding attribute information of a point cloud according to the present disclosure may be applied to the encoding and decoding of connection information or attribute information of a three-dimensional mesh. Furthermore, a device, processing, or a syntax for encoding and decoding connection information or attribute information of a three-dimensional mesh according to the present disclosure may be applied to the encoding and decoding of attribute information of a point cloud.

Furthermore, at least a part of processing may be commonalized between the encoding and decoding of point cloud data and the encoding and decoding of mesh data. Accordingly, sizes of circuits and software programs can be suppressed.

FIG. 18 is a block diagram illustrating a configuration example of three-dimensional data encoder 113 according to the present embodiment. In this example, three-dimensional data encoder 113 includes vertex information encoder 121, attribute information encoder 122, metadata encoder 123, and multiplexer 124. Vertex information encoder 121, attribute information encoder 122, and multiplexer 124 may correspond to vertex information encoder 101, attribute information encoder 103, postprocessor 105, and the like illustrated in FIG. 6.

In addition, in this example, three-dimensional data encoder 113 encodes three-dimensional data according to a geometry-based encoding system. Encoding according to the geometry-based encoding system takes a three-dimensional structure into consideration. Furthermore, in encoding according to the geometry-based encoding system, attribute information is encoded using configuration information obtained during encoding of vertex information.

Specifically, first, vertex information, attribute information, and metadata included in three-dimensional data generated from sensor data are respectively input to vertex information encoder 121, attribute information encoder 122, and metadata encoder 123. In this case, connection information included in three-dimensional data may be handled in a similar manner to attribute information. In addition, in the case of point cloud data, position information may be handled as vertex information.

Vertex information encoder 121 encodes vertex information into compressed vertex information and outputs the compressed vertex information to multiplexer 124 as encoded data. In addition, vertex information encoder 121 generates metadata of the compressed vertex information and outputs the metadata to multiplexer 124. Furthermore, vertex information encoder 121 generates configuration information and outputs the configuration information to attribute information encoder 122.

Attribute information encoder 122 encodes attribute information into compressed attribute information using the configuration information generated by vertex information encoder 121 and outputs the compressed attribute information to multiplexer 124 as encoded data. In addition, attribute information encoder 122 generates metadata of the compressed attribute information and outputs the metadata to multiplexer 124.

Metadata encoder 123 encodes compressible metadata into compressed metadata and outputs the compressed metadata to multiplexer 124 as encoded data. The metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 19 is a block diagram illustrating a configuration example of three-dimensional data decoder 213 according to the present embodiment. In this example, three-dimensional data decoder 213 includes vertex information decoder 221, attribute information decoder 222, metadata decoder 223, and demultiplexer 224. Vertex information decoder 221, attribute information decoder 222, and demultiplexer 224 may correspond to vertex information decoder 201, attribute information decoder 203, preprocessor 204, and the like illustrated in FIG. 8.

In addition, in this example, three-dimensional data decoder 213 decodes three-dimensional data according to a geometry-based encoding system. Decoding according to the geometry-based encoding system takes a three-dimensional structure into consideration. Furthermore, in decoding according to the geometry-based encoding system, attribute information is decoded using configuration information obtained during decoding of vertex information.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information and the metadata of the compressed vertex information are input to vertex information decoder 221. The compressed attribute information and the metadata of the compressed attribute information are input to attribute information decoder 222. The metadata is input to metadata decoder 223.

Vertex information decoder 221 decodes vertex information from the compressed vertex information using the metadata of the compressed vertex information. In addition, vertex information decoder 221 generates configuration information and outputs the configuration information to attribute information decoder 222. Attribute information decoder 222 decodes attribute information from the compressed attribute information using the configuration information generated by vertex information decoder 221 and the metadata of the compressed attribute information. Metadata decoder 223 decodes metadata from the compressed metadata. The metadata decoded by metadata decoder 223 may be used to decode vertex information and to decode attribute information.

Subsequently, the vertex information, the attribute information, and the metadata are output from three-dimensional data decoder 213 as three-dimensional data. For example, the metadata is metadata of vertex information and attribute information and can be used in an application program.

FIG. 20 is a block diagram illustrating another configuration example of three-dimensional data encoder 113 according to the present embodiment. In this example, three-dimensional data encoder 113 includes vertex image generator 131, attribute image generator 132, metadata generator 133, video encoder 134, metadata encoder 123, and multiplexer 124. Vertex image generator 131, attribute image generator 132, and video encoder 134 may correspond to vertex information encoder 101, attribute information encoder 103, and the like illustrated in FIG. 6.

In addition, in this example, three-dimensional data encoder 113 encodes three-dimensional data according to a video-based encoding system. In encoding according to the video-based encoding system, a plurality of two-dimensional images are generated from three-dimensional data and the plurality of two-dimensional images are encoded according to a video encoding system. In this case, the video encoding system may be HEVC (high efficiency video coding), VVC (versatile video coding), or the like.

Specifically, first, vertex information and attribute information included in three-dimensional data generated from sensor data are input to metadata generator 133. In addition, the vertex information and the attribute information are respectively input to vertex image generator 131 and attribute image generator 132. Furthermore, the metadata included in the three-dimensional data is input to metadata encoder 123. In this case, connection information included in three-dimensional data may be handled in a similar manner to attribute information. In addition, in the case of point cloud data, position information may be handled as vertex information.

Metadata generator 133 generates map information of a plurality of two-dimensional images from the vertex information and the attribute information. In addition, metadata generator 133 inputs the map information into vertex image generator 131, attribute image generator 132, and metadata encoder 123.

Vertex image generator 131 generates a vertex image based on the vertex information and the map information and inputs the vertex image into video encoder 134. Attribute image generator 132 generates an attribute image based on the attribute information and the map information and inputs the attribute image into video encoder 134.

Video encoder 134 respectively encodes the vertex image and the attribute image into compressed vertex information and compressed attribute information according to the video encoding system and outputs the compressed vertex information and the compressed attribute information to multiplexer 124 as encoded data. In addition, video encoder 134 generates metadata of the compressed vertex information and metadata of the compressed attribute information and outputs the pieces of metadata to multiplexer 124.

Metadata encoder 123 encodes compressible metadata into compressed metadata and outputs the compressed metadata to multiplexer 124 as encoded data. Compressible metadata includes map information. In addition, the metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 21 is a block diagram illustrating another configuration example of three-dimensional data decoder 213 according to the present embodiment. In this example, three-dimensional data decoder 213 includes vertex information generator 231, attribute information generator 232, video decoder 234, metadata decoder 223, and demultiplexer 224. Vertex information generator 231, attribute information generator 232, and video decoder 234 may correspond to vertex information decoder 201, attribute information decoder 203, and the like illustrated in FIG. 8.

In addition, in this example, three-dimensional data decoder 213 decodes three-dimensional data according to a video-based encoding system. In decoding according to the video-based encoding system, a plurality of two-dimensional images are decoded according to a video encoding system and three-dimensional data is generated from the plurality of two-dimensional images. In this case, the video encoding system may be HEVC (high efficiency video coding), VVC (versatile video coding), or the like.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information, the metadata of the compressed vertex information, the compressed attribute information, and the metadata of the compressed attribute information are input to video decoder 234. The compressed metadata is input to metadata decoder 223.

Video decoder 234 decodes a vertex image according to the video encoding system. In doing so, video decoder 234 decodes the vertex image from the compressed vertex information using the metadata of the compressed vertex information. In addition, video decoder 234 inputs the vertex image into vertex information generator 231. Furthermore, video decoder 234 decodes an attribute image according to the video encoding system. In doing so, video decoder 234 decodes the attribute image from the compressed attribute information using the metadata of the compressed attribute information. In addition, video decoder 234 inputs the attribute image into attribute information generator 232.

Metadata decoder 223 decodes metadata from the compressed metadata. The metadata decoded by metadata decoder 223 includes map information to be used to generate vertex information and to generate attribute information. In addition, the metadata decoded by metadata decoder 223 may be used to decode the vertex image and to decode the attribute image.

Vertex information generator 231 reproduces vertex information from the vertex image according to the map information included in the metadata decoded by metadata decoder 223. Attribute information generator 232 reproduces attribute information from the attribute image according to the map information included in the metadata decoded by metadata decoder 223.

Subsequently, the vertex information, the attribute information, and the metadata are output from three-dimensional data decoder 213 as three-dimensional data. For example, the metadata is metadata of vertex information and attribute information and can be used in an application program.

FIG. 22 is a conceptual diagram illustrating a specific example of encoding processing according to the present embodiment. FIG. 22 illustrates three-dimensional data encoder 113 and description encoder 148. In this example, three-dimensional data encoder 113 includes two-dimensional data encoder 141 and mesh data encoder 142. Two-dimensional data encoder 141 includes texture encoder 143. Mesh data encoder 142 includes vertex information encoder 144 and connection information encoder 145.

Vertex information encoder 144, connection information encoder 145, and texture encoder 143 may correspond to vertex information encoder 101, connection information encoder 102, attribute information encoder 103, and the like illustrated in FIG. 6.

For example, two-dimensional data encoder 141 operates as texture encoder 143 and generates a texture file by encoding a texture corresponding to attribute information as two-dimensional data according to an image encoding system or a video encoding system.

In addition, mesh data encoder 142 operates as vertex information encoder 144 and connection information encoder 145 and generates a mesh file by encoding vertex information and connection information. Mesh data encoder 142 may further encode mapping information with respect to a texture. The encoded mapping information may be included in a mesh file.

In addition, description encoder 148 generates a description file by encoding a description corresponding to metadata such as text data. Description encoder 148 may encode a description in the system layer. For example, description encoder 148 may be included in system multiplexer 114 illustrated in FIG. 12.

Due to the operation described above, a bitstream including a texture file, a mesh file, and a description file is generated. The files may be multiplexed in the bitstream in a file format such as gITF (graphics language transmission format) or USD (universal scene description).

Note that three-dimensional data encoder 113 may include two mesh data encoders as mesh data encoder 142. For example, one mesh data encoder encodes vertex information and connection information of a static three-dimensional mesh and the other mesh data encoder encodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter-prediction. In addition, as information of the dynamic three-dimensional mesh, difference information between vertex information or connection information of the intra-frame three-dimensional mesh and vertex information or connection information of the inter-frame three-dimensional mesh may be used.

FIG. 23 is a conceptual diagram illustrating a specific example of decoding processing according to the present embodiment. FIG. 23 illustrates three-dimensional data decoder 213, description decoder 248, and presenter 247. In this example, three-dimensional data decoder 213 includes two-dimensional data decoder 241, mesh data decoder 242, and mesh reconstructor 246. Two-dimensional data decoder 241 includes texture decoder 243. Mesh data decoder 242 includes vertex information decoder 244 and connection information decoder 245.

Vertex information decoder 244, connection information decoder 245, texture decoder 243, and mesh reconstructor 246 may correspond to vertex information decoder 201, connection information decoder 202, attribute information decoder 203, postprocessor 205, and the like illustrated in FIG. 8. Presenter 247 may correspond to presenter 215 and the like illustrated in FIG. 12.

For example, two-dimensional data decoder 241 operates as texture decoder 243 and decodes a texture corresponding to attribute information from a texture file as two-dimensional data according to an image encoding system or a video encoding system.

In addition, mesh data decoder 242 operates as vertex information decoder 244 and connection information decoder 245 and decodes vertex information and connection information from a mesh file. Mesh data decoder 242 may further decode mapping information with respect to a texture from the mesh file.

Furthermore, description decoder 248 decodes a description corresponding to metadata such as text data from a description file. Description decoder 248 may decode a description in the system layer. For example, description decoder 248 may be included in system demultiplexer 214 illustrated in FIG. 12.

Mesh reconstructor 246 reconstructs a three-dimensional mesh from vertex information, connection information, and a texture according to a description. Presenter 247 renders and outputs the three-dimensional mesh according to the description.

Due to the operation described above, a three-dimensional mesh is reconstructed and output from a bitstream including a texture file, a mesh file, and a description file.

Note that three-dimensional data decoder 213 may include two mesh data decoders as mesh data decoder 242. For example, one mesh data decoder decodes vertex information and connection information of a static three-dimensional mesh and the other mesh data decoder decodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter-prediction. In addition, as information of the dynamic three-dimensional mesh, difference information between vertex information or connection information of the intra-frame three-dimensional mesh and vertex information or connection information of the inter-frame three-dimensional mesh may be used.

An encoding system of a dynamic three-dimensional mesh may be called DMC (dynamic mesh coding). In addition, a video-based encoding system of a dynamic three-dimensional mesh may be called VDMC (video-based dynamic mesh coding).

An encoding system of a point cloud may be called PCC (point cloud compression). A video-based encoding system of a point cloud may be called V-PCC (video-based point cloud compression). In addition, a geometry-based encoding system of a point cloud may be called G-PCC (geometry-based point cloud compression).

### <Implementation example>

FIG. 24 is a block diagram illustrating an implementation example of encoding device 100 according to the present embodiment. Encoding device 100 includes circuit 151 and memory 152. For example, a plurality of constituent elements of encoding device 100 illustrated in FIG. 5 and the like are implemented by circuit 151 and memory 152 illustrated in FIG. 24.

Circuit 151 is a circuit which performs information processing and which is capable of accessing memory 152. For example, circuit 151 is a dedicated or general-purpose electric circuit which encodes a three-dimensional mesh. Circuit 151 may be a processor such as a CPU. Alternatively, circuit 151 may be a set of a plurality of electric circuits.

Memory 152 is a dedicated or general-purpose memory that stores information used by circuit 151 to encode a three-dimensional mesh. Memory 152 may be an electric circuit and may be connected to circuit 151. In addition, memory 152 may be included in circuit 151. Alternatively, memory 152 may be a set of a plurality of electric circuits. Furthermore, memory 152 may be a magnetic disk, an optical disk, or the like or may be expressed as a storage, a recording medium, or the like. In addition, memory 152 may be a non-volatile memory or a volatile memory.

For example, memory 152 may store a three-dimensional mesh or a bitstream. In addition, memory 152 may store a program used by circuit 151 to encode a three-dimensional mesh.

Note that in encoding device 100, all of the plurality of constituent elements illustrated in FIG. 5 and the like need not be implemented and all of the plurality of processing steps described herein need not be performed. A part of the plurality of constituent elements illustrated in FIG. 5 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in encoding device 100.

FIG. 25 is a block diagram illustrating an implementation example of decoding device 200 according to the present embodiment. Decoding device 200 includes circuit 251 and memory 252. For example, a plurality of constituent elements of decoding device 200 illustrated in FIG. 7 and the like are implemented by circuit 251 and memory 252 illustrated in FIG. 25.

Circuit 251 is a circuit which performs information processing and which is capable of accessing memory 252. For example, circuit 251 is a dedicated or general-purpose electric circuit which decodes a three-dimensional mesh. Circuit 251 may be a processor such as a CPU. Alternatively, circuit 251 may be a set of a plurality of electric circuits.

Memory 252 is a dedicated or general-purpose memory that stores information used by circuit 251 to decode a three-dimensional mesh. Memory 252 may be an electric circuit and may be connected to circuit 251. In addition, memory 252 may be included in circuit 251. Alternatively, memory 252 may be a set of a plurality of electric circuits. Furthermore, memory 252 may be a magnetic disk, an optical disk, or the like or may be expressed as a storage, a recording medium, or the like. In addition, memory 252 may be a non-volatile memory or a volatile memory.

For example, memory 252 may store a three-dimensional mesh or a bitstream. In addition, memory 252 may store a program used by circuit 251 to decode a three-dimensional mesh.

Note that in decoding device 200, all of the plurality of constituent elements illustrated in FIG. 7 and the like need not be implemented and all of the plurality of processing steps described herein need not be performed. A part of the plurality of constituent elements illustrated in FIG. 7 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in decoding device 200.

An encoding method and a decoding method including steps performed by each constituent element of encoding device 100 and decoding device 200 according to the present disclosure may be executed by any device or system. For example, a part of or all of the encoding method and the decoding method may be executed by a computer including a processor, a memory, an input/output circuit, and the like. In doing so, the encoding method and the decoding method may be executed by having the computer execute a program that enables the computer to execute the encoding method and the decoding method.

In addition, a program or a bitstream may be recorded on a non-transitory computer-readable recording medium such as a CD-ROM.

An example of a program may be a bitstream. For example, a bitstream including an encoded three-dimensional mesh includes a syntax element that enables decoding device 200 to decode the three-dimensional mesh. In addition, the bitstream causes decoding device 200 to decode the three-dimensional mesh according to the syntax element included in the bitstream. Therefore, a bitstream can perform a similar role to a program.

The bitstream described above may be an encoded bitstream including an encoded three-dimensional mesh or a multiplexed bitstream including an encoded three-dimensional mesh and other information.

In addition, each constituent element of encoding device 100 and decoding device 200 may be constituted of dedicated hardware, general-purpose hardware which executes the program or the like described above, or a combination thereof. Furthermore, the general-purpose hardware may be constituted of a memory on which a program is recorded, a general-purpose processor which reads the program from the memory and executes the program, and the like. In this case, the memory may be a semiconductor memory, a hard disk, or the like and the general-purpose processor may be a CPU or the like.

Furthermore, the dedicated hardware may be constituted of a memory, a dedicated processor, and the like. For example, the dedicated processor may execute the encoding method and the decoding method by referring to a memory for recording data.

In addition, as described above, the respective constituent elements of encoding device 100 and decoding device 200 may be electric circuits. The electric circuits may constitute one electric circuit as a whole or may be respectively different electric circuits. Furthermore, the electric circuits may correspond to dedicated hardware or to general-purpose hardware which executes the program or the like described above. Moreover, encoding device 100 and decoding device 200 may be implemented as integrated circuits.

In addition, encoding device 100 may be a transmitting device which transmits a three-dimensional mesh. Decoding device 200 may be a receiving device which receives a three-dimensional mesh.

### <Encoding and decoding of displacement>

The following terms will be used here as examples.

### (1) Image

An image is a data unit constituted of a set of pixels. An image includes a picture or blocks, which are smaller than a picture. Images include a still image in addition to a moving image.

### (2) Picture

A picture is an image processing unit constituted of a set of pixels. A picture will also be referred to as a frame or a field.

### (3) Block

A block is a processing unit constituted of a set of a particular number of pixels. For a block, the terms shown as the following examples are also used. The shapes of blocks are not particularly limited. Examples of blocks can include a rectangle shape of M × N pixels or a square shape of M × M pixels. The examples of blocks may also include a triangular shape, a circular shape, and other shapes. Examples of blocks are as follows.

- Slice, tile, or brick
- CTU, super block, or basic dividing unit
- VPDU, processing dividing unit for hardware
- CU, processing block unit, prediction block unit (PU), or orthogonal transform block unit (TU)
- Sub-block

### (4) Pixel or sample

A pixel or a sample is the smallest point of an image, in other words, the smallest unit. Pixels or samples include not only a pixel at an integer position but also a pixel at a sub-pixel position that is generated based on a pixel at an integer position.

### (5) Pixel value or sample value

A pixel value or a sample value is an eigen value of a pixel. Pixel values or sample values include a luma value, a chroma value, and an RGB gradation level. Pixel values or sample values can also include a depth value or a binary value of 0 or 1.

### (6) Flag

A flag indicates one or more bits. A flag is, for example, a parameter or an index represented by two or more bits. A flag may indicate not only a value represented by a binary number but also a value represented by a numerical value other than a binary number.

### (7) Signal

A signal is one that is symbolized or encoded to convey information. Signals include a discrete digital signal and an analog signal that takes a continuous value.

### (8) Stream or bitstream

A stream or a bitstream is a digital data string indicating a digital data flow. A stream or a bitstream may be one stream or may be constituted of a plurality of streams having a plurality of hierarchical layers. A stream or a bitstream may be transmitted in serial communication using a single transmission path or may be transmitted in packet communication using a plurality of transmission paths.

### (9) Difference

In the case of scalar quantities, a difference can include a simple difference (x - y) and a difference calculation. Differences can include an absolute value of a difference (|x - y|), a squared difference (x^2 - y^2), a square root of a difference (√(x - y)), a weighted difference (ax - by: a and b are constants), or an offset difference (x - y + a: a is an offset).

### (10) Sum

In the case of scalar quantities, sums can include a simple sum (x + y) and a sum calculation. Sums include an absolute value of a sum (|x + y|), a squared sum (x^2 + y^2), a square root of a sum (√(x + y)), a weighted sum (ax + by: a and b are constants), and an offset sum (x + y + a: a is an offset).

### (11) "Based on"

The phrase "based on something" means that a thing other than the "something" may be taken into consideration. In addition, the term "based on" may be used in a case where a direct result is obtained or a case where a result is obtained through an interim result.

### (12) "Used" or "using"

The phrase "something is used" or "using something" means that a thing other than the "something" may be taken into consideration. In addition, the term "used" or "using" may be used in a case where a direct result is obtained or a case where a result is obtained through an interim result.

### (13) Prohibit, forbid

The term "prohibit" or "forbid" can be rephrased as "does not permit" or "does not allow." In addition, the phrase "being not prohibited/forbidden" or "being permitted/allowed" does not always mean "obligation."

### (14) "Limit", or "restriction/restrict/restricted"

The term "limit" or "restriction/restrict/restricted" can be rephrased as "does not permit/allow" or "being not permitted/allowed." In addition, the phrase "being prohibited/forbidden," "being not prohibited/forbidden," "being not permitted/allowed," or "being permitted/allowed" does not always mean "obligation." Furthermore, part of something may be prohibited/forbidden quantitatively or qualitatively, or something may be fully prohibited/forbidden quantitatively or qualitatively.

### (15) Chroma

Chroma is an adjective that is represented by the symbols Cb and Cr, specifying that a sample array or a single sample represents one of two color difference signals related to primary colors. The term chroma may be used instead of the term chrominance.

### (16) Luma

Luma is an adjective that is represented by the symbol or subscript Y or L, specifying that a sample array or a single sample represents a monochrome signal related to primary colors. The term luma may be used instead of the term luminance.

Hereinafter, an encoding/decoding system of the present embodiment will be described.

A generic three-dimensional model (also referred to as a 3D model) represents an object digitally such that a user can explorer a model using zooming, panning, and rotation in all three dimensions while rendering it temporally. One way to construct such a representation is to construct a 3D mesh using triangles. The model stores the positions of the vertices of each triangle, connectivity of the vertices of the triangle with each other, and the attributes associated therewith (such as a normal, UV patches, etc.).

Storing all of these types of information in an uncompressed form needs very large storage space, which in turn needs a very large bandwidth for transmission. The triangles forming the mesh often have a repetitive pattern and similar attributes especially in the temporal and spatial neighborhood. The repetition can be used to formulate an efficient encoding and decoding method for storage and transmission. One such encoding and decoding method is Video-based Dynamic Mesh Coding (V-DMC).

FIG. 26 is a block diagram illustrating another configuration example of the encoding/decoding system according to the present embodiment. As illustrated in FIG. 26, the encoding/decoding system includes encoding device 100 and decoding device 200.

The encoding/decoding system receives a three-dimensional mesh (also referred to as a 3D mesh) that is input in the form of three-dimensional coordinates (vertex information), connectivity (connection information), and associated attributes (attribute information) of vertices. Note that the 3D mesh can include not only geometry but also a texture map.

Encoding device 100 takes in the 3D mesh that has been input (also referred to as an input 3D mesh or an input mesh) in the form of the vertices' three-dimensional coordinates, connectivity, and associated attributes. Encoding device 100 is responsible for encoding all related information into a stream. The stream may include a single bitstream or a plurality of bitstreams.

Network 300 transmits the stream generated by the encoding device to decoding device 200. Network 300 may be the Internet, a wide area network (WAN), a local area network (LAN), or any combination of these networks. Network 300 is not always limited to a bidirectional communication network. Network 300 may be a unidirectional communication network that transmits broadcast waves of digital terrestrial broadcasting, satellite broadcasting, or the like. Alternatively, network 300 may be replaced by a recording medium such as a Digital Versatile Disc (DVD), a Blue-Ray Disc (BD), or the like on which the stream is recorded.

The stream is transmitted to decoding device 200 through network 300. Decoding device 200 decodes the bitstream to produce a three-dimensional mesh using the decoded vertices' three-dimensional coordinates, connectivity, and associated attributes. Decoding device 200 outputs the produced three-dimensional mesh (also referred to as an output 3D mesh or an output mesh).

FIG. 27 is a diagram illustrating another configuration example of encoding device 100.

As illustrated in FIG. 27, encoding device 100 includes preprocessor 1103 and compressor 1106.

Encoding device 100 reads input mesh 1101 and attribute map 1102 and passes them to preprocessor 1103. Preprocessor 1103 processes the input mesh to extract base mesh 1104 and displacement data 1105. Attribute map 1102 along with base mesh 1104 and displacement data 1105 having been extracted are passed to compressor 1106.

Compressor 1106 compresses base mesh 1104, displacement data 1105, and attribute map 1102 to generate bitstream 1107. Compressor 1106 can additionally include metadata 1108 in bitstream 1107 to send the supplementary information to decoding device 200.

FIG. 28 is a diagram illustrating another configuration example of decoding device 200.

As illustrated in FIG. 28, decoding device 200 includes decompressor 2102 and postprocessor 2106.

Decoding device 200 reads bitstream 2101 and passes it to decompressor 2102. Decompressor 2102 decompresses base mesh 2103, displacement data 2104, and attribute map 2108 from bitstream 2101 and passes them to postprocessor 2106. One example of displacement data 2104 is displacement vectors.

Postprocessor 2106 processes base mesh 2103 as per displacement data 2104 and attribute map 2108 to produce output mesh 2107. Postprocessor 2106 may additionally use information from metadata 2105 to produce output mesh 2107.

Hereinafter, details of the configuration of encoding device 100 will be described.

FIG. 29 is a block diagram illustrating a detailed configuration example of encoding device 100.

As illustrated in FIG. 29, encoding device 100 includes decimator 1201, quantizer 1202, base mesh encoder 1203, base mesh decoder 1204, inverse quantizer 1205, subdivider 1206, displacement vector calculator 1207, wavelet transformer 1208, quantizer 1209, image packer 1210, video encoder 1211, color converter 1212, video encoder 1213, and multiplexer 1214.

Decimator 1201 acquires a mesh that is input into encoding device 100 (equivalent to input mesh 1101) as an original mesh and performs a decimating process (in other words, a thinning-out process) on the acquired original mesh to produce a base mesh. The decimating process is a process of deleting (in other words, thinning out) some of vertices included in the original mesh. The decimating process may include a process of changing the positions of at least some of the vertices included in the original mesh or may include a process of changing the connectivity of at least some of the vertices included in the original mesh. The decimating process will also be referred to simply as decimating.

The base mesh produced through the decimating process is a mesh including fewer vertices than the original mesh. The vertices of the base mesh may be positioned differently from the vertices of the original mesh. In addition, the connectivity of the vertices of the base mesh may be different from the connectivity of the vertices of the original mesh. Decimator 1201 provides the produced base mesh to quantizer 1202.

Quantizer 1202 quantizes the base mesh produced by decimator 1201. Quantizer 1202 provides the quantized base mesh to base mesh encoder 1203.

Base mesh encoder 1203 encodes the base mesh quantized by quantizer 1202 into a bitstream (also referred to as a base mesh bitstream) (in other words, generates the base mesh bitstream). Base mesh encoder 1203 provides the base mesh bitstream to base mesh decoder 1204 and multiplexer 1214.

Base mesh decoder 1204 decodes the base mesh bitstream provided from base mesh encoder 1203 to acquire the quantized base mesh. Base mesh decoder 1204 provides the quantized base mesh to inverse quantizer 1205.

Inverse quantizer 1205 inverse quantizes the quantized base mesh provided from base mesh decoder 1204 to produce the base mesh (also referred to as a decoded base mesh). Inverse quantizer 1205 provides the decoded base mesh to subdivider 1206. The processes of quantization and inverse quantization may make the decoded base mesh produced by inverse quantizer 1205 different from the base mesh produced by decimator 1201.

Subdivider 1206 performs a subdivision process on the decoded base mesh produced by inverse quantizer 1205. The subdivision process can be a process of subdividing each face included in the decoded base mesh to segmentalize the face. Subdivider 1206 provides the subdivided, decoded base mesh to displacement vector calculator 1207.

Specifically, subdivider 1206 subdivides a mesh by generating a new vertex between two vertices that are included in the mesh and connected to each other. Repeating the generation of new vertex can increase the number of the vertices included in the mesh to a predetermined number. The iteration of the subdivision over the entire mesh (in other words, the plurality of executions of the subdivision) generates a plurality of levels of detail (LoD) layers.

Displacement vector calculator 1207 acquires the original mesh acquired by encoding device 100 and acquires, from subdivider 1206, the subdivided, decoded base mesh. Displacement vector calculator 1207 calculates vectors from the vertices of the subdivided, decoded base mesh to the vertices, faces, or edges of the original mesh, as displacement vectors. Displacement vector calculator 1207 provides the displacement vectors to wavelet transformer 1208.

Wavelet transformer 1208 performs a wavelet transforming process on the displacement vectors calculated by displacement vector calculator 1207 to acquire wavelet coefficients. Wavelet transformer 1208 provides the wavelet coefficients to quantizer 1209. In the wavelet transformation, wavelet transformer 1208 assigns the vertices to a plurality of LoD layers and applies, for example, the lifting scheme to the displacement vectors of the vertices. Wavelet transformer 1208 can thus calculate wavelet coefficients representing various components from low-frequency components to high-frequency components.

Quantizer 1209 quantizes the wavelet coefficients acquired by wavelet transformer 1208. Quantizer 1209 can quantize the wavelet coefficients for each LoD layer. Quantizer 1209 provides the quantized wavelet coefficients to image packer 1210.

Image packer 1210 generates an image containing the wavelet coefficients quantized by quantizer 1209. Image packer 1210 can generate the image by mapping the wavelet coefficients quantized by quantizer 1209 onto pixels in a two-dimensional image format. Image packer 1210 provides the generated image to video encoder 1211. In the process of mapping the quantized wavelet coefficients onto the pixels in the two-dimensional image format, mapping information that represents the assignment of the quantized wavelet coefficients to the pixels in the two-dimensional image format can be used.

Video encoder 1211 encodes the image generated by image packer 1210 into a bitstream (also referred to as a displacement bitstream) (in other words, generates the displacement bitstream). Video encoder 1211 provides the displacement bitstream to multiplexer 1214. The displacement bitstream can be a bitstream including displacement information in the form of an image. The format of the image can be, for example, a format including two items of chroma information and one item of luma information.

Color converter 1212 acquires an attribute map acquired by encoding device 100 as an original attribute map and performs a color converting process on the original attribute map. The color converting process can include a process of converting a representation form of color or a color space. Color converter 1212 provides the attribute map subjected to the color converting process to video encoder 1213. Note that although here is described the case where the original attribute map is input into color converter 1212 by way of example, the feature map may be converted in accordance with the structure of the decoded mesh in the case where the decoded mesh differs from the original mesh in the number or positions of the vertices.

Video encoder 1213 encodes the attribute map converted by color converter 1212 into a bitstream (also referred to as an attribute bitstream) (in other words, generates the attribute bitstream). Video encoder 1213 provides the attribute bitstream to multiplexer 1214.

Multiplexer 1214 acquires the base mesh bitstream from base mesh encoder 1203, acquires the displacement bitstream from video encoder 1211, acquires the attribute bitstream from video encoder 1213, and multiplexes these bitstreams to generate and output a compressed bitstream. Outputting the compressed bitstream by multiplexer 1214 can be equivalent to outputting of the bitstream by encoding device 100.

Note that the process of encoding the wavelet coefficients into the displacement bitstream, which is executed by image packer 1210 and video encoder 1211, may be performed through an arithmetic encoding process. In addition, encoding device 100 may be configured to be capable of selecting whether the process is to be executed through the process by image packer 1210 and video encoder 1211 (also referred to as a video encoding process) or executed through the arithmetic encoding process. An example of such a configuration will be described below.

FIG. 30 is a block diagram illustrating a detailed configuration variation of encoding device 100. FIG. 30 illustrates a variation of the functional blocks enclosed by the dotted-line frame illustrated in FIG. 29.

Displacement vector calculator 1207, wavelet transformer 1208, quantizer 1209, image packer 1210, and video encoder 1211 illustrated in FIG. 30 are the same as those illustrated in FIG. 29.

As illustrated in FIG. 30, encoding device 100 further includes switcher 1221, switcher 1222, and arithmetic encoder 1223.

Switcher 1221 and switcher 1222 are switchers that switch whether image packer 1210 and video encoder 1211 or arithmetic encoder 1223 is to execute the process of encoding the wavelet coefficients into the displacement bitstream.

Switcher 1221 and switcher 1222 may dynamically switch a constituent component that is to execute the process to image packer 1210 and video encoder 1211 or arithmetic encoder 1223. Switcher 1221 and switcher 1222 may be configured to always (in other words, fixedly) use image packer 1210 and video encoder 1211 as the constituent component that is to execute the process or may be configured to always (in other words, fixedly) use arithmetic encoder 1223 as the constituent component.

Arithmetic encoder 1223 executes the process of encoding the wavelet coefficients into the displacement bitstream by means of arithmetic encoding.

Note that encoding device 100 may add, to header information, information indicating whether the process of encoding the wavelet coefficients into the displacement bitstream has been executed by image packer 1210 and video encoder 1211 (in other words, the process has been executed through the video encoding process) or by arithmetic encoder 1223 (in other words, the process has been executed through the arithmetic encoding process). This enables decoding device 200 receiving the bitstream encoded in the above manner to appropriately decode the bitstream by switching decoding methods of decoding the bitstream with reference to the header information.

Hereinafter, an encoding process performed by encoding device 100 will be described in detail.

FIG. 31 is a flowchart illustrating the process by encoding device 100. FIG. 32 is an explanatory diagram schematically illustrating the encoding of a mesh frame. With reference to FIG. 31 and FIG. 32, the process by encoding device 100 will be described.

In step S101, encoding device 100 reads a 3D mesh frame, which is an input mesh frame, and its attributes. The input mesh frame is a mesh frame input into encoding device 100. An example of the 3D mesh frame being the input mesh frame is illustrated as mesh frame 1301 (see FIG. 32).

In step S102, encoding device 100 performs the decimating process on the input mesh frame that is read in step S101 to produce a base mesh frame, which has a smaller number of vertices than the input mesh frame. The base mesh frame produced by decimating mesh frame 1301 is illustrated as base mesh frame 1302 (see FIG. 32).

In step S103, encoding device 100 calculates displacement information to be used by decoding device 200 to reconstruct the mesh frame. The displacement information is equivalent to displacement vectors from the vertices of the base mesh frame produced in step S102 to the vertices of the input mesh frame. Methods of calculating the displacement information include a method in which the sets of coordinates of the vertices of the base mesh frame are subtracted from the coordinates of the vertices of the input mesh frame. The displacement information calculated from mesh frame 1301 and base mesh frame 1302 is illustrated as displacement information 1303 (see FIG. 32). Displacement information 1303 is in a vector format. In other words, displacement information 1303 is represented as displacement vectors.

In step S104, encoding device 100 encodes the base mesh frame produced in step S102, the displacement information generated in step S103, and the attributes of the input mesh frame into a bitstream (equivalent to a compressed bitstream). An example of the bitstream is illustrated as bitstream 1304 (see FIG. 32).

Specifically, bitstream 1304 includes sets of vertex coordinates of and connection information on vertices A, C, E, and F, the displacement information, a video bitstream including texture data, and a compressed attribute map (see FIG. 32). The displacement information includes displacement information for displacing vertices based on the vertex coordinates acquired from the base mesh frame that has been subdivided. The compressed attribute map includes texture coordinates used to apply the texture data to the mesh frame that is reconstructed using the base mesh frame and the displacement information.

Hereinafter, details of the configuration of decoding device 200 will be described.

FIG. 33 is a block diagram illustrating a detailed configuration example of decoding device 200.

As illustrated in FIG. 33, decoding device 200 includes demultiplexer 2201, base mesh decoder 2202, inverse quantizer 2203, subdivider 2204, video decoder 2205, image unpacker 2206, inverse quantizer 2207, inverse wavelet transformer 2208, reconstructor 2209, video decoder 2210, and color converter 2211.

Demultiplexer 2201 acquires a compressed bitstream input into decoding device 200 and separates a base mesh bitstream, a displacement bitstream, and an attribute bitstream from the compressed bitstream. Demultiplexer 2201 provides the base mesh bitstream to base mesh decoder 2202, provides the displacement bitstream to video decoder 2205, and provides the attribute bitstream to video decoder 2210. The compressed bitstream input into decoding device 200 can be, for example, a compressed bitstream output by encoding device 100. The description will be made on this case as an example.

Base mesh decoder 2202 decodes the base mesh bitstream provided from demultiplexer 2201 to acquire a quantized base mesh. Base mesh decoder 2202 provides the quantized base mesh to inverse quantizer 2203.

Inverse quantizer 2203 inverse quantizes the quantized base mesh provided from base mesh decoder 2202 to produce the base mesh (also referred to as a decoded base mesh). Inverse quantizer 2203 provides the decoded base mesh to subdivider 2204.

Subdivider 2204 performs the subdivision process on the decoded base mesh produced by inverse quantizer 2203. The subdivision process is the same as the subdivision process executed by subdivider 1206. Subdivider 2204 provides the subdivided, decoded base mesh to reconstructor 2209.

Video decoder 2205 decodes displacement bitstream provided from demultiplexer 2201 into an image. The image can be an image in which quantized wavelet coefficients are contained by the mapping of the quantized wavelet coefficients onto pixels in a two-dimensional image format. Video decoder 2205 provides the image to image unpacker 2206.

Image unpacker 2206 takes out the quantized wavelet coefficients from the image provided from video decoder 2205. In the process of taking out the quantized wavelet coefficients from the image, a mapping that represents the assignment of the quantized wavelet coefficients to the pixels in the two-dimensional image format can be used. Image unpacker 2206 provides the quantized wavelet coefficients taken out from the image to inverse quantizer 2207.

Inverse quantizer 2207 inverse quantizes the quantized wavelet coefficients provided from image unpacker 2206 to generate wavelet coefficients.

Inverse wavelet transformer 2208 performs an inverse wavelet transforming process on the wavelet coefficients provided from inverse quantizer 2207 to generate displacement vectors (equivalent to decoded displacement vectors). The inverse wavelet transforming process is equivalent to the inverse transform of the wavelet transforming process performed by wavelet transformer 1208. Inverse wavelet transformer 2208 provides the generated decoded displacement vectors to reconstructor 2209.

Reconstructor 2209 reconstructs a mesh (equivalent to a decoded mesh frame) using the subdivided, decoded base mesh provided from subdivider 2204 and the decoded displacement vectors provided from inverse wavelet transformer 2208. Reconstructor 2209 outputs the reconstructed, decoded mesh as output mesh 2107.

Video decoder 2210 decodes the attribute bitstream provided from demultiplexer 2201 into an attribute map (equivalent to a decoded attribute map). Video decoder 2210 provides the decoded attribute map to color converter 2211.

Color converter 2211 performs a color converting process on the decoded attribute map provided from video decoder 2210. The color converting process is equivalent to the inverse conversion of the color converting process executed by color converter 1212 and can include a process of converting a representation form of color or a color space. Color converter 2211 outputs the decoded attribute map subjected to the color converting process.

Note that the process of decoding the displacement bitstream into the wavelet coefficients, which is executed by video decoder 2205 and image unpacker 2206, may be performed through an arithmetic encoding process. In addition, decoding device 200 may be configured to be capable of selecting whether the process is to be executed through the process by video decoder 2205 and image unpacker 2206 (also referred to as a video decoding process) or executed through the arithmetic encoding process. An example of such a configuration will be described below.

FIG. 34 is a block diagram illustrating a detailed configuration variation of decoding device 200. FIG. 34 illustrates a variation of the functional blocks enclosed by the dotted-line frame illustrated in FIG. 33.

Video decoder 2205, image unpacker 2206, inverse quantizer 2207, inverse wavelet transformer 2208, and reconstructor 2209 illustrated in FIG. 34 are the same as those illustrated in FIG. 33.

As illustrated in FIG. 34, decoding device 200 further includes switcher 2221, switcher 2222, and arithmetic decoder 2223.

Switcher 2221 and switcher 2222 are switchers that switch whether video decoder 2205 and image unpacker 2206 or arithmetic decoder 2223 is to execute the process of decoding the displacement bitstream into the wavelet coefficients.

Switcher 2221 and switcher 2222 may dynamically switch a constituent component that is to execute the process to video decoder 2205 and image unpacker 2206 or arithmetic decoder 2223. Switcher 2221 and switcher 2222 may be configured to always (in other words, fixedly) use video decoder 2205 and image unpacker 2206 as the constituent component that is to execute the process or may be configured to always (in other words, fixedly) use arithmetic decoder 2223 as the constituent component.

Arithmetic decoder 2223 executes the process of decoding the displacement bitstream into the wavelet coefficients by means of arithmetic decoding.

Note that information indicating whether video decoder 2205 and image unpacker 2206 or arithmetic decoder 2223 has executed the process of decoding the displacement bitstream into the wavelet coefficients (in other words, whether the process has been executed through the video decoding process or the arithmetic decoding process) may have been added to header information. In this case, decoding device 200 can appropriately decode the bitstream by switching the decoding methods of decoding the bitstream with reference to the header information.

Hereinafter, a decoding process performed by decoding device 200 will be described in detail.

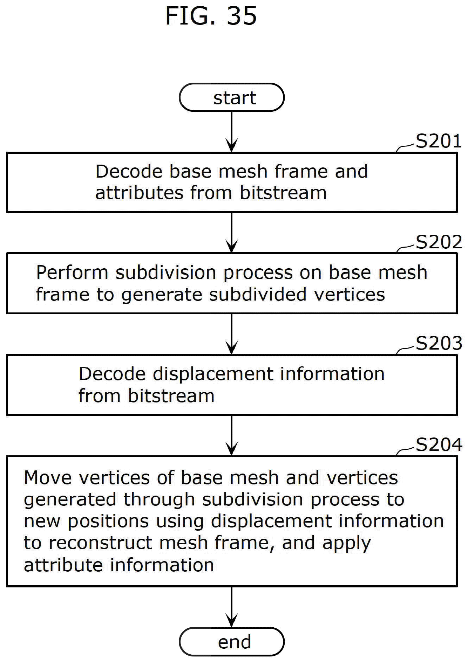

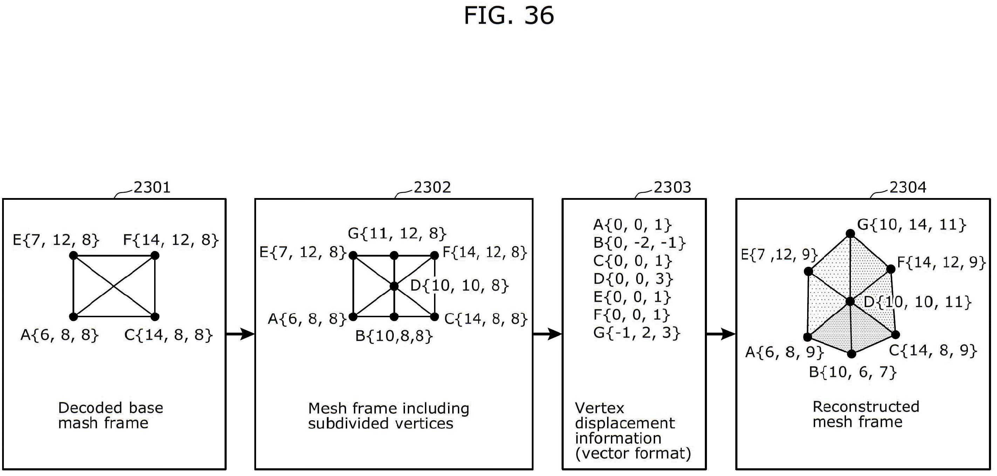

FIG. 35 is a flowchart illustrating the process by decoding device 200. FIG. 36 is an explanatory diagram schematically illustrating the decoding of a mesh frame (3D mesh). With reference to FIG. 35 and FIG. 36, the process by decoding device 200 will be described.

In step S201, decoding device 200 decodes a base mesh frame and attributes from a bitstream (equivalent to a compressed bitstream). An example of the decoded base mesh frame (equivalent to a decoded base mesh frame) is illustrated as decoded base mesh frame 2301 (see FIG. 36).

In step S202, decoding device 200 performs the subdivision process on the base mesh frame decoded in step S201 to produce subdivided vertices. An example of the base mesh frame (mesh frame) including the subdivided vertices is illustrated as base mesh frame 2302 (see FIG. 36).

In step S203, decoding device 200 decodes displacement information from the bitstream (equivalent to the compressed bitstream). An example of the decoded displacement information is illustrated as displacement information 2303 (see FIG. 36). Displacement information 2303 is in a vector format. In other words, displacement information 2303 is represented as displacement vectors.

In step S204, using the displacement information, decoding device 200 moves the vertices of the base mesh frame including the subdivided vertices to new positions to reconstruct the shape of the mesh frame and further applies attribute information to restore the mesh frame. An example of the attributes is texture. An example of the reconstructed mesh frame is illustrated as mesh frame 2304 (see FIG. 36).

Hereinafter, the subdivision will be described. The subdivision is executed by a subdivider (specifically, subdivider 1206 or subdivider 2204).

FIG. 37 is an explanatory diagram illustrating an example of the subdivision.

A base mesh illustrated in (a) in FIG. 37 includes vertices A, B, and C and connection information indicating their connectivity.

In (b) in FIG. 37, a mesh produced by the first subdivision, in other words, a mesh after the first subdivision is illustrated. In the first subdivision, the subdivider generates vertices D, E, and F and connection information indicating their connectivity. This mesh produced by the subdivider will also be referred to as LoD1 or a first LoD.

Vertex D in the mesh after the first subdivision is a vertex that is generated by subdivision based on vertex A and vertex B. Likewise, vertex F is a vertex that is generated by subdivision based on vertex B and vertex C. Vertex E is a vertex that is generated by subdivision based on vertex A and vertex C.

Note that, as an example, vertex D can be the midpoint of segment AB (in other words, edge AB) connecting vertices A and B, which are used to generate vertex D. Likewise, vertex E can be the midpoint of segment AC. Vertex F can be the midpoint of segment BC.

In (c) in FIG. 37, a mesh produced by the second subdivision, in other words, a mesh after the second subdivision is illustrated. In the second subdivision, the subdivider generates vertices G, H, I, J, K, L, M, N, and O and connection information indicating their connectivity. This mesh produced by the subdivider will also be referred to as LoD2 or a second LoD.

Vertex G in the mesh after the second subdivision is a vertex that is generated by subdivision based on vertex A and vertex D. Likewise, vertex H is a vertex that is generated by subdivision based on vertex A and vertex E. Vertex I is a vertex that is generated by subdivision based on vertex B and vertex D. Vertex J is a vertex that is generated by subdivision based on vertex D and vertex F. Vertex K is a vertex that is generated by subdivision based on vertex E and vertex F. Vertex L is a vertex that is generated by subdivision based on vertex C and vertex E. Vertex M is a vertex that is generated by subdivision based on vertex B and vertex F. Vertex N is a vertex that is generated by subdivision based on vertex C and vertex F. Vertex O is a vertex that is generated by subdivision based on vertex D and vertex E.

Note that, as an example, vertex G can be the midpoint of segment AD (in other words, edge AD) connecting vertices A and D, which are used to generate vertex G. Likewise, vertex H can be the midpoint of segment AE. Vertex I can be the midpoint of segment BD. Vertex J can be the midpoint of segment DF. Vertex K can be the midpoint of segment EF. Vertex L can be the midpoint of segment CE. Vertex M can be the midpoint of segment BF. Vertex N can be the midpoint of segment CF. Vertex O can be the midpoint of segment DE.

Hereinafter, the displacement of vertices will be described with reference to FIG. 38 and FIG. 39. The displacement of vertices is executed by reconstructor 2209.

FIG. 38 is an explanatory diagram illustrating an example of the displacement of vertices in which the vertices are subdivided and then displaced. FIG. 39 is an explanatory diagram illustrating an example of the vertices of the original mesh.

A base mesh illustrated in (a) in FIG. 38 includes vertices A, B, C, and Z and connection information indicating their connectivity.

In (b) in FIG. 38, a mesh produced by the first subdivision, in other words, a mesh after the first subdivision (i.e., a first LoD) is illustrated. In the first subdivision, the subdivider generates vertex S, T, U, X, or Y and connection information indicating their connectivity. Vertex S, T, U, X, or Y is similar to vertices D, E, and F illustrated in (b) in FIG. 37.

In (c) in FIG. 38, a mesh produced by the second subdivision, in other words, a mesh after the second subdivision (i.e., a second LoD) is illustrated. In the second subdivision, the subdivider generates vertices D, E, F, G, and H and connection information indicating their connectivity. Vertices D, E, F, G, and H are similar to vertices G, H, I, J, K, L, M, N, or O illustrated in (c) in FIG. 37.

In (d) in FIG. 38, a mesh including vertices that are subdivided and then displaced is illustrated. Vertices A, B, C, D, E, F, G, H, S, T, U, X, Y, and Z illustrated in (d) in FIG. 38 are at positions that are displaced from positions of the respective vertices illustrated in (c) in FIG. 38 using the displacement information.

The original mesh illustrated in FIG. 39 is an example of the mesh input into encoding device 100, that is, a mesh before encoding.

The mesh illustrated in FIG. 38 has a shape similar to that of the original mesh illustrated in FIG. 39. Since the displacement information is generated by displacement vector calculator 1207 of encoding device 100 as information indicating the displacement from the vertices of the base mesh to the vertices of the original mesh, the mesh having the shape similar to that of the original mesh is generated by the reconstruction of the mesh using the displacement information that has been generated in such a manner.

Decoding device 200 is capable of outputting the mesh illustrated in (d) in FIG. 38.

Next, the division of a mesh into submeshes will be described with reference to FIG. 40 and FIG. 41.

The mesh can be divided into a plurality of portions each of which is smaller than the mesh and can be encoded. When the mesh is divided, the vertices of the mesh can be divided such that sets of coordinates and connectivity of the vertices included in each portion are independently encodable.

FIG. 40 is an explanatory diagram illustrating an example of a mesh. FIG. 41 is an explanatory diagram illustrating an example of the division of a mesh into submeshes.

The mesh illustrated in FIG. 40 is an original mesh and may also be referred to as a full mesh, in contrast to a submesh.

FIG. 41 illustrates how the full mesh illustrated in FIG. 40 is divided into two submeshes. For vertices A, B, and C of the full mesh (see FIG. 40), vertex A is duplicated into vertex A1 and vertex A2, vertex B is duplicated into vertex B1 and vertex B2, and vertex C is duplicated into vertex C1 and vertex C2. Thus, the two submeshes (i.e., a first submesh and a second submesh) are created from the full mesh. The first submesh and the second submesh are meshes that are independently decodable.

Hereinafter, the packing of displacement information into an image frame will be described with reference to FIG. 42, FIG. 43, and FIG. 44.

FIG. 42, FIG. 43, and FIG. 44 are explanatory diagrams illustrating examples of packing the displacement information into an image frame. Note that the image frame can be rephrased as a video frame.

Items of displacement data on vertices are mapped into, for example, components of an image frame in a YUV format (i.e., into Y components (Y Plane), U components (U Plane), and V components (V Plane)), thus being encoded as image frame data. This case will be described below as an example. Note that, as another example, the items of displacement data on vertices may be mapped into components of an image frame in an RGB format (R components, G components, and B components), thus being encoded as the image frame data.

Decoding device 200 can use an image encoding module to extract the items of displacement data. Each of the items of displacement data may be in the form of an X component, a Y component, or a Z component in a global coordinate system (e.g., a Cartesian coordinate system) or a normal, a tangent, or a bi-tangent component in a local coordinate system. Methods of mapping the displacement data into the image frame include the following methods.

For example, in a first method, the items of displacement data are arranged in a traversing order in the image frame. An example of the packing of the items of displacement data in this case is illustrated in FIG. 42. The items of displacement data are directly mapped onto the image frame according to a predefined traversing order.

Note that the image frame has a fixed height and width, and thus there are cases where the items of displacement data do not fit exactly in the frame. In such a case, the remaining part of the image frame is padded with data for padding (also referred to as Padded data) (see FIG. 42).

For example, in a second method, the items of displacement data are separated into a plurality of LoDs and mapped into the Y components, U components, and V components of the image frame. An example of the packing of the items of displacement data in this case is illustrated in FIG. 43. Here, the items of displacement data in the image frame for the next LoD start immediately after the items of displacement data for the previous LoD end. As in the first method, in the case where the items of displacement data do not exactly fit in the image frame, the image frame is padded at its end portion (see FIG. 43).

For example, in a third method, the items of displacement data corresponding to the LoDs are mapped onto the Y components, U components, and V components of the image frame in a manner different from the second method. An example of the packing of the items of displacement data in this case is illustrated in FIG. 44. In this manner, each LoD can be independently decoded. In the third method, interim padding is performed for each LoD's displacement data to provide CTU alignment together with the padding at the end of the video frame (see FIG. 44).

Next, encoding device 100 and decoding device 200 in the case where a mesh is divided into a plurality of submeshes will be described.

FIG. 45 is a diagram illustrating another configuration example of encoding device 100 according to the embodiment. Specifically, FIG. 45 is a diagram illustrating a configuration of a submesh encoding device that performs an encoding process in the case where input mesh 1101 is divided into divided meshes (a plurality of submeshes). For example, the submesh encoding device includes a plurality of encoding devices 100.

Input mesh 1101 (full mesh) inputted to the submesh encoding device is divided into a plurality of meshes (submeshes). For example, the plurality of submeshes are inputted to a plurality of encoding devices 100. Each of the plurality of submeshes may be inputted to any one of the plurality of encoding devices 100. For example, the submesh encoding device divides input mesh 1101 into a plurality of submeshes, and input the plurality of submeshes obtained by division to a plurality of encoding device 100.

Moreover, after dividing into the plurality of submeshes, an encoding process regarding a submesh boundary (process for an overlapping submesh) is performed.

For example, for each of the submeshes, preprocessing is performed by preprocessor 1103, and a base mesh, displacement data, and metadata are generated and encoded.

It is to be noted that encoding device 100 may be implemented by configuring such a submesh encoding device. In other words, encoding device 100 may be configured to include a plurality of preprocessors 1103 and a plurality of compressors 1106. For each of the sets of preprocessors 1103 and compressors 1106, a predetermined process may be performed on a submesh. Moreover, the total number of sets of preprocessors 1103 and compressors 1106 included in encoding device 100 may be any number of sets, and is not particularly limited.

FIG. 46 is a block diagram illustrating a configuration example of preprocessor 1103 according to the embodiment.

Preprocessor 1103 includes, for example, base mesh generator 1401, subdivider 1402, and displacement data generator 1403.

First, in preprocessor 1103, a base mesh is generated by base mesh generator 1401.

Next, the base mesh is subdivided by subdivider 1402 in a predetermined manner, and a subdivided mesh that is the base mesh subdivided (a subdivided mesh or a subdivided base mesh)is generated.

Displacement data is generated by displacement data generator 1403 from the subdivided mesh and a submesh that is obtained by dividing input mesh 1101.

For example, the displacement data is a difference vector between input mesh 1101 and the subdivided mesh.

It is to be noted that, also in decoding, the same subdivision method as that of encoding is used.

Moreover, for example, a subdivision method in encoding and parameters for use in the subdivision may be transmitted from encoding device 100 to decoding device 200.

FIG. 47 is a diagram illustrating another configuration example of decoding device 200 according to the embodiment. Specifically, FIG. 47 is a diagram illustrating a configuration of a submesh decoding device that performs a decoding process in the case where a plurality of submeshes are included in bitstream 2101. For example, the submesh decoding device includes a plurality of decoding devices 200. For example, the submesh decoding device includes a plurality of decoding devices 200 and combiner 2109.

Encoded data for each of the submeshes included in bitstream 2101 is inputted to decompressor 2102 of each decoding device 200.

Moreover, for example, in postprocessor 2106, the processing of above-mentioned reconstructor 2209 is performed.

In postprocessor 2106, for each of the decoded submeshes, a base mesh is subdivided, and a displacement vector is added to the subdivided base mesh to restore the submesh.

In other words, postprocessor 2106 performs the processing of above-mentioned reconstructor 2209 for each of the submeshes.

Combiner 2109 combines (merges) the submeshes restored in a plurality of decoding devices 200, and reconstructs a full mesh before division (output mesh 2107).

It is to be noted that decoding device 200 may be implemented by configuring such a submesh decoding device. In other words, decoding device 200 may be configured to include a plurality of decompressors 2102 and a plurality of postprocessors 2106. For each of the sets of decompressors 2102 and postprocessors 2106, a predetermined process may be performed on the encoded data for each submesh. Moreover, the total number of sets of decompressors 2102 and postprocessors 2106 included in decoding device 200 may be any number of sets, and is not particularly limited.

FIG. 48 is a block diagram illustrating a specific configuration example of decoding device 200 according to the embodiment. Specifically, FIG. 48 illustrates a specific configuration of post-decoder 2306 out of decoder 2305 and post-decoder 2306 included in decoding device 200.

Post-decoder 2306 includes pre-reconstructor 2307, reconstructor 2308, post-reconstructor 2309, and adaptor 2310.

The process in post-decoder 2306 is optional for an application. An example of the process in post-decoder 2306 (post-decoding process) is conversion of decoded data into a nominal format, such as video conversion from the YUV space to the RGB space. The post-decoding process may encapsulate a plurality of processes such as a pre-reconstruction process, a reconstruction process, a post-reconstruction process, and an adaptation process.

Pre-reconstructor 2307 performs the pre-reconstruction process. For example, in the context of vide-based dynamic mesh coding, pre-reconstructor 2307 scales normalized texture coordinates up in order to align with the dimensions of a texture image.

Reconstructor 2308 performs the reconstruction process. For example, the reconstruction process is invoked for decoded atlas frames, decoded base mesh frames, decoded video frames, and syntax elements associated with the same mesh sequence. Output of the reconstruction process is a sequence of reconstructed mesh frames before the post-reconstruction process.

Post-reconstructor 2309 performs the post-reconstruction process. For example, in the context of video-based dynamic mesh coding, post-reconstructor 2309 performs a number of smoothing operations on the reconstructed mesh frames. The smoothing operations include, for example, collapsing edges included in a mesh or adding new vertices to a mesh.

Adaptor 2310 performs an adaptation process. For example, the adaptation process is applied by some kind of application in order to adapt reconstructed meshes to a given scenario. For example, vertices of the reconstructed mesh are transformed from a three-dimensional model coordinate system to a three-dimensional world coordinate system. Adaptor 2310 outputs a reconstructed final mesh frame (final three-dimensional mesh frame 2311).

In the following, the subdivision will be described in detail.

### <Subdivision>

FIG. 49 is a diagram illustrating an example of two submeshes having a boundary edge obtained by subdivision according to the embodiment. Specifically, Part (a) of FIG. 49 illustrates an example submesh, and Part (b) of FIG. 49 illustrates another example submesh. Part (c) of FIG. 49 illustrates a three-dimensional mesh obtained by merging (that is, combining) the submesh illustrated in Part (a) of FIG. 49 and the submesh illustrated in Part (b) of FIG. 49.

Decoding device 200 subdivides each edge forming a submesh based on position information of each vertex forming the submesh and connection information indicating a connection relationship between the vertexes, that is, based on information about a plurality of edges forming the submesh. In the subdivision, for example, a new vertex (three-dimensional point) is generated on an edge. The generated vertexes are connected to each other by new edges, for example. Thus, for example, each of a plurality of faces included in a submesh is divided into a plurality of sub-faces as a result of subdivision. For example, a triangular face defined by three vertexes included in a submesh is divided into four sub-faces as a result of subdivision.

Decoding device 200 performs subdivision on each submesh and merges a plurality of submeshes obtained by the subdivision, thereby reconstructing a three-dimensional mesh that corresponds to the original mesh described above.

Here, encoding device 100 generates a plurality of submeshes from the original mesh and encodes position information, displacement information and the like of the vertexes forming each submesh. Therefore, the position information, the displacement information and the like of the vertexes forming different submeshes may be encoded with different encoding parameters. In that case, when decoding device 200 performs subdivision based on these items of encoded information, an edge shared by two or more submeshes (referred to also as a boundary edge) may be subdivided at different positions for different submeshes or subdivided different numbers of times for different submeshes. In that case, a problem that submeshes cannot be appropriately merged may arise.

For example, in the example illustrated in FIG. 49, edge CD is a boundary edge. When the submesh illustrated in Part (a) of FIG. 49 is subdivided, vertex F is generated on edge CD, for example. When the submesh illustrated in Part (b) of FIG. 49 is subdivided, vertex M is generated on edge CD, for example. If the positions of vertexes F and M are different, or different numbers of vertexes are generated on edges CD of the submeshes, that is, edges CD of the submeshes are subdivided different numbers of times, the submesh illustrated in Part (a) of FIG. 49 and the submesh illustrated in Part (b) of FIG. 49 cannot be appropriately merged, for example, because of a gap formed around edge CD.

To solve such a problem that arises when different subdivision schemes are used for adjacent submeshes (that is, submeshes having the same boundary edge), according to the present application, for example, a constraint is imposed that the same type of subdivision scheme and the same number of iterations of subdivision are used for all boundary edges. That is, in subdivision of a boundary edge, for example, the subdivision of the submeshes is performed the same number of iterations of subdivision in the same subdivision method. As a result, as far as the displacement information (that is, the values of the displacement vectors) of vertexes F and M are the same value, the vertexes generated by subdivision can be prevented from being displaced, and a gap can be prevented from being formed around the boundary edge after the submeshes are merged, as illustrated in Part (c) of FIG. 49.

Note that for the subdivision of a boundary edge, a predetermined subdivision method and/or a predetermined number of iterations of subdivision may be used, or encoding device 100 may determine a predetermined subdivision method and/or a predetermined number of iterations of subdivision and signal the determined information in the form of a bitstream. Furthermore, alignment of vertexes F and M may be performed when subdivision is performed on the submeshes or when the plurality of submeshes are merged.

### [First Aspect]

Next, a first aspect of the subdivision will be described.

FIG. 50 is a flowchart illustrating a process by decoding device 200 according to the embodiment. FIG. 50 is a flowchart illustrating an example case where a predetermined subdivision method is used.

First, decoding device 200 decodes, from a bitstream, a first vertex and a second vertex connected by an edge (S301). Specifically, decoding device 200 obtains, from a bitstream, position information of a first vertex and a second vertex and connection information indicating whether the first vertex and the second vertex are connected.

Decoding device 200 then determines whether the edge connecting the first vertex and the second vertex is a boundary edge (S302).

When decoding device 200 determines that the edge connecting the first vertex and the second vertex is a boundary edge (Yes in S302), decoding device 200 derives a third vertex from only the first vertex and the second vertex (S303). That is, the third vertex is interpolated (added) by deriving the position of the third vertex based only on the position of the first vertex and the position of the second vertex.

On the other hand, when decoding device 200 determines that the edge connecting the first vertex and the second vertex is not a boundary edge (No in S302), decoding device 200 derives a fourth vertex from the first vertex, the second vertex, and at least one fifth vertex (S304). That is, the fourth vertex is interpolated by deriving the position of the fourth vertex from the position of the first vertex, the position of the second vertex, and the position of the at least one fifth vertex.

Note that the number of the fifth vertexes may be one or plural. That is, the fourth vertex can be derived from three or more vertices including the first vertex and the second vertex.

Note that the processing in steps S303 and S304 is an example, and processing according to another method may be used.

FIGS. 51 and 52 are diagrams for describing examples of boundary edges and non-boundary edges according to the embodiment.

The boundary edge is an edge shared by a plurality of submeshes, for example.

On the other hand, the non-boundary edge is an edge that is not shared by a plurality of submeshes. That is, the non-boundary edge is an edge that is included in only one submesh of a plurality of submeshes included in a base mesh, for example.

In the example illustrated in FIG. 51, edge AB is connected to only one face Y defined by edge AB and vertex F. Therefore, edge AB is a boundary edge. Furthermore, for example, edge EF is connected to only one face Z defined by edge EF and vertex D. Therefore, edge EF is a boundary edge.

Furthermore, for example, edge BD is connected to two faces, face W defined by edge BD and vertex C and face X defined by edge BD and vertex F. Therefore, edge BD is not a boundary edge but a non-boundary edge. Furthermore, for example, edge DF is connected to two faces, face X defined by edge DF and vertex B and face Z defined by edge DF and vertex E. Therefore, edge DF is not a boundary edge but a non-boundary edge.

For example, when the edge connecting the first vertex and the second vertex is a boundary edge, decoding device 200 derives the third vertex from only the first vertex and the second vertex in step S303. For example, in FIG. 51, assume that vertex A is the first vertex, and vertex C is the second vertex. Furthermore, assume that vertex A and vertex C are located on a boundary edge. In this case, vertex B that is the third vertex is derived from only the first vertex and the second vertex. In an example method of deriving the coordinates (position) of vertex B, a midpoint between vertex A that is the first vertex and vertex C that is the second vertex is assigned as the coordinates. That is, the coordinates of the midpoint between vertex A and vertex C may be calculated as the coordinates of vertex B.

Furthermore, for example, when the edge connecting the first vertex and the second vertex is not a boundary edge, decoding device 200 derives the fourth vertex from the first vertex, the second vertex, and at least one fifth vertex in step S304. For example, in FIG. 52, assume that vertex B is the first vertex, and vertex D is the second vertex. Furthermore, assume that vertex B and vertex D are not located on a boundary edge. That is, assume that edge BD is a non-boundary edge. In this case, vertex H that is the fourth vertex is derived from vertex B that is the first vertex, vertex D that is the second vertex, and a further vertex, vertex F that is the fifth vertex. In an example method of deriving the coordinates of vertex H, the coordinates of vertex F that is the fifth vertex orthogonally projected onto edge BD are assigned as the coordinates of vertex H.

For example, one or more parameters are decoded from the bitstream. The one or more parameters may be decoded from a header of the bitstream. The one or more parameters may include boundary edge information indicating an edge that is a boundary edge among a plurality of edges forming a submesh. Decoding device 200 may determine a boundary edge from the decoded boundary edge information.

FIG. 53 is a diagram illustrating an example of a syntax for signaling different subdivision types (referred to also as subdivision methods) and different numbers of iterations of subdivision in headers according to the embodiment.

Encoding device 100 generates a bitstream that includes, in a header for a submesh, information (subdivision_type) indicating a method of subdividing each edge forming the submesh (also referred to simply as a subdivision method for the submesh) and information (subdivision_num_iteration) indicating the number of iterations of subdivision for each edge forming the submesh (also referred to simply as the number of iterations of subdivision for the submesh), for example.

FIG. 54 is a diagram for describing an example of a syntax for signaling the subdivision type and the number of iterations of subdivision using a sequence parameter set (SPS) according to the embodiment.

Encoding device 100 generates a bitstream that includes, in a sequence parameter set, information (boundary_subdivision_flag) indicating whether an edge is a boundary edge, information (boundary_subdivision_type) indicating a method of subdividing a boundary edge (also referred to as the subdivision method for the boundary edge), and information (boundary_subdivision_num_iteration) indicating the number of iterations of subdivision for the boundary edge (also referred to simply as the number of iterations of subdivision for the boundary edge), for example.

FIG. 55 is a diagram illustrating an example of a syntax for determining the subdivision type and the number of iterations of subdivision using a sequence parameter set and checking whether an edge is located on a boundary according to the embodiment.

When an edge is a boundary edge, for example, decoding device 200 subdivides the edge based on the information indicating the subdivision method for the boundary edge and the information indicating the number of iterations of subdivision for the boundary edge included in the SPS of the bitstream obtained from encoding device 100. On the other hand, when an edge is not a boundary edge, for example, decoding device 200 subdivides the edge based on the information indicating the subdivision method for the submesh and the information indicating the number of iterations of subdivision for the submesh included in the header for the submesh in the bitstream obtained from encoding device 100.

Note that the information indicating the subdivision method for the submesh and/or the information indicating the number of iterations of subdivision for the submesh may be stored in a parameter set common to frames when these items of information are common to the frames, or may be stored in a parameter set common in a sequence when these items of information are common in the sequence.

When these items of information are common to the submeshes, these items of information need not be signaled in the headers for the submeshes. Furthermore, when the subdivision method for the submesh and/or the number of iterations of subdivision for the submesh are not signaled in any of the headers for the adjacent submeshes, the subdivision method for the submesh and/or the number of iterations of subdivision for the submesh may be regarded as common to the submeshes, and it may be determined not to use this scheme.

Note that although an example has been shown above in which the information indicating the subdivision method for a boundary edge and the information indicating the number of iterations of subdivision for the boundary edge are stored in a parameter set (specifically, an SPS) common in a sequence, these items of information may be stored in a parameter set common to frames.

Furthermore, the subdivision method and/or the number of iterations of subdivision indicated by the information stored in the parameter set common in the sequence may be used as the subdivision method for the boundary edge and/or the number of iterations of subdivision for the boundary edge. That is, when the subdivision method and/or the number of iterations of subdivision are signaled in both the parameter set common in the sequence and the header for the submesh, decoding device 200 may use the value in the header for the submesh for subdivision of the submesh and use the value in the parameter set common in the sequence for subdivision of the boundary edge.

For example, in the case where at least one edge of a plurality of edges forming a submesh is a boundary edge and the number of iterations of subdivision for the boundary edge and the number of iterations of subdivision for the submesh are different, it is necessary to define how to subdivide the plurality of edges forming the submesh including the boundary edge and how to connect vertexes to generate a new mesh. Note that this case may be the case where the number of iterations of subdivision for the boundary edge of the submesh and the number of iterations of subdivision for the submesh may be different, or the case where the number of iterations of subdivision for the boundary edge of another submesh to which the submesh is to be coupled and the number of iterations of subdivision for the other submesh may be different.

FIG. 56 is a flowchart illustrating an example of a process of dividing a plurality of edges forming a submesh according to the embodiment.

First, decoding device 200 determines whether at least one edge of a plurality of edges forming a mesh (specifically, a submesh) is a boundary edge (S401).

When decoding device 200 determines that at least one edge of a plurality of edges forming a submesh is a boundary edge (Yes in S401), decoding device 200 compares the number of iterations of subdivision for the boundary edge with the number of iterations of subdivision for the submesh (S402).

Decoding device 200 then performs subdivision based on the comparison result in step S402 (S403).

For example, assume that the number of iterations of subdivision for the boundary edge is A, and the number of iterations of subdivision for the submesh is B.

When A = B, for example, decoding device 200 performs subdivision in method A described later. When A < B, for example, decoding device 200 performs subdivision in method B (method B1 or B2) described later. When A > B, for example, decoding device 200 performs subdivision in method C (method C1 or C2) described later.

When decoding device 200 determines that any one of the plurality of edges forming the submesh is not a boundary edge (No in S401), decoding device 200 subdivides the plurality of edges using the subdivision method for the submesh and the number of iterations of subdivision for the submesh (S404).

### [Method A]

When decoding device 200 performs subdivision in method A, that is, when the number (A) of iterations of subdivision of the boundary edge and the number (B) of iterations of subdivision of the submesh are equal (A = B), decoding device 200 subdivides each edge forming the submesh and connects vertexes generated by the subdivision to each other to generate a new mesh. Decoding device 200 repeats this processing A (= B) times.

When decoding device 200 performs subdivision in method B, that is, when the number (A) of iterations of subdivision of the boundary edge is less than the number (B) of iterations of subdivision of the submesh (A < B), decoding device 200 performs subdivision in method B1 or B2 described below.

### [Method B1]

FIG. 57 is a diagram for describing a first example of a process of dividing a plurality of edges forming a submesh according to the embodiment. In the example illustrated in FIG. 57, polygon ABCD is a submesh, edge CD (edge CF' and edge F'D) and edge EC are boundary edges, and the other edges are non-boundary edges. Furthermore, in the example illustrated in FIG. 57, the number of iterations of subdivision for the submesh is two, and the number of iterations of subdivision for the boundary edge is one.

In an example of step S303, decoding device 200 decodes a parameter from a bitstream and derives the number of iterations of subdivision for the boundary edge based on the parameter. The parameter may be a value that indicates precisely the number of iterations of subdivision for the boundary edge, or may be a value that indicates the difference between the number of iterations of subdivision for the boundary edge and the number of iterations of subdivision for the submesh.

When the number of iterations of subdivision for the boundary edge is less than the number of iterations of subdivision for the submesh, decoding device 200 performs subdivision on the boundary edge (edge CD) the number of times equal to the number of iterations of subdivision for the boundary edge as illustrated in FIG. 57, for example. In this example, for example, decoding device 200 performs subdivision once on edge CD to generate vertex F'. After that, decoding device 200 subdivides each of the edges (such as edges AB, BC, AD, and BC) that are not a boundary edge. Furthermore, decoding device 200 subdivides the edges that are not a boundary edge and edges newly generated by connecting vertexes newly generated by the subdivisions. In this way, the edges that are not a boundary edge are subdivided twice. Furthermore, decoding device 200 connects vertex C and newly generated vertex W to create edge CW, and connects vertex D and newly generated vertex T to create edge DT. After that, decoding device 200 further creates edge TL.

As described above, decoding device 200 determines whether the number of iterations of subdivision for the submesh and the number of iterations of subdivision for the boundary edge are different and the number of iterations of subdivision for the submesh is more than the number of iterations of subdivision for the boundary edge, for example.

When the determination result is Yes, decoding device 200 first subdivides each edge forming the submesh in the conventional manner (in which vertexes obtained by division are connected to generate a new mesh) until the number of iterations of subdivision for the boundary edge is reached. After the number of iterations of subdivision for the boundary edge is exceeded, decoding device 200 repeats the following process until the number of iterations of subdivision for the submesh is reached.

Decoding device 200 determines whether at least one edge forming the mesh to be subdivided (for example, a polygonal face included in the submesh) is a boundary edge of the submesh. When there is no boundary edge, decoding device 200 performs the normal subdivision. When there is a boundary edge, decoding device 200 subdivides an edge that is not a boundary.

When the number of boundary edges of the mesh to be subdivided is one, and the number of non-boundary edges of the mesh is two, decoding device 200 connects at least vertexes generated by subdividing the non-boundary edges, and generates a new mesh using any of the two edges formed by connecting the generated vertexes to the two vertexes forming the boundary edge. Furthermore, for example, decoding device 200 determines a priority between the two edges based on whether the edge to which the vertex is connected is subdivided, and determines, based on the determined priority, which edge to use.

Note that both the two edges may be used to generate a new mesh.

Furthermore, the plurality of edges forming the submesh may include an edge that is not subdivided, for example. For example, information indicating the edge that is not subdivided may be included in the bitstream.

### [Method B2]

In method B1, when the number of iterations of subdivision for the boundary edge is exceeded while subdivision is performed, the normal subdivision method is performed if there is no boundary edge, and a non-boundary edge is subdivided if there is a boundary edge.

In method B2, however, subdivision is not performed when there is a boundary edge, while the normal subdivision method is performed when there is no boundary edge.

FIG. 58 is a diagram for describing a second example of the process of dividing a plurality of edges forming a submesh according to the embodiment. In the example illustrated in FIG. 58, polygon ABCD is a submesh, edge CD (edge CF' and edge F'D) and edge EC are boundary edges, and the other edges are non-boundary edges. Furthermore, in the example illustrated in FIG. 58, the number of iterations of subdivision for the submesh is two, and the number of iterations of subdivision for the boundary edge is one.

In another example of step S303, decoding device 200 decodes a parameter from a bitstream and derives the number of iterations of subdivision for the boundary edge based on the parameter. The parameter is, for example, a value that indicates precisely the number of iterations of subdivision for the boundary edge or a value that indicates the difference between the number of iterations of subdivision for the boundary edge and the number of iterations of subdivision for the submesh. When the value that indicates the number of iterations of subdivision for the boundary edge is less than the value that indicates the number of iterations of subdivision for the submesh, decoding device 200 subdivides each edge forming the submesh the number of times corresponding to the value that indicates the number of iterations of subdivision for the boundary edge as illustrated in FIG. 58. After that, decoding device 200 does not perform explicit displacement of vertexes W and T. Instead, for example, decoding device 200 displaces vertex F based on the displacement information and then projects vertexes W and T onto edges EF and GF, respectively, thereby subdivides edges EF and GF. In this case, after the faces (specifically, the vertexes forming the faces) are displaced, vertexes E, W, and F' are located on one straight line, and vertexes G, T, and F' are located on one straight line. Decoding device 200 then creates edges CW and DT, and further creates edge TL.

### [Method C1]

FIG. 59 is a diagram for describing a third example of the process of dividing a plurality of edges forming a submesh according to the embodiment. In the example illustrated in FIG. 59, polygon CDU is a submesh, and edge CD is a boundary edge. Edges CU and DU are non-boundary edges. In the example illustrated in FIG. 59, the number of iterations of subdivision for the submesh is one, and the number of iterations of subdivision for the boundary edge is two.

When the number of iterations of subdivision for the boundary edge is more than the number of iterations of subdivision for the submesh, decoding device 200 first subdivides all the edges including the boundary edge the number of times equal to the number of iterations of subdivision for the submesh as illustrated in FIG. 59. Decoding device 200 then subdivides the boundary edge until the number of times the boundary edge is subdivided reaches the number of iterations of subdivision for the boundary edge.

Note that when the number of iterations of subdivision for the submesh is less than the number of iterations of subdivision for the boundary edge, the number of iterations of subdivision for the boundary edge may be regarded as the number of iterations of subdivision for the submesh. For example, it may be prescribed that when the number of iterations of subdivision for the submesh is less than the number of iterations of subdivision for the boundary edge, decoding device 200 regards the number of iterations of subdivision for the boundary edge as being equal to the number of iterations of subdivision for the submesh so that the number of iterations of subdivision for the boundary edge does not exceed the number of iterations of subdivision for the submesh.

### [Method C2]

FIG. 60 is a diagram for describing a fourth example of the process of dividing a plurality of edges forming a submesh according to the embodiment. In the example illustrated in FIG. 60, polygon CDU is a submesh, and edge CD is a boundary edge. Furthermore, in the example illustrated in FIG. 60, edges CU and DU are non-boundary edges. Furthermore, in the example illustrated in FIG. 60, the number of iterations of subdivision for the submesh is one, and the number of iterations of subdivision for the boundary edge is three.

When the number of iterations of subdivision for the boundary edge is more than the number of iterations of subdivision for the submesh, decoding device 200 first subdivides the boundary edge the number of times obtained by subtracting the number of iterations of subdivision for the submesh from the number of iterations of subdivision for the boundary edge to generate edges UQ, UM, and UR. Decoding device 200 then subdivides all the edges including the boundary edge the number of times equal to the number of iterations of subdivision for the submesh as illustrated in FIG. 60.

FIG. 61 is a diagram for describing a fifth example of the process of dividing a plurality of edges forming a submesh according to the embodiment. Specifically, FIG. 61 is a diagram for describing an example of a method of subdividing edge BD that is a non-boundary edge.

In an example of step S302, decoding device 200 determines that edge BD is a non-boundary edge. Decoding device 200 then derives vertex G from vertexes B, D, and A. For example, decoding device 200 designates an intersection of the bisector of angle BAD and edge BD as vertex G. Decoding device 200 subdivides edge BD by generating vertex G in this way, for example.

Note that when subdividing edges, it may be prescribed that a common subdivision method and a common number of iterations of subdivision are used.

Furthermore, for example, decoding device 200 may determine whether the submesh to be subdivided includes a boundary edge and may perform subdivision using the subdivision method for the submesh and the number of iterations of subdivision for the submesh when the submesh includes no boundary edge. On the other hand, for example, when the submesh includes a boundary edge, decoding device 200 may subdivide the submesh using one or both of (i) the subdivision method for the submesh and the number of iterations of subdivision for the submesh and (ii) the subdivision method for the boundary edge and the number of iterations of subdivision for the boundary edge.

A predetermined subdivision method and a predetermined number of iterations of subdivision may be used for subdivision. Alternatively, encoding device 100 may determine the subdivision method and the number of iterations of subdivision and transmit the determined subdivision method and number of iterations of subdivision in a bitstream.

Alternatively, for example, one of information regarding subdivision of the boundary edge (the subdivision method for the boundary edge and the number of iterations of subdivision for the boundary edge, for example) and information regarding subdivision of the submesh (the subdivision method for the submesh and the number of iterations of subdivision for the submesh, for example) may be predetermined, and the other may be signaled.

Alternatively, a subdivision method suitable for subdivision of the submesh may be used for subdivision of the submesh, and a division method suitable for subdivision of the boundary edge may be used for subdivision of the boundary edge. When there is a suitable subdivision method for each of the boundary edge and the non-boundary edge, different subdivision methods may be used for the boundary edge and the non-boundary edge, and when there is not a suitable subdivision method for each of the boundary edge and the non-boundary edge, the same division method may be used for the boundary edge and the non-boundary edge.

The subdivision method may be changed depending on the result of comparison between the number of iterations of subdivision for the boundary edge and the number of iterations of subdivision for the submesh.

In subdivision of a mesh to be subdivided, the number of iterations of subdivision for the boundary edge may be used for the boundary edge, and the number of iterations of subdivision for the submesh may be used for the non-boundary edge. In subdivision of a mesh to be subdivided, any one of the number of iterations of subdivision for the boundary edge and the number of iterations of subdivision for the submesh may be used.

Note that the order of the determinations described above can be arbitrarily changed.

### [Effect of First Aspect]

With the arrangement according to the first aspect, submeshes encoded using different subdivision methods and different numbers of iterations of subdivision can be merged, so that the subjective quality of the full mesh (the three-dimensional mesh obtained by merging a plurality of submeshes) is improved.

### [Combination with Other Aspects]

Decoding device 200 according to this aspect can be implemented in combination with at least a part of other aspects of the present disclosure. Furthermore, this aspect may be implemented by combining, with another aspect, a part of the process illustrated in any of the flowcharts relating to this aspect, a part of the configuration of any of the devices according to this aspect, and/or a part of the syntaxes according to this aspect, for example.

The process by decoding device 200 described above may be equally performed by encoding device 100. Furthermore, all the components shown in this aspect are not always necessary, and decoding device 200 may include only a part of the components according to the first aspect.

### [Second Aspect]

FIG. 62 is a diagram for describing a sixth example of the process of dividing a plurality of edges forming a submesh according to the embodiment. Specifically, FIG. 62 is a diagram for describing another example of the processing in step S303.

For example, encoding device 100 encodes, in a bitstream, a parameter for decoding device 200 to derive the number of iterations of subdivision for the boundary edge. The parameter may be a value that indicates precisely the number of iterations of subdivision for the boundary edge, or may be a value that indicates the difference between the number of iterations of subdivision for the boundary edge and the number of iterations of subdivision for the submesh. When the value (derived value) that indicates the number of iterations of subdivision for the boundary edge is more than the value that indicates the number of iterations of subdivision for the submesh, encoding device 100 performs subdivision of the boundary edge according to the derived value. For example, when the derived value is three, as illustrated in FIG. 62, three vertexes (vertexes Q, M, and R) are generated on the boundary edge, and the connectivity between the vertexes is added to the base mesh of the submesh. Decoding device 200 performs subdivision according to the number of iterations of subdivision for the submesh. In this way, decoding device 200 performs uniform subdivision of all the edges including the boundary edge of the modified base mesh that corresponds to the submesh subdivided the number of times equal to the number of iterations of subdivision for the submesh.

### [Effect of Second Aspect]

With the arrangement according to the second aspect, submeshes encoded using different subdivision methods and different numbers of iterations of subdivision can be merged, so that the subjective quality of the full mesh is improved.

### [Combination with Other Aspects]

This aspect of encoding device 100 can be implemented in combination with at least a part of other aspects of the present disclosure. Furthermore, this aspect may be implemented by combining, with another aspect, a part of the process illustrated in any of the flowcharts relating to this aspect, a part of the configuration of any of the devices according to this aspect, and/or a part of the syntaxes according to this aspect, for example.

The process by encoding device 100 described above may be equally performed by decoding device 200. Furthermore, all the components described with regard to this aspect are not always necessary, and encoding device 100 may include only a part of the components according to the first aspect.

### [Third Aspect]

In the third aspect, encoding device 100 does not perform a process of making vertices on an edge shared between a plurality of submeshes (also referred to as a boundary edge between submeshes) the same between the submeshes. On the other hand, in the third aspect, encoding device 100 transmits, to decoding device 200, metadata for correcting the vertices on the boundary edge (vertices located on the boundary edge) in decoding device 200.

For example, encoding device 100 signals, into the metadata, hint information (e.g., a flag) indicating that: the number of iterations of subdivision or the subdivision method is different between the submeshes (i.e., adjacent submeshes); or this results in that the vertices after subdivision are not the same between the submeshes (or there is a possibility of not being the same), and transmits the metadata to decoding device 200.

Decoding device 200 determines whether vertices on a boundary edge between submeshes are corrected based on the metadata. When decoding device 200 determines that the vertices are corrected, decoding device 200 corrects the number of vertices on the boundary edge to be equal between the submeshes including the boundary edge by increasing or decreasing the number of vertices on the boundary edge.

Moreover, instead of the hint information, encoding device 100 may signal, into the metadata, an information item indicating whether decoding device 200 corrects vertices on the boundary edge, and/or an information item indicating a method of correcting these vertices. In this case, for example, decoding device 200 determines whether these vertices are corrected based on these information items.

It is to be noted that encoding device 100 may signal an information item indicating whether a plurality of submeshes are overlapping, and/or an information item indicating how the plurality of submeshes are overlapping. Moreover, when there is a possibility of overlap of a plurality of submeshes, encoding device 100 may perform a process regarding overlap (e.g., a process of correcting vertices).

FIG. 63 is a flowchart illustrating a determination process for boundary vertices performed by encoding device 100 according to the embodiment.

First, for each of the submeshes, encoding device 100 performs subdivision based on the number of iterations of subdivision (S501).

Next, encoding device 100 determines whether the boundary between the submeshes is overlapping (S502). For example, encoding device 100 determines whether each submesh has a boundary edge (i.e., an edge shared with another submesh).

When encoding device 100 determines that the boundary between the submeshes is overlapping (Yes in S503), encoding device 100 indicates, in metadata, that the boundary between the submeshes is overlapping (S504). That means that encoding device 100 adds, to the metadata, information indicating that the boundary between the submeshes is overlapping. In other words, encoding device 100 generates the metadata including information indicating that the boundary between the submeshes is overlapping.

Next, encoding device 100 determines whether boundary vertices after subdivision (specifically, vertices on the boundary edge, i.e., vertices located on the boundary edge) are the same between the submeshes on the boundary edge (the overlapping edge between the submeshes) (S505).

When encoding device 100 determines that the boundary vertices after subdivision are not the same (No in S505), encoding device 100 indicates, in the metadata, for each submesh, that the boundary vertices after subdivision are not the same (S506). That means that encoding device 100 adds, to the metadata, information indicating that the boundary vertices are not the same. In other words, encoding device 100 generates the metadata additionally including information indicating that the boundary vertices are not the same.

On the other hand, when encoding device 100 determines that the boundary vertices after subdivision are the same (Yes in S505), encoding device 100 indicates, in the metadata, for each submesh, that the boundary vertices after subdivision are the same (S507). That means that encoding device 100 adds, to the metadata, information indicating that the boundary vertices are the same. In other words, encoding device 100 generates the metadata additionally including information indicating that the boundary vertices are the same.

Moreover, when encoding device 100 determines the boundary between the submeshes is not overlapping (No in S503), encoding device 100 indicates, in metadata, that the boundary between the submeshes is not overlapping (S508). That means that encoding device 100 adds, to the metadata, information indicating that the boundary between the submeshes is not overlapping. In other words, encoding device 100 generates the metadata including information indicating that the boundary between the submeshes is not overlapping.

It is to be noted that encoding device 100 may further determine how each submesh is overlapping and indicate the determination result in the metadata.

For example, encoding device 100 checks the number of iterations of subdivision for two or more submeshes, determines whether to be the same, and sets a flag indicating the determination result. For example, encoding device 100 generates, based on the determination result, a flag (flag information) indicating same or not same.

For example, encoding device 100 checks the number of iterations of subdivision for each of two or more submeshes. For example, when the numbers of iterations of subdivision of the two or more submeshes are different, encoding device 100 sets a flag (correction flag) to ON. On the other hand, for example, when the numbers of iterations of subdivision of two or more submeshes are equal, encoding device 100 sets the flag to OFF. That means that the flag indicates that the number of iterations of subdivision is different between the two or more submeshes, for example. In other words, it can also be said that the flag indicates that vertices on the boundary edge are not the same between the submeshes after subdivision, or that there is a possibility of not being the same.

Alternatively, for example, encoding device 100 compares the coordinates of all the boundary vertices after subdivision of two or more submeshes, determines whether the boundary vertices are the same between the submeshes, and sets the flag based on the determination result.

Moreover, for example, encoding device 100 compares the coordinates of boundary vertices of two or more submeshes, and determines the value of the flag based on the determination result. For example, when there is at least one boundary vertex that is not common to the two or more submeshes, encoding device 100 sets the flag to ON. On the other hand, for example, when all the boundary vertices are the same between the two or more submeshes, encoding device 100 sets the flag to OFF. In other words, the flag indicates whether boundary vertices are the same between two or more submeshes after subdivision.

This flag may be set for the whole mesh frame. When the flag is set for the whole mesh frame, in the boundary-vertex correction process, the flag is applied to the boundary edges of all the submeshes associated with the current frame. When the flag is not set for the whole mesh frame, the flag may be set for each of the submeshes. When the flag is set for each of the submeshes, in the correction process, the flag is applied to the submesh associated with the current submesh ID.

### [Method of Signaling Correction Method]

In addition to the flag, encoding device 100 may determine how decoding device 200 corrects vertices (boundary vertices), and signal the kind (type) of a vertex correction method. Decoding device 200 may correct the vertices based on the type of the correction method.

FIG. 64 is a flowchart illustrating a determination process for overlap of submeshes performed by decoding device 200 according to the embodiment.

First, decoding device 200 determines whether the boundary between the submeshes is overlapping, by parsing the metadata (S511).

When decoding device 200 determines that the boundary between the submeshes is overlapping (Yes in S512), decoding device 200 determines whether decoding device 200 or an application for performing the process regarding the decoding performs a process regarding overlap (process for an overlapping submesh) (S513).

When decoding device 200 determines that decoding device 200 or the application performs the process for an overlapping submesh (Yes in S513), decoding device 200 performs the process for an overlapping submesh (S514). For example, as the process for an overlapping submesh, decoding device 200 performs subdivision, detects the boundary between submeshes (specifically, the boundary edge), and performs a predetermined process, such as correction of boundary vertices, on the boundary between submeshes after subdivision.

On the other hand, for example, when decoding device 200 determines that the boundary between the submeshes is not overlapping (No in S512) or when decoding device 200 determines that decoding device 200 or the application does not perform the process for an overlapping submesh (No in S513), decoding device 200 completes the processing without performing the process for an overlapping submesh, i.e., a process when the boundary between the submeshes is overlapping.

FIG. 65 is a flowchart illustrating a vertex correction process performed by decoding device 200 according to the embodiment. Specifically, FIG. 65 illustrates a specific example of the process of Step S514.

It is to be noted that, for example, decoding device 200 subdivides a plurality of submeshes by decoding and parsing data and metadata from a bitstream before start of the process illustrated in FIG. 65. After that, decoding device 200 performs the process illustrated in FIG. 65.

First, decoding device 200 decodes two or more submeshes, flag information (flag), and method information (method) from a bitstream (encoded bitstream) (S521).

The method information is information indicating a correction method of boundary vertices (how to correct or the type of the correction method).

Next, decoding device 200 determines whether the flag information indicates application of correction (S522). In other words, decoding device 200 determines whether the flag is ON or OFF.

When the flag information indicates application of correction (Yes in S522), decoding device 200 determines whether the method information indicates addition of one or more new vertices (S523). Specifically, decoding device 200 determines whether the method information indicates that one or more new vertices are added to the boundary edge of at least one of the two or more submeshes. In this manner, decoding device 200 performs the process indicated by the method information on the two or more submeshes based on the method information.

For example, when decoding device 200 determines that the method information indicates addition of one or more new vertices (Yes in S523), decoding device 200 introduces one or more vertices on the boundary edge based on the method information (S524). Specifically, decoding device 200 adds one or more vertices on the boundary edge of at least one of the two or more submeshes based on the method information. In this manner, decoding device 200 applies the correction of boundary vertices to the two or more submeshes based on the method information.

On the other hand, for example, when decoding device 200 determines that the method information does not indicate addition of one or more new vertices (No in S523), decoding device 200 removes at least one of the one or more vertices on the boundary edge based on the method information (S525). Specifically, decoding device 200 removes at least one of the one or more vertices added (generated) by subdivision on the boundary edge of at least one of the two or more submeshes based on the method information.

It is to be noted that when the flag information does not indicate application of correction (No in S522), decoding device 200 completes the processing without correcting the vertices on the boundary edge.

Moreover, decoding device 200 may or may not perform the process based on the method information.

Moreover, decoding device 200 may determine whether one or more vertices on the boundary edge are added or removed in another manner other than the above-mentioned method, e.g., in a manner that analyzes the number of iterations of subdivision of the submesh.

As described above, in the third aspect, the flag information may be decoded from a bitstream, and the flag information indicates whether to correct the number of vertices on the boundary edge when two or more submeshes are combined.

For example, decoding device 200 applies the subdivision process to all the edges of a predetermined submesh according to the specified number of iterations of subdivision.

Moreover, for example, when the decoded flag information indicates that the number of vertices on the boundary edge is equalized, decoding device 200 adds one or more vertices to the submesh or removes one or more vertices from the submesh.

For example, the flag information is signaled as a SEI message. Decoding device 200 adjusts (corrects) the number of vertices after completing the subdivision process and combining two or more adjacent submeshes. When the number of vertices is changed, the topology of each submesh is updated accordingly.

It is to be noted that triangles in the submesh may be reconstructed after vertices on the boundary edge are corrected (added or removed).

FIG. 66 is a diagram illustrating a specific example of a vertex correction process according to the embodiment. Specifically, FIG. 66 is a diagram for explaining a process of adding one or more vertices to the boundary edge based on the method information.

It is to be noted that whether to add or remove one or more vertices may be determined in any method instead of using the method information, e.g., a method of analyzing, by decoding device 200, the number of iterations of subdivision of the submesh.

For example, decoding device 200 adds (generates) a new vertex on the boundary edge by copying the coordinates of a vertex from the adjacent submesh.

In this example, submesh 1 with vertices A, B, C, D, and E and submesh 2 with B1, C1, X, Y, and Z are used for explanation. Submesh 1 and submesh 2 are adjacent in a base mesh. Vertex B and vertex B1 are the same in the base mesh, and vertex C and vertex C1 are the same in the base mesh. An edge connecting vertex B and vertex C in submesh 1 and an edge connecting vertex B1 and vertex C1 in submesh 2 are each a boundary edge.

It is to be noted that an internal edge is an edge shared with no other submeshes (non-overlapping edge).

Moreover, in this example, subdivision of submesh 1 is iterated 0 times, and subdivision of submesh 2 is iterated once. For example, decoding device 200 generates submesh 1 illustrated in (b) of FIG. 66 by iterating subdivision of submesh 1 illustrated in (a) of FIG. 66 0 times. In other words, when the number of iterations of subdivision is 0, as illustrated in (b) of FIG. 66, decoding device 200 does not perform subdivision on submesh 1 illustrated in (a) of FIG. 66. Moreover, for example, decoding device 200 generates submesh 2 illustrated in (f) of FIG. 66 by iterating subdivision of submesh 2 illustrated in (e) of FIG. 66 once. As illustrated in (f) of FIG. 66, new vertices Q1, R, S, T, U, V, and W are added to (generated in) submesh 2 by performing subdivision, and edges connecting these vertices (additional edges) are newly added (generated). In this manner, decoding device 200 generates triangles within submesh 2 by subdividing submesh 2.

For example, when the flag information indicates no correction of vertices (i.e., the flag is OFF or flag = no), as illustrated in (c) of FIG. 66, decoding device 200 does not perform a process for correction of vertices on submesh 1 illustrated in (b) of FIG. 66. On the other hand, for example, when the flag information indicates correction of vertices (i.e., the flag is ON (flag = ON) or flag = yes) and when the method information indicates addition of one or more vertices (i.e., method=ADD_VERTEX), decoding device 200 adds new vertex Q to (generated in) submesh 1 as illustrated in (d) of FIG. 66.

It is to be noted that a specific example of the method information (method) is described later (for example, see FIG. 74).

Furthermore, decoding device 200 generates triangles included in submesh 1 using new vertex Q. Specifically, decoding device 200 divides triangle ABC into two triangles, i.e., triangle BAQ and triangle QAC, using new vertex Q.

For example, decoding device 200 adds vertex Q corresponding to vertex Q1 to the boundary edge in submesh 1 by comparing submesh 1 and submesh 2.

For example, encoding device 100 determines whether vertices on a boundary edge shared between a first submesh such as submesh1 and a second submesh such as submesh 2 are the same between a first mesh formed by iterating subdivision of the first submesh a first number of times and a second mesh formed by iterating subdivision of the second submesh a second number of times. Furthermore, encoding device 100 encodes, into a bitstream, combination information regarding a process of combining the first mesh and the second mesh, such as flag information and/or method information, based on the determination result. For example, the flag information is information indicating whether correction is necessary for the vertices (specifically, the number of vertices) on the boundary edge of at least one of the first mesh or the second mesh. Moreover, the method information is information indicating how to correct (a correction method of) the vertices on the boundary edge of at least one of the first mesh or the second mesh. In this example, encoding device 100 encodes, into the bitstream, the method information including information (ADD_VERTEX) indicating addition of a vertex to the boundary edge of at least one of the first mesh or the second mesh. Decoding device 200 decodes such combination information form the bitstream, and determines, based on the decoded combination information, whether vertices on the boundary edge are the same between the first mesh formed by iterating subdivision of the first submesh the first number of times and the second mesh formed by iterating subdivision of the second submesh the second number of times. Here, for example, when decoding device 200 determines that the vertices are not the same, decoding device 200 corrects vertices on the boundary edge of at least one of the meshes based on the method information included in the combination information, corrects a triangle included in the at least one of the meshes based on the corrected vertices, and combines the first mesh and the second mesh at least one of which includes the corrected triangle.

FIG. 67 is a diagram illustrating another specific example of the vertex correction process according to the embodiment. Specifically, FIG. 67 is a diagram for explaining a process of removing one or more vertices from the boundary edge based on the method information.

In this example, as with the case of the example illustrated in FIG. 66, submesh 1 and submesh 2 are used for explanation.

Moreover, in this example, subdivision of submesh 1 is iterated once, and subdivision of submesh 2 is iterated 0 times. For example, decoding device 200 generates submesh 1 illustrated in (b) of FIG. 67 by iterating subdivision of submesh 1 illustrated in (a) of FIG. 67 once. As illustrated in (b) of FIG. 67, new vertices Q, R, S, T, U, V, and W are added to (generated in) submesh 1 by performing subdivision, and edges connecting these vertices (additional edges) are newly added (generated). In this manner, decoding device 200 generates triangles within submesh 1 by subdividing submesh 1. Moreover, for example, decoding device 200 generates submesh 2 illustrated in (f) of FIG. 67 by iterating subdivision of submesh 2 illustrated in (e) of FIG. 67 0 times. In other words, when the number of iterations of subdivision is 0, as illustrated in (f) of FIG. 67, decoding device 200 does not perform subdivision on submesh 2 illustrated in (e) of FIG. 67.

For example, when the flag information indicates no correction of vertices (i.e., the flag is OFF or flag = no), as illustrated in (c) of FIG. 67, decoding device 200 does not perform a process for correction of vertices on submesh 1 illustrated in (b) of FIG. 67. On the other hand, for example, when the flag information indicates correction of vertices (i.e., flag = ON or flag = yes) and when the method information indicates removal of one or more vertices (i.e., method=REMOVE_VERTEX), decoding device 200 removes one or more vertices on the boundary edge. In this example, decoding device 200 generates submesh 1 illustrated in (d) of FIG. 67 by removing vertex Q.

In this manner, for example, decoding device 200 removes one or more vertices on the boundary edge by merging two or more vertices into one vertex. In this example, among a plurality of vertices on the boundary edge of submesh 1 (vertices B, C, and Q), decoding device 200 removes vertex Q that does not correspond to any vertex in submesh 2.

Furthermore, decoding device 200 regenerates triangles included in submesh 1 based on removed vertex Q. In other words, decoding device 200 removes vertex Q, and thus corrects submesh 1 to generate a new triangle within submesh 1 by deleting the edges connected with vertex Q. Specifically, as illustrated in (d) of FIG. 67, decoding device 200 generates triangle UTB and triangle BTC by adding the edge connecting vertex B and vertex T. In this manner, for example, triangle UQT, triangle BUQ, and triangle QTC are replaced with triangle UTB and triangle BTC.

For example, decoding device 200 removes vertex Q not corresponding to any vertex in submesh 2 from the boundary edge in submesh 1 by comparing submesh 1 and submesh 2.

Moreover, in this example, encoding device 100 encodes, into the bitstream, the method information including information (REMOVE_VERTEX) indicating removal of at least one of one or more vertices on the boundary edge of at least one of the first mesh or the second mesh.

FIG. 68 is a diagram illustrating a specific example of a position where flag information is stored, according to the embodiment.

As illustrated in FIG. 68, for example, the flag information is signaled in a SEI message of a bitstream.

It is to be noted that the flag information may be signaled in a header of the bitstream.

FIG. 69 is a diagram for explaining an example of a syntax for signaling the flag information according to the embodiment.

As illustrated in FIG. 69, the value indicated by the flag information (flag) is, for example, a binary value. Moreover, the value indicated by the flag information is signaled at the frame level. For example, when the value indicated by the flag information is equal to 1, the flag information indicates that the correction process is applied to all the submeshes associated with the current frame. On the other hand, for example, when the value indicated by the flag information is equal to 0, the flag information indicates that the correction process is not applied. When the flag information is not present, the value at the position where the value of the flag information is signaled is set to 0.

FIG. 70 is a diagram for explaining another example of the syntax for signaling the flag information according to the embodiment.

As illustrated in FIG. 70, the flag information may be signaled for each of the submeshes. When the flag (flag [i]) is equal to 1, it is indicated that the correction process is applied to the submesh associated with submesh_id. On the other hand, when flag [i] is equal to 0, it is indicated that the correction process is not applied to the submesh associated with submesh_id. When flag [i] is not present, flag [i] is set to 0.

It is to be noted that the flag information has been described as indicating whether the correction process is applied. However, the flag information may be a flag indicating whether the vertices on the boundary edge are matched between submeshes. Decoding device 200 may determine, based on the flag, whether the correction process is applied.

Moreover, encoding device 100 need not transmit submesh_id. In this case, it may be defined that the loop count is determined as submesh_id.

FIG. 71 is a diagram illustrating a specific example of a position where method information is stored, according to the embodiment.

As illustrated in FIG. 71, for example, the method information (method) is signaled in a SEI message of a bitstream.

It is to be noted that the method information may be signaled in a header of the bitstream.

FIG. 72 is a diagram for explaining an example of a syntax for signaling the method information according to the embodiment.

As illustrated in FIG. 72, the method information indicates an identifier of the correction process to be applied to the submesh associated to the current frame.

FIG. 73 is a diagram for explaining another example of the syntax for signaling the method information according to the embodiment.

As illustrated in FIG. 73, the method information may indicate an identifier of the correction process to be applied to the submesh associated to submesh_id.

FIG. 74 is a diagram illustrating yet another specific example of the vertex correction process according to the embodiment. Specifically, FIG. 74 is a list indicating an example of a relationship between the identifier indicated by the method information and the type of the correction method (correction method name).

For example, when the method information is 0, the method information indicates that decoding device 200 does not perform the correction process. Moreover, for example, when the method information is 1, the method information indicates that decoding device 200 performs the process of adding one or more vertices in the correction process. For example, when the method information is 2, the method information indicates that decoding device 200 performs the process of removing one or more vertices in the correction process.

It is to be noted that the correction process may be derived by decoding device 200 without signaling the method information in the bitstream.

For example, decoding device 200 may compare the number of iterations of subdivision between two submeshes, e.g., by calculating the difference in the number of iterations of subdivision between the two submeshes, to determine whether one or more vertices are added or removed. For example, when the number of iterations of subdivision of submesh 1 is less than that of submesh 2, the correction process for adding one or more vertices is applied to submesh 1. On the other hand, for example, when the number of iterations of subdivision of submesh 1 is greater than that of submesh 2, the correction process for removing one or more vertices is applied to submesh 1. Moreover, for example, when the number of iterations of subdivision of submesh 1 is equal to that of submesh 2, one or more vertices are neither added nor removed.

Moreover, for example, when the method information indicates the process of adding one or more vertices in the correction process and when the number of iterations of subdivision of submesh 1 is less than that of submesh 2, the correction process for adding one or more vertices is applied to submesh 1. On the other hand, for example, when the method information indicates the process of removing one or more vertices in the correction process and when the number of iterations of subdivision of submesh 1 is greater than that of submesh 2, the correction process for removing one or more vertices is applied to submesh 1.

It is to be noted that the example illustrated in FIG. 68 and the example illustrated in FIG. 71 may be implemented in combination.

Moreover, the example illustrated in FIG. 69, the example illustrated in FIG. 70, the example illustrated in FIG. 72 and the example illustrated in FIG. 73 may be implemented in combination.

Next, an example of a mesh adjacent to a plurality of submeshes will be described.

FIG. 75 is a diagram for explaining an example of a relationship between the flag information and the number of iterations of subdivision for a plurality of submeshes according to the embodiment.

In the example illustrated in FIG. 75, submesh 3 is adjacent to submesh 1 and submesh 2, and the boundaries are overlapping. Moreover, the number of iterations of subdivision of submesh 1 (iteration count) is 1, the number of iterations of subdivision of submesh 2 is 2, and the number of iterations of subdivision of submesh 3 is 2. Accordingly, the vertices on the boundary edge shared between submesh 1 and submesh 3 are likely to be different between the vertices generated by iterating subdivision of submesh 1 and the vertices generated by iterating subdivision of submesh 3. Moreover, the vertices on the boundary edge shared between submesh 2 and submesh 3 are likely to be the same between the vertices generated by iterating subdivision of submesh 2 and the vertices generated by iterating subdivision of submesh 3.

For example, encoding device 100 sets flag=ON for the flag information corresponding to submesh 1 since submesh 1 shares the boundary edge only with submesh 3 and the number of iterations of subdivision is not equal between the submeshes.

Moreover, for example, encoding device 100 sets flag=OFF for the flag information corresponding to submesh 2 since submesh 2 shares the boundary edge only with submesh 3 and the number of iterations of subdivision is equal between the submeshes.

Moreover, submesh 3 shares the boundary edges with submesh 1 and submesh 2. Regarding the number of iterations of subdivision along the boundary edge, submesh 3 is the same as submesh 2, whereas submesh 3 is not the same as submesh 1.

For example, when any one of a plurality of submeshes having overlapping boundaries (i.e., a plurality of submeshes having shared boundary edges) has a different number of iterations of subdivision or when the vertices after subdivision of each submesh are not the same between the submeshes on the boundary, encoding device 100 sets flag=ON.

FIG. 76 is a diagram for explaining another example of the relationship between the flag information and the number of iterations of subdivision for a plurality of submeshes according to the embodiment.

In the example illustrated in FIG. 76, submesh 3 is adjacent to submesh 1 and submesh 2, and the boundaries are overlapping. Moreover, the number of iterations of subdivision of submesh 1 (iteration count) is 1, the number of iterations of subdivision of submesh 2 is 3, and the number of iterations of subdivision of submesh 3 is 2. Accordingly, the vertices on the boundary edge shared between submesh 1 and submesh 3 are likely to be different between the vertices generated by iterating subdivision of submesh 1 and the vertices generated by iterating subdivision of submesh 3. Moreover, the vertices on the boundary edge shared between submesh 2 and submesh 3 are likely to be the different between the vertices generated by iterating subdivision of submesh 2 and the vertices generated by iterating subdivision of submesh 3.

For example, encoding device 100 sets flag=ON for the flag corresponding to submesh 1 since submesh 1 shares the boundary edge only with submesh 3 and the number of iterations of subdivision is not equal between the submeshes.

Moreover, for example, encoding device 100 sets flag=ON for the flag corresponding to submesh 2 since submesh 2 shares the boundary edge only with submesh 3 and the number of iterations of subdivision is not equal between the submeshes.

Moreover, for example, encoding device 100 sets flag=ON for the flag corresponding to submesh 3 since submesh 3 shares the boundary edges with submesh 1 and submesh 2 and the number of iterations of subdivision is not equal to those of both submesh 1 and submesh 2.

It is to be noted that, when encoding device 100 indicates the method information (method) in the metadata, the method information for each submesh may be indicated by indicating information items of a plurality of adjacent submeshes for one submesh.

For example, in the loop of submesh 3 in the syntax, encoding device 100 may indicate flag=ON and method=add corresponding to submesh 1, and flag=ON and method=remove corresponding to submesh 2.

As described above, for example, encoding device 100 determines whether vertices on a boundary edge shared between a first submesh such as submesh1 and a second submesh such as submesh 2 are the same between a first mesh formed by iterating subdivision of the first submesh a first number of times and a second mesh formed by iterating subdivision of the second submesh a second number of times. Here, for example, when the first number of times and the second number of times are equal, encoding device 100 determines that the vertices on the boundary edge are the same between the first mesh and the second mesh, and when the first number of times and the second number of times are not equal, encoding device 100 determines that the vertices on the boundary edge are not the same between the first mesh and the second mesh. Moreover, for example, when encoding device 100 determines that the vertices on the boundary edge are not the same between the first mesh and the second mesh, encoding device 100 encodes the combination information including the method information into the bitstream. Moreover, for example, when encoding device 100 determines that the vertices on the boundary edge are the same between the first mesh and the second mesh, encoding device 100 may generate a bitstream including no method information.

It is to be noted that encoding device 100 may indicate, in a bitstream (specifically, metadata included in the bitstream), a flag indicating whether the boundary between submeshes is overlapping and a flag indicating the type of overlap when the boundary between submeshes is overlapping.

FIG. 77 is a diagram for explaining an example of a syntax for signaling information indicating a type of overlap of a plurality of submeshes according to the embodiment.

submesh_duplicate_flag is a flag indicating whether a submesh included in a mesh (e.g., a base mesh) is overlapping with another submesh. For example, when submesh_duplicate_flag is equal to 1, submesh_duplicate_flag indicates overlap. On the other hand, for example, when submesh_duplicate_flag is equal to 0, submesh_duplicate_flag indicates no overlap.

submesh_duplicate_type is information indicating the type of overlap of the submesh (how the submesh is overlapping). For example, when submesh_duplicate_type is equal to 0, submesh_duplicate_type indicates that the boundary edge on the periphery of the submesh and the vertices on the periphery of the submesh are overlapping with those of another submesh, and edges, vertices, and faces located inside the periphery of the submesh are not overlapping. On the other hand, for example, when submesh_duplicate_type is equal to 1, submesh_duplicate_type indicates that not only the periphery of the submesh but also edges, vertices, and faces located inside the periphery of the submesh are overlapping.

It is to be noted that, instead of the flag indicating overlap of the submesh, encoding device 100 may use a flag to indicate, in a bitstream (specifically, metadata included in the bitstream), that there is a possibility of overlap of the submesh.

Moreover, such a flag (parameter set) may be stored in a parameter set at the sequence level, in a parameter set at the frame level, or in both of the parameter sets. When such a flag is stored in both of the parameter sets, for example, encoding device 100 overwrites the parameter set at the sequence level using the parameter set at the frame level.

Moreover, such a parameter set may be indicated in SEI.

Moreover, regarding a flag indicating whether the boundary vertices after subdivision are the same on the boundary edge between submeshes or a flag indicating whether the boundary vertices after subdivision of the submesh are adjusted, it may be determined that encoding device 100 signals the flag when submesh_duplicate_flag is ON, and does not signal the flag when submesh_duplicate_flag is OFF. Moreover, when submesh_duplicate_flag is OFF, it may be determined that encoding device 100 is prohibited from signaling the flag. When the flag is signaled under such determinations, it may be determined that the flag set by the signaling is invalid.

Moreover, when submesh_duplicate_flag is ON, decoding device 200 may perform the process of determining whether to correct the boundary vertices after subdivision, and when submesh_duplicate_flag is OFF, decoding device 200 may determine that the boundary vertices are not corrected.

In this manner, encoding device 100 adds the above flag to the upper-level metadata, and thus decoding device 200 can determine whether there is a possibility that a submesh is overlapping with another submesh. Accordingly, decoding device 200 can determine, from the flag, whether decoding device 200 need to perform a predetermined process (correction process) on the overlapping boundary edge.

When decoding device 200 does not need to perform such a process, a detection process of boundary information and an adjustment process of the boundary vertices after boundary subdivision are unnecessary. Receipt, decoding, and analysis of the related information are also unnecessary. Accordingly, it is possible to reduce the processing amount.

It is to be noted that, through the transmission of only the above flag by encoding device 100, decoding device 200 may determine that there is a possibility of overlap of a boundary, and further by analyzing the number of iterations of subdivision for each of the submeshes, decoding device 200 may determine whether the boundary vertices after subdivision are the same between submeshes and determine whether correction of the boundary vertices is necessary.

### [Effects of Third Aspect]

With the configuration of the third aspect, the subjective quality of the full mesh is improved by merging the submeshes each encoded using a different method that is different in the number of iterations of subdivision or the subdivision method (subdivision scheme).

### [Combination with Other Aspects]

Encoding device 100 according to the present aspect may be performed by combining at least part of the other aspects in the present disclosure. furthermore, the present aspect may be performed by combining, with other aspects, part of the processes indicated in any of the flow charts according to the present aspect, part of the configuration of any of the devices, part of syntaxes, and/or the like.

Moreover, the above-mentioned process of encoding device 100 may be performed similarly also in decoding device 200.

Moreover, not all the constituent elements described in the present aspect are always necessary, and only part of the constituent elements of the third aspect may be included.

### <Overview of Present Disclosure>

Next, an overview of techniques derived from the disclosure in this specification will be described.

For example, in a decoding method according to the present disclosure, for a plurality of submeshes forming an overall three-dimensional mesh, position information of a vertex included in a polygon forming a submesh and connection information regarding a connection relationship between vertexes are obtained from an encoded bitstream (that is, decoding of information), the polygon is generated using the position information and the connection information (that is, decoding of a face), whether an edge forming the polygon is a boundary between submeshes is determined (that is, conditional determination of an edge), a division process for the edge is determined based on the determination result (that is, determination of a subdivision process based on the determination result), and the edge is divided (subdivided) using the division process.

Specific examples or modifications of the division process will be described below.

In the division process, the method of dividing the edge (the division method) may be specified.

In the division process, the number of times the edge is divided (the number of iterations of division) may be specified.

In the division process, the method of dividing the edge and the number of times the edge is divided (the division method and the number of iterations of division) may be specified.

The division process may be a process of generating a new vertex based on position information of a plurality of vertexes forming the edge (another definition of the division process).

In the decoding process, a parameter that specifies the division process may be decoded from an encoded bitstream (signaling of the division process).

At least any of the division processes may be prescribed in advance (a predetermined division process).

The division process includes not dividing the edge (an option not to divide).

Specific examples or modifications of the determination process will be described below.

In the determination process, whether one edge to be processed among edges forming the polygon is a boundary of submeshes may be determined (an edge-based determination process).

In the determination process, whether edges forming the polygon include an edge that is a boundary of submeshes may be determined (determination of whether the polygon includes a boundary edge).

The boundary of submeshes may be an edge that includes, at opposite ends thereof, a plurality of vertexes forming a plurality of submeshes (a definition of the boundary).

Specific examples of the relationship between the determination result and the division process will be described below.

In the division process, when the one edge to be processed is a boundary of submeshes, the one edge may be divided using a first division process.

In the division process, when the one edge to be processed is not a boundary of submeshes, the one edge may be divided using a second division process.

In the division process, when the polygon includes an edge that is a boundary of submeshes, the edge that is a boundary of submeshes may be divided using the first division process, and an edge that is not a boundary of submeshes may be divided using the second division process.

In the division process, when the polygon includes no edge that is a boundary of submeshes, all the edges included in the polygon may be divided using the second division process.

In the division process, when the polygon includes an edge that is a boundary of submeshes, whether the first division process and the second division process are in a predetermined relationship may be determined, and the division process may be determined based on the determination result. For example, the division process may be switched based on the result of comparison between the number of iterations of division specified in the first division process and the number of iterations of division specified in the second division process.

Specific examples of the first division process (a division process for a boundary) and the second division process (a division process for a non-boundary) will be described below.

The first division process and the second division process may be different processes (different division processes are selected).

The first division process may be selected from a first division process group, and the second division process may be selected from a second division process group. The first division process group and the second division process group may include different division processes (a division process is selected from among a plurality of division processes or in other words different options).

In the first division process, a same common process may be selected for a plurality of submeshes. Alternatively, in the division process, processes may be selected from the same group for a plurality of submeshes.

The first division process may be determined on a sequence basis or on a frame basis. A parameter used for the first division process may be encoded in an encoded bitstream.

The second division process may be determined on a submesh basis. A parameter used for the second division process may be encoded in an encoded bitstream.

Note that "different processes" may mean processes that are different in at least one of the number of iterations of division or the division method.

Furthermore, for example, an encoding device according to the present disclosure includes a circuit and a memory connected to the circuit, and in operation, the circuit encodes a first vertex and a second vertex in a bitstream, the first vertex being connected to the second vertex by an edge, determines whether the edge is a boundary edge, derives a third vertex from only the first vertex and the second vertex when the edge is a boundary edge, a position of the third vertex being interpolated based on only a position of the first vertex and a position of the second vertex, and derives a fourth vertex from the first vertex, the second vertex, and at least one fifth vertex that is different from the first vertex and the second vertex when the edge is not a boundary edge, a position of the fourth vertex being interpolated based on the position of the first vertex, the position of the second vertex, and a position of the at least one fifth vertex.

Furthermore, for example, an encoding device according to the present disclosure includes an input terminal to which at least one image is input, a block divider that divides a first image included in the at least one image into a plurality of blocks, an intra predictor that predicts a block included in the first image using a reference image included in the first image, an inter predictor that predicts a block included in the first image using a reference block included in a second image that is different from the first image, a loop filter that filters a block included in the first image, a transformer that transforms a prediction error between an original signal and a prediction signal generated by the intra predictor or the inter predictor to generate a transformed coefficient, a quantizer that quantizes the transformed coefficient to generate a quantized coefficient, an entropy encoder that variable-length encodes the quantized coefficient to generate an encoded bitstream, and an output terminal from which the encoded quantized coefficient and the bitstream including control information are output, the encoder encodes a first vertex and a second vertex in the bitstream, the first vertex being connected to the second vertex by an edge, determines whether the edge is a boundary edge, derives a third vertex from only the first vertex and the second vertex when the edge is a boundary edge, a position of the third vertex being interpolated based on only a position of the first vertex and a position of the second vertex, and derives a fourth vertex from the first vertex, the second vertex, and at least one fifth vertex that is different from the first vertex and the second vertex when the edge is not a boundary edge, a position of the fourth vertex being interpolated based on the position of the first vertex, the position of the second vertex, and a position of the at least one fifth vertex.

Furthermore, for example, a decoding device according to the present disclosure includes a circuit and a memory connected to the circuit, and in operation, the circuit decodes a first vertex and a second vertex from a bitstream, the first vertex being connected to the second vertex by an edge, determines whether the edge is a boundary edge, derives a third vertex from only the first vertex and the second vertex when the edge is a boundary edge, a position of the third vertex being interpolated based on only a position of the first vertex and a position of the second vertex, and derives a fourth vertex from the first vertex, the second vertex, and at least one fifth vertex that is different from the first vertex and the second vertex when the edge is not a boundary edge, a position of the fourth vertex being interpolated based on the position of the first vertex, the position of the second vertex, and a position of the at least one fifth vertex.

Furthermore, for example, a decoding device according to the present disclosure includes an input terminal to which the bitstream is input, a decoder that decodes the bitstream to output a quantized coefficient, an inverse quantizer that inverse-quantizes the quantized coefficient to output a transformed coefficient, an inverse transformer that inverse-transforms the transformed coefficient to output a prediction error, an intra predictor that predicts a block included in a first image using a reference image included in the first image, an inter predictor that predicts a block included in the first image using a reference block included in a second image that is different from the first image, a loop filter that filters a block included in the first image, and an output terminal from which an image including the first image is output, the decoder decodes a first vertex and a second vertex from the bitstream, the first vertex being connected to the second vertex by an edge, determines whether the edge is a boundary edge, derives a third vertex from only the first vertex and the second vertex when the edge is a boundary edge, a position of the third vertex being interpolated based on only a position of the first vertex and a position of the second vertex, and derives a fourth vertex from the first vertex, the second vertex, and at least one fifth vertex that is different from the first vertex and the second vertex when the edge is not a boundary edge, a position of the fourth vertex being interpolated based on the position of the first vertex, the position of the second vertex, and a position of the at least one fifth vertex.

Furthermore, for example, an encoding method according to the present disclosure includes encoding a first vertex and a second vertex in a bitstream, the first vertex being connected to the second vertex by an edge, determining whether the edge is a boundary edge, deriving a third vertex from only the first vertex and the second vertex when the edge is a boundary edge, a position of the third vertex being interpolated based on only a position of the first vertex and a position of the second vertex, and deriving a fourth vertex from the first vertex, the second vertex, and at least one fifth vertex that is different from the first vertex and the second vertex when the edge is not a boundary edge, a position of the fourth vertex being interpolated based on the position of the first vertex, the position of the second vertex, and a position of the at least one fifth vertex.

Furthermore, for example, a decoding method according to the present disclosure includes decoding a first vertex and a second vertex from a bitstream, the first vertex being connected to the second vertex by an edge, determining whether the edge is a boundary edge, deriving a third vertex from only the first vertex and the second vertex when the edge is a boundary edge, a position of the third vertex being interpolated based on only a position of the first vertex and a position of the second vertex, and deriving a fourth vertex from the first vertex, the second vertex, and at least one fifth vertex that is different from the first vertex and the second vertex when the edge is not a boundary edge, a position of the fourth vertex being interpolated based on the position of the first vertex, the position of the second vertex, and a position of the at least one fifth vertex.

Furthermore, for example, whether the edge is a boundary edge is determined based on the number of connections to the edge. Furthermore, for example, whether the edge is a boundary edge is determined by using one or more parameters decoded from the bitstream. Furthermore, for example, the one or more parameters are decoded from a header of the bitstream. Furthermore, for example, the first vertex, the second vertex, the third vertex, the fourth vertex, and the fifth vertex are vertexes of a three-dimensional mesh frame. Furthermore, for example, the first vertex, the second vertex, the third vertex, the fourth vertex, and the fifth vertex are vertexes of a three-dimensional submesh.

In the encoding technique for multimedia data, there is a demand for new methods for improving the encoding efficiency and the image quality and for reducing the circuit size.

Each of the embodiments, some of the components, and each of the methods in the present disclosure enables, for example, at least one of improvement in encoding efficiency, improvement in image quality, reduction in encoding/decoding processing amount, reduction in circuit size, improvement in encoding/decoding processing speed, and the like. Alternatively, each of the embodiment, a part of each component, and each of the methods in the present disclosure enables any of an element, such as a filter, a block, a size, a motion vector, a reference picture, and a reference block, or an arithmetic operation to be appropriately selected in encoding and decoding. The present disclosure includes a disclosure relating to a configuration and a method that can provide an advantage other than the advantages described above. Examples of such a configuration and a method include a configuration and a method that improve the encoding efficiency while reducing the increase in processing amount.

Additional values and advantages of aspects of the present disclosure will be apparent from the specification and the drawings. The values and/or advantages can be provided by each of the various embodiments and features described in the specification and the drawings, and all the embodiments and features in the specification and the drawings are not necessary to provide one or more of such values and/or advantages.

These general or specific aspects can be implemented by using a system, an integrated circuit, a computer program, a computer-readable recording medium such as CD-ROM, or an arbitrary combination of systems, methods, integrated circuits, computer programs, and computer-readable recording media.

### <Representative Example>

FIG. 78 is a flowchart illustrating an example of a basic encoding process according to the present embodiment. For example, encoding device 100 illustrated in FIG. 24 includes circuit 151 and memory 152 connected to circuit 151. In encoding device 100, circuit 151 performs the following processes in operation.

First, encoding device 100 determines whether a total number of vertices on a boundary edge, which is an edge shared between a first submesh in a three-dimensional mesh and a second submesh in the three-dimensional mesh, is equal between a first mesh formed by iterating subdivision of the first submesh a first number of times and a second mesh formed by iterating subdivision of the second submesh a second number of times (S601). Specifically, encoding device 100 determines whether vertices on a boundary edge, which is an edge shared in a three-dimensional mesh before the three-dimensional mesh is divided into a first submesh obtained by dividing the three-dimensional mesh and a second submesh obtained by dividing the three-dimensional mesh, are the same between a first mesh formed by iterating subdivision of the first submesh a first number of times and a second mesh formed by iterating subdivision of the second submesh a second number of times.

Here, the three-dimensional mesh is, for example, the above-mentioned original mesh. For example, the original mesh is divided into a plurality of submeshes by encoding device 100. In some cases, the submesh is transformed to a base mesh by removing part of the vertices and the edges. Here, each of the first submesh and the second submesh is an example of the submesh (or the submesh transformed to the base mesh). For example, the first submesh and the second submesh are adjacent submeshes in the three-dimensional mesh, and include a boundary edge that is an edge included in both the first submesh and the second submesh in the three-dimensional mesh. Moreover, the first mesh is a mesh obtained by iterating subdivision of the first submesh to add one or more vertices and edges to the first submesh, and includes the boundary edge. Moreover, the second mesh is a mesh obtained by iterating subdivision of the second submesh to add one or more vertices and edges to the second submesh, and includes the boundary edge. Encoding device 100 determines whether the number of vertices located on the boundary edge included in the first mesh is equal to the number of vertices located on the boundary edge included in the second mesh.

It is to be noted that, for example, each of the first number of times and the second number of times is the number of iterations of subdivision of the above submesh (more specifically, the number of iterations of subdivision of the above boundary edge). The first number of times and the second number of times may be set to any number of times, and are not particularly limited. Moreover, the first number of times and the second number of times may be the same or different. Moreover, the first number of times and the second number of times may be 0 times. In other words, the first submesh and the second submesh may be subdivided or may not be subdivided. Moreover, the first submesh and the first mesh may be the same or different. Moreover, the second submesh and the second mesh may be the same or different.

Next, encoding device 100 encodes, into a bitstream, combination information regarding a process of combining the first mesh and the second mesh, based on the determination result of the determining (S601) (S602).

Encoding device 100 encodes, into the bitstream, position information indicating the position of each of the vertices included in each submesh and connection information indicating the relationship between the vertices. In other words, encoding device 100 generates the bitstream including the position information and the connection information for each submesh. For example, the connection information is information indicating whether there is an edge connecting vertices. Moreover, encoding device 100 encodes the combination information into the bitstream. For example, the combination information is information including the flag information (flag described above) and/or the method information (method described above). For example, encoding device 100 transmits, to decoding device 200, the bitstream including such various information items.

With this, decoding device 200 that has obtained the combination information from the bitstream can combine the first mesh and the second mesh without performing a process for combining the first mesh and the second mesh in encoding device 100. Accordingly, it is possible to reduce the processing amount.

Moreover, for example, the combination information includes flag information indicating whether correction is necessary for the total number of vertices on the boundary edge of at least one of the first mesh or the second mesh.

For example, when encoding device 100 determines that the total number of vertices is equal in step S601, encoding device 100 encodes, into the bitstream, the flag information indicating that correction is necessary for the total number of vertices on the boundary edge of at least one of the first mesh or the second mesh. On the other hand, for example, when encoding device 100 determines that the total number of vertices is not equal in step S601, encoding device 100 encodes, into the bitstream, the flag information indicating that correction is not necessary for the total number of vertices on the boundary edge of at least one of the first mesh or the second mesh.

It is to be noted that, for example, the correction of the number of vertices refers to addition and/or removal of one or more vertices, but change in vertex position or the like may be performed additionally.

With this, decoding device 200 that has obtained the flag information from the bitstream can determine, from the flag information, whether correction is necessary for the number of vertices on the boundary edge. Accordingly, it is possible to reduce the processing amount.

Moreover, for example, the combination information includes method information indicating how to correct the total number of vertices on the boundary edge of at least one of the first mesh or the second mesh.

With this, decoding device 200 that has obtained the method information from the bitstream can appropriately correct the number of vertices on the boundary edge based on the method information.

Moreover, for example, the method information includes information indicating addition of a vertex to the boundary edge of at least one of the first mesh or the second mesh.

For example, the information indicating addition of a vertex is ADD_VERTEX described above (method=1).

With this, decoding device 200 that has obtained the method information from the bitstream can correct the number of vertices on the boundary edge based on the method information so that the number of vertices on the boundary edge becomes equal between the first mesh and the second mesh when the number of vertices on the boundary edge is different.

Moreover, for example, the method information includes information indicating removal of at least one of one or more vertices on the boundary edge of at least one of the first mesh or the second mesh.

For example, the information indicating removal of a vertex (more specifically, at least one of one or more vertices) is REMOVE_VERTEX described above (method=2).

With this, decoding device 200 that has obtained the method information from the bitstream can correct the number of vertices on the boundary edge based on the method information so that the number of vertices on the boundary edge becomes equal between the first mesh and the second mesh when the number of vertices on the boundary edge is different.

Moreover, for example, in bitstream encoding (S601), when it is determined that the number of vertices on the boundary edge is not equal between the first mesh and the second mesh in the determining, the combination information including the method information is encoded into the bitstream.

For example, when encoding device 100 determines that the number of vertices is equal in Step S601, encoding device 100 encodes the flag information into the bitstream, and does not encode the method information into the bitstream. In other words, in this case, the combination information includes the flag information and does not include the method information. On the other hand, for example, when encoding device 100 determines that the number of vertices is not equal in Step S601, encoding device 100 encodes the flag information into the bitstream, and further encodes the method information into the bitstream. In other words, in this case, the combination information includes the flag information and further includes the method information.

With this, when the number of vertices on the boundary edge is not equal between the first mesh and the second mesh, i.e., when correction is necessary for the number of vertices on the boundary edge, decoding device 200 can obtain the method information from the bitstream to appropriately correct the vertices on the boundary edge.

Moreover, for example, when the first number of times and the second number of times are equal in the determining, it is determined that the number of vertices on the boundary edge is equal between the first mesh and the second mesh, and when the first number of times and the second number of times are not equal, it is determined that the number of vertices on the boundary edge is not equal between the first mesh and the second mesh.

Each mesh on which subdivision is iterated a different number of times has a different number of vertices. For this reason, by determining whether the number of vertices on the boundary edge is equal between the first mesh and the second mesh based on the number of iterations of subdivision, it is possible to correctly determine whether the number of vertices on the boundary edge is equal between the first mesh and the second mesh.

FIG. 79 is a flowchart illustrating an example of a basic decoding process according to the present embodiment. For example, decoding device 200 illustrated in FIG. 25 includes circuit 251 and memory 252 connected to circuit 251. In decoding device 200, circuit 251 performs the following processes in operation.

First, decoding device 200 decodes, from a bitstream, combination information regarding a process of combining a first mesh and a second mesh (S611).

Next, decoding device 200 determines, based on the combination information, whether a total number of vertices on a boundary edge, which is an edge shared between a first submesh in a three-dimensional mesh and a second submesh in the three-dimensional mesh, is equal between the first mesh formed by iterating subdivision of the first submesh a first number of times and the second mesh formed by iterating subdivision of the second submesh a second number of times (S612).

For example, decoding device 200 generates the first mesh and the second mesh by obtaining the position information and the connection information from the bitstream and iterating subdivisions of the first submesh and the second submesh. The first number of times and the second number of times may be included in the bitstream, or may be determined in advance. Moreover, for example, decoding device 200 determines, based on the combination information, whether to correct the number of vertices on the boundary edge, and combines the first mesh and the second mesh after correcting the number of vertices according to the determination result or without correcting the number of vertices. With this, decoding device 200 generates (reconstructs) the three-dimensional mesh.

With this, decoding device 200 can combine the first mesh and the second mesh based on the combination information.

Moreover, for example, the combination information includes flag information indicating whether correction is necessary for the total number of vertices on the boundary edge of at least one of the first mesh or the second mesh.

Decoding device 200 determines, based on the flag information, whether correction is necessary for the total number of vertices on the boundary edge of at least one of the first mesh or the second mesh. For example, when the flag information indicates that correction is necessary for the number of vertices, decoding device 200 combine the first mesh and the second mesh after correcting the number of vertices on the boundary edge. On the other hand, for example, when the flag information indicates that correction is not necessary for the number of vertices, decoding device 200 combines the first mesh and the second mesh without correcting the number of vertices.

With this, decoding device 200 can determine, from the flag information, whether correction is necessary for the number of vertices on the boundary edge.

Moreover, for example, the combination information includes method information indicating how to correct the total number of vertices on the boundary edge of at least one of the first mesh or the second mesh.

For example, when the flag information indicates that correction is necessary for the number of vertices, decoding device 200 obtains (decodes) the method information from the bitstream, and corrects the number of vertices based on the method information. On the other hand, for example, when the flag information indicates that correction is not necessary for the number of vertices, decoding device 200 combines the first mesh and the second mesh without performing the process of obtaining (decoding) the method information from the bitstream.

With this, decoding device 200 can appropriately correct the number of vertices on the boundary edge based on the method information.

Moreover, for example, the method information includes information indicating addition of a vertex to the boundary edge of at least one of the first mesh or the second mesh.

With this, decoding device 200 that has obtained the method information from the bitstream can correct the number of vertices on the boundary edge based on the method information so that the number of vertices on the boundary edge becomes equal between the first mesh and the second mesh when the number of vertices on the boundary edge is different.

Moreover, for example, the method information includes information indicating removal of at least one of one or more vertices on the boundary edge of at least one of the first mesh or the second mesh.

With this, decoding device 200 that has obtained the method information from the bitstream can correct the number of vertices on the boundary edge based on the method information so that the number of vertices on the boundary edge becomes equal between the first mesh and the second mesh when the number of vertices on the boundary edge is different.

Moreover, for example, when it is determined that the number of vertices on the boundary edge is not equal between the first mesh and the second mesh in the determining (S612), the total number of vertices on the boundary edge of the at least one of the first mesh or the second mesh is corrected based on the method information, a triangle included in the at least one of the first mesh or the second mesh is corrected according to the total number of vertices corrected, and the first mesh and the second mesh at least one of which includes the triangle corrected are combined.

For example, decoding device 200 generates a vertex on an edge included in a submesh by subdividing the submesh, and forms a triangle in the submesh by connecting the generated vertex and any of the other vertices included in the submesh. In other words, decoding device 200 forms a triangle in the submesh by connecting the generated vertex and any of the other vertices included in the submesh using an edge. Here, for example, when one or more vertices are added or removed, a vertex connected to no edges may exist, or an unnecessary edge connected to no vertices may be formed. For this reason, when decoding device 200 has corrected the number of vertices, decoding device 200 regenerate triangles in the submesh by reconnecting vertices in the submesh after the correction of the number of vertices (the first mesh and/or the second mesh). Decoding device 200 reconstructs the three-dimensional mesh by combining the first mesh and the second mesh including the regenerated triangles.

As described above, when the number of vertices is corrected, triangles formed by connecting the vertices in the mesh are changed. Accordingly, when the number of vertices is corrected, the meshes are combined after the correction of the triangles included in the mesh. With this, it is possible to combine the meshes including triangles appropriately formed according to the vertices.

### <Other examples>

Although the aspects of encoding device 100 and decoding device 200 have thus far been described according to the embodiment, the aspects of encoding device 100 and decoding device 200 are not limited to the embodiment. Modifications that may be conceived by a person skilled in the art may be applied to the embodiment, and a plurality of constituent elements in the embodiment may be combined in any manner.

For example, processing performed by a specific constituent element in the embodiment may be performed by a different constituent element instead of the specific constituent element. Moreover, the order of processes may be changed or processes may be performed in parallel.

Moreover, as stated above, it is possible to implement, as an integrated circuit, at least part of the plurality of constituent elements in the present disclosure. At least part of the processes in the present disclosure may be used as an encoding method or a decoding method. A program for causing a computer to execute the encoding method or the decoding method may be used. Furthermore, a non-transitory computer-readable recording medium on which the program is recorded may be used. In addition, a bitstream for causing decoding device 200 to perform decoding may be used.

Moreover, at least part of the plurality of constituent elements and the processes in the present disclosure may be used as a transmitting device, a receiving device, a transmitting method, and a receiving method. A program for causing a computer to execute the transmitting method or the receiving method may be used. Furthermore, a non-transitory computer-readable recording medium on which the program is recorded may be used.

### [Industrial Applicability]

The present disclosure is useful in, for example, an encoding device, a decoding device, a transmitting device, a receiving device, and the like related to a three-dimensional mesh and can be applied to a computer graphics system, a three-dimensional data display system, and the like.

### [Reference Signs List]

100 encoding device
101, 121, 144 vertex information encoder
102, 145 connection information encoder
103, 122 attribute information encoder
104, 204, 1103 preprocessor
105, 205, 2106 postprocessor
110 three-dimensional data encoding system
111, 211 controller
112, 212 input/output processor
113 three-dimensional data encoder
114 system multiplexer
115 three-dimensional data generator
123 metadata encoder
124 multiplexer
131 vertex image generator
132 attribute image generator
133 metadata generator
134 video encoder
141 two-dimensional data encoder
142 mesh data encoder
143 texture encoder
148 description encoder
151, 251 circuit
152, 252 memory
200 decoding device
201, 221, 244 vertex information decoder
202, 245 connection information decoder
203, 222 attribute information decoder
210 three-dimensional data decoding system
213 three-dimensional data decoder
214 system demultiplexer
215, 247 presenter
216 user interface
223 metadata decoder
224 demultiplexer
231 vertex information generator
232 attribute information generator
234 video decoder
241 two-dimensional data decoder
242 mesh data decoder
243 texture decoder
246 mesh reconstructor
248 description decoder
300 network
310 external connector
1101 input mesh
1102, 2108 attribute map
1104, 2103 base mesh
1105, 2104 displacement data
1106 compressor
1107, 1304, 2101 bitstream
1108, 2105 metadata
1201 decimator
1202, 1209 quantizer
1203 base mesh encoder
1204, 2202 base mesh decoder
1205, 2203, 2207 inverse quantizer
1206, 1402, 2204 subdivider
1207 displacement vector calculator
1208 wavelet transformer
1210 image packer
1211, 1213 video encoder
1212, 2211 color converter
1214 multiplexer
1221, 1222, 2221, 2222 switcher
1223 arithmetic encoder
1301, 2304 mesh frame
1302, 2301, 2302 base mesh frame
1303, 2303 displacement information
1401 base mesh generator
1403 displacement data generator
2102 decompressor
2107 output mesh
2109 combiner
2201 demultiplexer
2205, 2210 video decoder
2206 image unpacker
2208 inverse wavelet transformer
2209 reconstructor
2223 arithmetic decoder
2305 decoder
2306 post-decoder
2307 pre-reconstructor
2308 reconstructor
2309 post-reconstructor
2310 adaptor
2311 final three-dimensional mesh frame

## Claims

1. An encoding device comprising:
a circuit; and
memory connected to the circuit, wherein
in operation, the circuit:
determines whether a total number of vertices on a boundary edge is equal between a first mesh and a second mesh, the boundary edge being an edge shared between a first submesh in a three-dimensional mesh and a second submesh in the three-dimensional mesh, the first mesh being formed by iterating subdivision of the first submesh a first number of times, the second mesh being formed by iterating subdivision of the second submesh a second number of times; and
encodes, into a bitstream, combination information regarding a process of combining the first mesh and the second mesh, based on a determination result of the determining.

2. The encoding device according to claim 1, wherein
the combination information includes flag information indicating whether correction is necessary for the total number of vertices on the boundary edge of at least one of the first mesh or the second mesh.

3. The encoding device according to claim 1, wherein
the combination information includes method information indicating how to correct the total number of vertices on the boundary edge of at least one of the first mesh or the second mesh.

4. The encoding device according to claim 3, wherein
the method information includes information indicating addition of a vertex to the boundary edge of at least one of the first mesh or the second mesh.

5. The encoding device according to claim 3, wherein
the method information includes information indicating removal of at least one of one or more vertices on the boundary edge of at least one of the first mesh or the second mesh.

6. The encoding device according to claim 3, wherein
in the encoding into the bitstream, when the total number of vertices on the boundary edge is determined not to be equal between the first mesh and the second mesh in the determining, the combination information including the method information is encoded into the bitstream.

7. The encoding device according to claim 1, wherein
in the determining,
when the first number of times and the second number of times are equal, the total number of vertices on the boundary edge is determined to be equal between the first mesh and the second mesh, and
when the first number of times and the second number of times are not equal, the total number of vertices on the boundary edge is determined not to be equal between the first mesh and the second mesh.

8. A decoding device comprising:
a circuit; and
memory connected to the circuit, wherein
in operation, the circuit:
decodes, from a bitstream, combination information regarding a process of combining a first mesh and a second mesh; and
determines, based on the combination information, whether a total number of vertices on a boundary edge is equal between the first mesh and the second mesh, the boundary edge being an edge shared between a first submesh in a three-dimensional mesh and a second submesh in the three-dimensional mesh, the first mesh being formed by iterating subdivision of the first submesh a first number of times, the second mesh being formed by iterating subdivision of the second submesh a second number of times.

9. The decoding device according to claim 8, wherein
the combination information includes flag information indicating whether correction is necessary for the total number of vertices on the boundary edge of at least one of the first mesh or the second mesh.

10. The decoding device according to claim 8, wherein
the combination information includes method information indicating how to correct the total number of vertices on the boundary edge of at least one of the first mesh or the second mesh.

11. The decoding device according to claim 10, wherein
the method information includes information indicating addition of a vertex to the boundary edge of at least one of the first mesh or the second mesh.

12. The decoding device according to claim 10, wherein
the method information includes information indicating removal of at least one of one or more vertices on the boundary edge of at least one of the first mesh or the second mesh.

13. The decoding device according to claim 10, wherein
when the total number of vertices on the boundary edge is determined not to be equal between the first mesh and the second mesh in the determining, the total number of vertices on the boundary edge of the at least one of the first mesh or the second mesh is corrected based on the method information,
a triangle included in the at least one of the first mesh or the second mesh is corrected according to the total number of vertices corrected, and
the first mesh and the second mesh at least one of which includes the triangle corrected are combined.

14. An encoding method comprising:
determining whether a total number of vertices on a boundary edge is equal between a first mesh and a second mesh, the boundary edge being an edge shared between a first submesh in a three-dimensional mesh and a second submesh in the three-dimensional mesh, the first mesh being formed by iterating subdivision of the first submesh a first number of times, the second mesh being formed by iterating subdivision of the second submesh a second number of times; and
encoding, into a bitstream, combination information regarding a process of combining the first mesh and the second mesh, based on a determination result of the determining.

15. A decoding method comprising:
decoding, from a bitstream, combination information regarding a process of combining a first mesh and a second mesh; and
determining, based on the combination information, whether a total number of vertices on a boundary edge is equal between the first mesh and the second mesh, the boundary edge being an edge shared between a first submesh in a three-dimensional mesh and a second submesh in the three-dimensional mesh, the first mesh being formed by iterating subdivision of the first submesh a first number of times, the second mesh being formed by iterating subdivision of the second submesh a second number of times.
